**Europäisches Patentamt**

**European Patent Office**

**Office européen des brevets**

(19)

(11) Veröffentlichungsnummer: **0 192 227**
**A2**

(12) # EUROPÄISCHE PATENTANMELDUNG

(21) Anmeldenummer: 86102044.4

(22) Anmeldetag: 18.02.86

(51) Int. Cl.⁴: **G 05 D 23/19**
**F 24 D 19/10**

(30) Priorität: 18.02.85 DE 3505600
18.02.85 DE 3505601
18.02.85 DE 3505602
18.02.85 DE 3505603

(43) Veröffentlichungstag der Anmeldung:
27.08.86 Patentblatt 86/35

(84) Benannte Vertragsstaaten:
AT BE CH DE FR GB IT LI NL SE

(71) Anmelder: HAPPEL GmbH & Co.
Südstrasse
D-4690 Herne 2(DE)

(72) Erfinder: Kantner, Alexander, Dipl.-Phys. Dr. rer. nat.
Paul-Windgassen-Strasse 99
D-5630 Remscheid 11(DE)

(74) Vertreter: Patentanwaltsbüro Cohausz & Florack
Postfach 14 01 47
D-4000 Düsseldorf 1(DE)

(54) Verfahren und Vorrichtung zur Regelung der Temperatur in Räumen.

(57) Die Erfindung betrifft ein Verfahren zur Regelung der Temperatur in Räumen, die Heiz- oder Kühleinrichtungen mit Thermostatventilen aufweisen. Die Heiz- oder Kühleinrichtungen werden von einer zentralen Wärme- oder Kältequelle gespeist. Die Rauch- oder Abgastemperatur der Wärme- oder Kältequelle wird gemessen und hierfür ein Sollwert-Band angelegt, innerhalb dessen die zulässigen Werte der Rauch- oder Abgastemperatur liegen. Das gesamte Sollwert-Band mit Ober- und Untergrenze ist entsprechend den Anforderungen verschieblich, und in den Bereichen außerhalb des Sollwert-Bandes ist der jeweilige Ist-Wert zum Soll-Wert hin regelbar.

FIG. 1

EP 0 192 227 A2

Croydon Printing Company Ltd.

0192227

— 1 —                    45258EP
                         17.02.86

H A P P E L   GmbH & Co.

D – 4690 Herne 2

### Verfahren und Vorrichtung zur Regelung der Temperatur in Räumen

Die Erfindung betrifft gemäß einem ersten übergeordneten Erfindungsgedanken ein Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden, und ist gemäß einem zweiten überge-

0192227

ordneten Erfindungsgedanken auf eine Vorrichtung zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle speisbar sind, wobei diese mittel- oder unmittelbar so mit Betriebsenergie versorgt werden, daß ein Teil der zugeführten Betriebsenergie als Rauch- bzw. Abgas die Wärme- bzw. Kältequelle verläßt, gerichtet, die sich vorzugsweise zur Durchführung des Verfahrens nach dem ersten übergeordneten Erfindungsgedanken eignen soll.

Hierbei umfaßt der Begriff des Regelns (im späteren meist auch Temperieren genannt) sowohl das Heizen als auch das Kühlen von Räumen, welche ihrerseits Aufenthaltsräume für Menschen oder Tiere oder aber auch Lagerräume für empfindliche Güter oder Maschinen bzw. Apparaturen, wie beispielsweise Computer oder dergleichen, oder aber auch Räume sein können, in denen bestimmte Behandlungen an toter Materie oder aber auch an Lebewesen, wie beispielsweise Bakterien- oder Virenkulturen oder dergleichen, vorgenommen werden sollen, die in solchen Fällen üblicherweise als Zuchträume bezeichnet werden. Entsprechend werden solche Räume entweder durch mit einer Wärmequelle (im späteren meist auch Wärmeerzeuger genannt) verbundene Heizeinrichtung (im späteren meist auch Heizkörper genannt) oder aber durch mit einer Kältequelle (im späteren meist auch Kälteerzeuger) verbundene Kühleinrichtungen geregelt (bzw. im späteren meist auch Temperieren genannt), wobei diese Heizeinrichtungen (Heizkörper) oder Kühleinrichtungen jeweils mit Thermostatventilen (im späteren meist auch automatisch wirkende Drosseleinrichtungen genannt) ausgerüstet sind.

Bei zu beheizenden Aufenthaltsräumen für Menschen wird bislang die Temperatur in diesen durch Steuerung der Temperatur des Wärmeträgermediums im Heizungsvorlauf (Vorlauftemperatur) einerseits und durch Regelung der Raumtemperatur andererseits beeinflußt. Die Anpassung der Vorlauftemperatur des Heiznetzes an den Wärmebedarf eines zu beheizenden Raumes oder eines Hauses erfolgt durch eine sogenannte außentemperatur- oder witterungsgeführte Vorlauftemperatursteuerung, bei der in Abhängigkeit von der durch einen Außentemperaturfühler erfaßten Außentemperatur mit Hilfe einer als "Heizkurve" bezeichneten Heizkennlinie die entsprechende Vorlauftemperatur gewählt wird. Hierbei ist man bemüht, die Heizkennlinie in jedem Fall so zu legen, daß sämtliche automatischen Drosseleinrichtungen der an das Heiznetz angeschlossenen Heizkörper in ihrem Regelbereich arbeiten. Daraus ergeben sich aber erhebliche Abweichungen zwischen der Sollkennlinie und der vom Heizungsinstallateur eingestellten Kennlinie. Erfahrungsgemäß pflegt nämlich der Heizungsinstallateur, da einerseits die nichtlineare Abhängigkeit der Außentemperatur von der Vorlauftemperatur nur durch eine Schar von Heizkennlinien wiederzugeben ist, wobei ihm der individuelle Zusammenhang von Außentemperatur und Vorlauftemperatur nicht bekannt ist, und andererseits auch noch weitere heizungsanlagenspezifische und/oder durch die Eigenheiten des zu beheizenden Raumes bzw. Hauses als Gesamtheit einer Vielzahl von Räumen bedingte Einflußgrößen zu berücksichtigen sind, vorsorglich eine hohe Kennlinie zu wählen, um sicherzustellen, daß die Vorlauftemperatur ausreichend hoch ist, um auch unter extremen Betriebsbedingungen, die einerseits durch extreme Schwankungen der Außentemperatur und andererseits durch extreme Anforderungen an die Raumtemperatur und nicht zuletzt durch ihm im einzelnen nicht bekannte ungünstige Eigenschaften des die zu beheizenden Räume bildenden Gebäudes und/oder der Heizungsanlage insbesondere bezüglich Wärmeverlusten durch Wärmeableitung und/oder -abstrahlung einerseits und/oder Wärmeaufnahme durch beispielsweise Sonneneinstrahlung andererseits, und zwar dies möglicherweise auch noch gleichzeitig bezüglich unterschiedlich gelegener Räume, bedingt sein

- 4 -

0192227

können, die gewünschten Raumtemperaturen zu gewährleisten. Abgesehen davon, daß somit das Einschätzen der Art der benötigten Heizkennlinie dem Heizungsinstallateur überlassen bleibt und damit ungeachtet einer etwaigen Möglichkeit nachträglicher Korrekturnachstellung hinsichtlich seiner Güte allein von dessen individueller Erfahrung abhängt, ist erfahrungsgemäß auf diese Weise nicht einmal eine brauchbare Annäherung an eine den tatsächlichen individuellen Verhältnissen gerecht werdende Sollkennlinie erreichbar, vielmehr sind häufig sogar beträchtliche Fehler durch falsches Einschätzen der Steilheit der Kennlinienkurve und deren Nullpunktes die Folge. Ein weiterer Mangel ist die schlechte Einstellsystematik. Abgesehen davon, daß häufig eine Anpassung der Heizkennlinie an die Gegebenheiten im über die Heizungsanlage mit Wärmeenergie bedienten Verbraucherkreis gar nicht möglich ist, ist für die Einstellung der jeweiligen Heizkennlinie die Kenntnis der Verhaltensweise der gesamten Heizungsanlage in bezug auf die Abhängigkeit ihrer einzelnen Betriebsparameter von den relevanten äußeren Einflussgrößen über mindestens zwei Heizperioden, d. h. zwei bis drei Jahre unerläßlich. Hierdurch gestaltet sich die Optimierungsanpassung der Heizkennlinie schwierig und langwierig, und die nachteiligen Folgen hiervon sind unnötig hohe Stillstands- und Abstrahlungsverluste sowohl des Wärmeerzeugers, z. B. eines Heizkessels, als auch der Rohrleitungen des Heiznetzes. Nachteilig ist ferner, daß außentemperaturunabhängige Einflußgrößen, wie beispielsweise die Lüftungsgewohnheiten der Bewohner, die Sonneneinstrahlung durch Fensterflächen oder die Abwärme elektrischer Geräte, wie z. B. von Kühlschränken, Elektroherden oder Kopiergeräten oder dergleichen, bei bekannten witterungsgeführten Vorlauftemperatursteuerungen selbst bei verhältnismäßig präzise eingestellten Heizkennlinien systembedingt nicht berücksichtigt werden können.

Es ist ersichtlich, daß es sich bei solchen bekannten Vorlauftemperatursteuerungen bezüglich der Raumtemperatur um reine Steuerungen handelt, da eine Rückmeldung der Raumtemperatur fehlt.

Im Rahmen der individuellen Raumtemperaturregelung hat man daher zur individuellen Beeinflussung der Raumtemperatur in den einzelnen Räumen den Heizkörpern jeweils eine automatisch wirkende Drosseleinrichtung zugeordnet, die den in den jeweiligen Heizkörper eintretenden Massenstrom des Wärmeträgermediums in Abhängigkeit der Raum-Ist-Temperatur von einer Raum-Soll-Temperatur regelt. Diese selbsttätig wirkenden Drosseleinrichtungen können als Kombination eines Heizkörperventils mit auf dieses wirkendem Regelgerät mit Sollwertgeber, Temperaturfühler und Regler ausgebildet sein, es haben jedoch hierfür zusammenfassend als Heizkörperthermostat bezeichnete thermostatische Heizkörperventile weitverbreiteten Anklang gefunden, die meist als Dehnstoffregler oder aber als Dehnkörperregler mit einem als gekapselter und gasgefüllter Wellrohrkörper ausgebildeten Dehnkörper ausgeführt sind. Diese automatisch wirkenden Drosseleinrichtungen regeln zwar jeweils selbsttätig die Raumtemperatur, wobei der Massenstrom des den jeweiligen Heizkörper durchfließenden Wärmeträgermediums selbst eine Funktion der Regelabweichung, der Vorlauftemperatur, des in der gesamten Heizungsanlage herrschenden Drucks und nicht zuletzt auch spezieller Kenngrößen des Thermostatventils ist, sie sind jedoch proportional wirkende Regler und können die Raumtemperatur wegen der bleibenden Regelabweichung in der Größenordnung von in ungünstigen Fällen sogar bis zu 6 K nur ungenau auf den gewünschten Temperaturwert einregeln. Diese treten systembedingt dann auf, wenn die empirisch gewählte Heizkurve aufgrund ungünstiger Auslegung oder Wahl oder aufgrund von Fremdeinflüssen nicht dem tatsächlichen Angebot an Wärmeenergie entspricht. Dies führt nicht selten zu dem Bedürfnis, lüften zu müssen, das seinerseits wieder zu erfahrungsgemäß nicht unerheblichen Energieverlusten zu führen pflegt.

Bei mit Messung des Gesamtmassenstroms arbeitenden Heizungsanlagen hat man für den Sonderfall kontinuierlich dem Heizungsvorlauf zugeführten Wärmeträgermediums versucht, von der Führung über die Außentemperatur und der Auswahl einer anlagenspezifischen Heizkennlinie unabhängig zu werden. Hierfür hat man im Gegensatz zu älteren außentemperatur- bzw. witterungsgeführten Raumtemperatursteuerungen, bei denen die Vorlauftemperatur des Wärmeträgermediums gemessen und als Regelgröße dem Regler aufgeschaltet wurde, während die Führungsgröße entweder von Hand eingestellt oder in Abhängigkeit von der Außentemperatur geführt wurde, die Vorlauftemperatur zur Stellgröße für den Regler gemacht, während die Regelgröße der Gesamtmassenstrom im Verbraucherkreis der Heizungsanlage ist. Dabei wirkt das Stellsignal des Durchflußreglers entweder auf das Stellglied für die Energiezufuhr zum Wärmeerzeuger oder auf einen Mehr-Wege-Mischer, der in bekannter Weise den Anteil des vom Wärmeerzeuger kommenden hocherhitzten Wärmeträgermediums in dem vom Kesselkreislauf getrennten Verbraucherkreislauf so einstellt, daß eine vorgegebene Vorlauftemperatur aufrecht erhalten wird.

Hierbei handelt es sich zwar erstmalig bereits um eine echte Regelung der Raumtemperatur, da die sich im Zuge der durch Veränderung der Vorlauftemperatur des vom Wärmeerzeuger abgegebenen Wärmeträgermediums oder der Veränderung des Anteils desselben am im Verbraucherkreislauf zirkulierenden Wärmeträgermedium erfolgenden Veränderung der Energiezufuhr zum Verbraucherkreislauf einstellende Veränderung des Gesamtmassenstroms des Wärmeträgermediums als Rückmeldegröße benutzt wird, um die Abweichung des Gesamtmassenstroms von seinem vorgegebenen Sollwert (Regeldifferenz des Gesamtmassenstroms) zu eliminieren.

Diese bekannte Art der Regelung weist jedoch eine Zahl von gravierenden Nachteilen auf:

Sie ist auf Heizungsanlagen mit kontinuierlicher Zufuhr der Wärmeleistung zum im Heizungsvorlauf der Heizanlage befindlichen Wärmeträgermedium beschränkt, deren Verbreitung jedoch beschränkt ist. Für die weit verbreiteten Heizungsanlagen mit diskontinuierlich arbeitendem Wärmeerzeuger, der dann beispielsweise als Heizkessel mit im Ein-Aus-Betrieb arbeitendem öl- bzw. gasbefeuertem Brenner oder einer entsprechend betriebenen elektrischen Heizeinrichtung oder als diskontinuierlich betriebene Wärmepumpe ausgebildet sein kann, ist diese bekannte Regelung ungeeignet, da für Ein-Aus-Betrieb stets zwei Schaltpunkte, nämlich ein Einschalt- und ein Ausschaltpunkt, gegeben sein müssen, diese bekannte Art der Regelung jedoch nur eine Führungsgröße in Form des vorgegebenen Sollwertes des Gesamtmassenstroms zur Verfügung hat.

Weiterhin ist diese bekannte Regelung nicht dafür geeignet, stark unterschiedliche Wärmeanforderungen in einzelnen Räumen zu erfüllen, wie beispielsweise in einem bestimmten Raum über den bzw. die diesem zugeordneten Heizkörper eine besonders hohe Temperatur im Sinne eines Komfortbetriebes aufrechtzuerhalten, während andere Räume auf vergleichsweise sehr niedriger Temperatur zu halten sind. Zwar haben die automatischen Drosseleinrichtungen der den einzelnen Räumen zugeordneten Heizkörper jeweils eigene Sollwertgeber für die jeweilige Raumtemperatur, jedoch kann erfahrungsgemäß eine Regelung dieser bekannten Art nicht einen Heizbetrieb optimal fahren, bei dem in einem Raum oder einer Vielzahl von Räumen eine sehr hohe Temperatur und in einem anderen Raum oder einer Vielzahl solcher anderer Räume davon wesentlich unterschiedliche niedrigere Temperaturen aufrecht erhalten werden sollen, da bei dieser bekannten Regelung zwar eine Einstellbarkeit des Sollwertes, nicht aber eine werkseitige und schon gar nicht eine durch den Benutzer vorzunehmende Umschaltung auf verschiedene Betriebszustände vorgesehen ist. Das führt dazu, daß in einem solchen Falle von Auslegung für beispielsweise normaler Wärmeanforderung entsprechenden Betrieb, der stets eine Begrenzung der in einem beliebigen zu beheizenden Raum maximal erzielbaren bzw. aufrechterhaltbaren Raumtemperatur zur Folge hat, zwar in einem gewissen Rahmen, der durch die Stellspanne der einzelnen Sollwertgeber für die Raumtemperatur vorgegeben ist, die Raumtemperatur in den einzelnen Räumen unterschiedlich gehalten werden kann, jedoch es in einem solchen Falle nicht möglich ist, einen Raum oder mehrere Räume auf sehr hoher Temperatur zu halten (Komfortbetrieb für diesen Raum bzw. diese Räume), wie das beispielsweise im Wohnbereich für Zimmer mit kranken oder rekonvaleszenten Benutzern oder im industriellen Bereich für spezielle Zuchträume mit Brutfunktion der Fall sein kann. Wird hingegen diese bekannte Regelung für solchen Komfortbetrieb ausgelegt, so ergeben sich aufgrund der verhältnismäßig hohen Vorlauftemperatur des Wärmeträgermedium verhältnismäßig hohe Verluste des gesamten Heizungssystems durch Wärmeableitung und -abstrahlung. Eine Auslegung für ein als Sparbetrieb zu bezeichnendes Betriebsverhalten ist bei dieser bekannten Regelung nicht sinnvoll, da dadurch die in den einzelnen Räumen erzielbare Raumtemperatur noch weiter begrenzt wird. Eine im Interesse einer weitestgehenden Universalität der Anpassungsmöglichkeiten an anlagen- und/oder bauspezifische sowie klimazonen- und/oder ortslagenbedingte und besonders auch benutzerspezifische Parameter wünschenswerte Umschaltung von einer Betriebsart, die zwar höhere Wärmeverluste in Kauf nimmt, dabei aber in einem Raum oder mehreren oder allen Räumen die Aufrechterhaltung einer wesentlich höheren Temperatur ermöglicht, auf einen beispielsweise als Nachtabsenkungs- oder Frostschutzbetrieb zu bezeichnenden Betrieb, der in Zeiten geringen Wärmebedarfs in den betreffenden Räumen minimale Wärmeverluste garantiert, mit oder ohne eine oder mehrere zwischengeschaltete Betriebsstufe(n) ist bei dieser bekannten Regelung nicht möglich.

Nachteilig hinzu kommt weiterhin, daß ungeachtet des ausgelegten Betriebszustandes diese bekannte Art der Regelung trotz ihrer lediglich kontinuierlich möglichen Betriebsweise notwendigerweise eine verhältnismäßig große Zahl von Regeleingriffen zur Folge hat, um den Gesamtmassenstrom als Führungsgröße auf Konstanz zu regeln. Dies gilt insbesondere für aufgrund beispielsweise äußerer Einflüsse oder vom Benutzer veranlaßte schnelle Änderungen der Führungsgröße selbst und/oder der Regelabweichung von dieser. Je größer aber die Zahl von Regeleingriffen ist, desto mehr wird erfahrungsgemäß die gesamte Regelvorrichtung einschließlich besonders auch der Stellglieder der-

- 9 -

0192227

selben in Form der je nach Auslegung der Anlage mit Heizkessel oder Wärmepumpe oder Wärmetauscherstation als Wärmeerzeuger erforderlichen Brenner bzw. Kompressoren bzw. elektrischen Heizelemente bzw. Verdampferventile bzw. Überströmventile bzw. Absperr- oder Regelventile für die Zuführung des Primärenergieträgermediums verschleißmäßig belastet und dadurch die Lebensdauer dieser einzelnen Komponenten ungünstig beeinflußt, zumindest jedoch die Intervallzeit zwischen notwendigen Inspektionen bzw. Wartungen nicht unerheblich nachteilig verkürzt. Außerdem ist auch bei Regeleingriff in eine mit kontinuierlicher Einspeisung der Wärmeleistung in den Heizungsvorlauf arbeitende Heizungsanlage mit steigender Zahl solcher Regeleingriffe eine vermehrte Belastung der Umwelt mit Schadstoffimmissionen zu erwarten.

Soweit bei Kühlanlagen, die eine Vielzahl von Räumen auf unterschiedlichen Kühltemperaturen zu halten haben, wie das beispielsweise bei Kühlanlagen für Lagerhäuser oder Großmärkte oder dergleichen der Fall sein kann, der bzw. die Kompressor(en) des Kältemaschinenkreislaufs als Teil des Kälteerzeugers desselben nicht in üblicher Weise über Hochdruck- und/oder Niederdruckpressostaten betrieben werden, während die die einzelnen Kühlräume, beispielsweise einen Raum für die Frischhaltung von Obst und Gemüse, ferner einen Raum für Salate und Aufschnitt sowie ferner einen Raum für Fleisch oder Fisch und schließlich möglicherweise auch noch einen Raum für Tiefkühlkost, auf der jeweils erforderlichen Temperatur haltenden, für tiefere Raumtemperaturen meist mit einem oder mehreren Verdampfergebläse(n) ausgestatteten Kühleinrichtungen jeweils über einen eigenen Verdampfungsdruckregler auf Aufrechterhaltung konstanter vorbestimmter Raumtemperatur geregelt werden, gelten die vorstehend für eine Heizungsanlage gattungsgemäßer Art dargelegten Gesichtspunkte in noch schwerwiegenderem Maße für Kühlen. Dies hat seinen prinzipiellen Grund darin, daß Kälteerzeuger, wenn sie als gas- und/oder dieselmotorisch betriebene Kompressions- oder als Absorptionskältemaschinen ausgeführt sind, eine Leistzungszahl bzw.

ein Wärmeverhältnis von 0,4 bis 0,6 haben, während entsprechende Wärmeerzeuger eine Leistungszahl bzw. ein Wärmeverhältnis haben, die bzw. das prinzipiell um 1 größer ist. Das aber bedeutet, daß grundsätzlich eine Wärmepumpe immer einen besseren Wärmewirkungsgrad hat als eine Kältemaschine einen Kältewirkungsgrad, bei der die in Form von Kälteleistung abgegebene Leistung bezogen auf den Energieeinsatz immer kleiner ist. Entsprechend ist die Erzeugung von Kälteleistung grundsätzlich sehr viel kostspieliger als die von Wärmeleistung.

Anzustreben ist daher aus energetischer Sicht für Kühlbetrieb eine möglichst hohe Vorlauftemperatur des Wärmeträgermediums bei möglichst hohem Gesamtmassendurchsatz desselben, um die gewünschte niedrige Raumtemperatur zu erreichen oder zu erhalten. Führung der Vorlauftemperatur des in einer Kühlanlage befindlichen Wärmeträgermediums über die Außentemperatur ist somit genauso wenig optimal, wie eine Führung der Vorlauftemperatur des Wärmeträgermediums einer Heizungsanlage über die Außentemperatur, wie vorstehend erläutert. Wenn nämlich die Außentemperatur eine zu niedrige Vorlauftemperatur in der Kühlanlage vorschreibt, müßten die automatisch wirkenden Drosseleinrichtungen zu stark drosseln, so daß sich für den Kälteerzeuger ein zu hoher Betriebsenergie-Einsatz ergibt, und zwar dies ganz abgesehen davon, daß unterhalb gewisser Temperaturen des im Kühlbetrieb arbeitenden Wärmeträgermediums bei Raumkühlung eine Luftenfeuchtung zu zusätzlichem Energieaufwand und entsprechenden nicht unerheblichen Kosten führt, prinzipiell auch deshalb, weil die Leistungszahl bzw. das Wärmeverhältnis des Kälteerzeugers bei tiefen Wärmeträgermediums-Temperaturen (Kühlmitteltemperaturen) und hohen Außentemperaturen in gleicher Weise abfällt wie die Leistungszahl bzw. das Wärmeverhältnis einer Wärmepumpe einer Heizungsanlage bei tiefen Außentemperaturen und hoher Vorlauftemperatur. Es würde also ein gleiches Maß an Verschlechterung der Leistungszahl bzw. des Wärmeverhältnisses, das für eine Wärmepumpe allenfalls noch tolerierbar ist, für eine Kältemaschine zu untragbaren Verhältnissen führen. Sogar für einen mit Gas oder Öl oder elektrischer Energie betriebenen Kessel wäre ein schlechterer Wirkungsgrad aus Energie- und Kostensicht eher tolerierbar als für eine Kältemaschine.

Es ist ersichtlich, daß sich gerade aufgrund dieses prinzipiellen Unterschiedes des Kühlverfahrens gegenüber dem Beheizen von Räumen alle vorstehend für Heizen als nachteilig erläuterten Verhältnisse für Kühlen noch in jeder Hinsicht ungünstiger auswirken.

Einen Weg zur Vermeidung dieser beschriebenen bekannten Nachteile der witterungsgeführten Außentemperatursteuerung hat man in sogenannten Raumtemperaturkorrekturaufschaltungen gesehen. Bei diesen wird in einem Referenzraum ein Raumthermostat vorgesehen, der die allen herrschenden Einflüssen unterliegende Raum-Ist-Temperatur desselben mißt und dafür sorgt, daß dann, wenn in diesem Referenzraum die Raum-Soll-Temperatur erreicht oder überschritten wird, die Vorlauftemperatur durch Ausschalten des Kessels zurückgenommen wird, während andererseits ein Einschaltsignal für den Kessel von diesem Raumthermostaten her so lange bestehen bleibt, wie eine Differenz zwischen Raum-Ist-Temperatur und Raum-Soll-Temperatur dieses Referenzraumes gemessen wird.

Abgesehen von den durch das Erfordernis einer zusätzlichen Verkabelung zwischen Referenzraumthermostat und Kesselsteuerung (Vorlauftemperatur-Steuerung) bedingten Unannehmlichkeiten bezüglich Arbeitsaufwand und/oder benötigter Montagezeit und/oder Schmutzanfall und insbesondere auch aus allen angesprochenen anderen Gesichtspunkten nicht unbeträchtlichen Kosten ist eine solche Raumtemperaturkorrekturaufschaltung auch aus im eigenen System liegenden Gründen unbefriedigend. Einerseits nämlich ist bereits das Maß der jeweiligen Änderung der Vorlauftemperatur in Abhängigkeit von der Abweichung der Referenzraum-Ist-Temperatur von der Referenzraum-Soll-Temperatur nicht anders als nur empirisch zu wählen, unterliegt also grundsätzlich der Möglichkeit nicht unbeträchtlicher Fehler bereits in der Wahl der Abhängigkeit der Vorlauftemperatur von der genannten Referenzraum-Temperatur-Abweichung, und zum anderen steht man vor der praktisch kaum lösbaren Schwierigkeit der Auswahl des Referenzraums selbst. Wird nämlich, was aus Gründen der Sicherstellung ausreichenden Wärmeenergienachschubs zu allen anderen Räumen zu empfehlen wäre, als Referenzraum ein im allgemeinen verhältnismäßig kühler Raum bzw. ein Raum mit vergleichsweise hohem Wärmeverlust gewählt, so wird einerseits die Vorlauftemperatur für den Einzelbedarf der anderen - insbesondere aus Gründen der beschriebenen Fremdeinflüsse wärmeren - Räume zu hoch gewählt und lassen sich praktisch in jenen Räumen die dort auftretenden Fremdeinflüsse nicht nutzen, um die Vorlauftemperatur abzusenken. Wird hingegen als Referenzraum ein verhältnismäßig warmer Raum bzw. ein Raum mit verhältnismäßig geringem Wärmeverlust gewählt, so ist es nicht auszuschließen, daß insbesondere aufgrund von Fremdeinflüssen der beschriebenen Art, möglicherweise aber auch außentemperatur- bzw. witterungsbedingten Einflüssen, wie beispielsweise eines Kälteeinbruchs, die anderen Räume unterversorgt werden. Ein solcher Zustand ist natürlich höchst unerwünscht und ermöglicht im übrigen gleichfalls nicht die individuelle Berücksichtigung der genannten außentemperatur- bzw. witterungsunabhängigen Fremdeinflüsse. In beiden Fällen ist die notwendige Folge eine systembedingt nicht vermeidbare Wärmeenergievergeudung.

Diese Probleme einer sich somit allenfalls für Beheizung grundsätzlich relativ gleichmäßig warmer Räume oder einer extrem geringen Zahl unterschiedlich warmer Räume eignenden Raumtemperaturkorrekturaufschaltung bekannter Art werden noch gravierender, wenn es gilt, das Heizungsverhalten für eine Vielzahl von Raumgesamtheiten, wie beispielsweise der jeweils mehrere Räume unterschiedlicher Temperaturanforderungen aufweisenden Wohnungen eines Mehrfamilienhauses, in dem angesprochenen Sinne zu optimieren. Hier nämlich stellt sich zusätzlich das Problem, welche der Wohnungen einen Referenzraum erhalten soll oder, wenn jede einen Referenzraum für sich erhalten sollte, welcher der einzelnen Referenzräume hinsichtlich seiner Raum-Soll-Ist-Temperatur-Abweichung Vorrang haben soll. Abgesehen davon, daß eine solche Korrekturaufschaltung eine höchst aufwendige und kostenintensive Vorranglogik benötigen würde, könnte sie die in sie zu setzenden Erwartungen praktisch kaum erfüllen, weil dies zur Voraussetzung hätte, daß bereits vorab eine Einigung über das zulässige Maß der Referenzraum-Soll-Ist-Temperatur-Abweichung getroffen wurde. Ist dies nämlich nicht der Fall, so muß aus den gleichen Gründen, wie vorstehend für den Fall einer einzigen Wohnung mit mehreren Räumen erläutert, eine Vorabentscheidung darüber getroffen werden, ob der auf die geringste oder der auf die größte Soll-Ist-Temperatur-Abweichung eingestellte Referenzraum die Führungsfunktion für die Veränderung der Vorlauftemperatur übernehmen soll. Unter diesen Umständen aber wird es für die überwiegende Art und Zahl von Einsatzfällen eher zu empfehlen sein, auf eine solche Raumtemperaturkorrekturaufschaltung überhaupt zu verzichten.

Angesichts dieser vielfältigen Schwierigkeiten hat man bereits auf unterschiedliche Weise versucht, eine echte Regelung der Wärmeenergie-Zufuhr in Abhängigkeit vom Bedarf zu verwirklichen. Hierfür hat man versucht, aus einzelnen für das Betriebsverhalten des Heizungsvorganges bestimmenden Größen, wie beispielsweise der Rücklauftemperatur zusätzlich zur schon immer als Steuerungsgröße benutzten Vorlauftemperatur und/oder der Differenz von Vorlauf- und Rücklauftemperatur gegebenenfalls unter weiterer Berücksichtigung in ihrer Größe und Einflußsystematik willkürlich angenommener Einflußgrößen, wie der einen oder anderen der vorstehend genannten außentemperatur- bzw. witterungsunabhängigen Fremdeinflußgrößen, Gesetzmäßigkeiten zu abstrahieren, von denen zu erwarten ist, daß sie mit möglichst guter Genauigkeit die sich bei natürlichem Verhalten der Heizungsanlage einstellenden Verhältnisse weitestgehend annähern.

Zu diesem Zwecke wurde für den speziellen Sonderfall einer mit einem Heizkessel mit im Ein-Aus-Betrieb arbeitendem Brenner und dem Kessel nachgeschaltetem Mischer betriebenen Heizungsanlage versucht, durch vereinfachende Annahmen einen mathematischen Algorithmus aufzustellen, der für die Behandlung in einem Mikrocomputer so geeignet ist, daß mittels dessen die Mischerstellung geregelt werden kann, wobei dieser Algorithmus mit lediglich Temperaturwerten auskommt, die einfach im Betrieb zu messen sind. Dieser Algorithmus soll, um eine Möglichkeit zu schaffen, in Abhängigkeit von der Differenz von Vorlauf- und Rücklauftemperatur Einfluß auf die Mischerstellung und damit die in das Heizungssystem eingespeiste Wärmeleistung nehmen zu können, dem Produkt aus einer Konstanten, der Differenz von Vorlauf- und Raum-Ist-Temperatur sowie der Differenz von Raum-Soll-Temperatur und Raum-Ist-Temperatur entsprechen. Abgesehen davon, daß ein solcher Algorithmus Gültigkeit allenfalls in einem sehr begrenzten Bereich haben kann, ist die Abweichung des Raumtemperaturwertes von dem am Thermostatventil des Raumheizkörpers eingestellten Raumtemperatur-Sollwert ihrerseits eine ebenfalls variable Größe, so daß es nicht möglich ist, die Regelung der Mischerstellung und damit der Vorlauftemperatur mit Hilfe der Differenz von Vorlauf- und Rücklauftemperatur vorzunehmen. Daher sieht dieser bekannte Vorschlag vor, eine nach der Differenz von Vorlauf- und Raum-Ist-Temperatur normierte Temperaturdifferenz einzuführen, die dann nur noch dem Produkt aus der genannten Konstanten und der Differenz der Raum-Soll-Temperatur und der Raum-Ist-Temperatur, also der Abweichung der gemessenen Raumtemperatur von der Solltemperatur, entspricht. Daraus ergibt sich - naturgemäß immer nur unter Hinnahme der zugrundeliegenden vereinfachenden Annahmen und in dem resultierenden engen Geltungsbereich - eine eine Proportionalität zwischen der Vorlauftemperatur und der Rücklauftemperatur wiedergebende geradlinige Verknüpfung dieser beiden Temperaturen. Damit will dieser bekannte Vorschlag die Vorlauftemperatur und damit die Menge der zugeführten Wärmeenergie bzw. die Wärmeleistung steuern.

Abgesehen davon, daß die diese Beziehung bestimmenden Konstanten frei zu wählen sind, ohne daß es hierfür logische Bezugspunkte gäbe, wodurch auch die diesen Steueralgorithmus bestimmende Kurvensteilheit ohne jeden Anspruch auf auch nur annähernde Übereinstimmung mit den in der Wirklichkeit des Betriebes einer Heizungsanlage auftretenden Verhältnissen willkürlich gewählt werden muß, kann eine über diesen Algorithmus gesteuerte Heizungsanlage weder anfahren noch in einem Betriebszustand, in dem die zugeführte Wärmeenergie ungefähr dem von der Anlage geforderten Verbrauch entspricht, ausreichend stabil arbeiten. Bereits aus prinzipieller Sicht muß es bei einer solchen Betriebsweise zu Mitkopplungen und damit Regelschwingungen kommen, die nach diesem bekannten Vorschlag durch nicht beschriebene, angeblich geeignete Maßnahmen im Programm des Mikrocomputers unterbunden werden sollen. Selbst wenn dies möglich sein sollte, könnte dies allenfalls für wiederum sehr eng begrenzte Regelbereiche gelten und würde dies mit sich bringen, daß das gesamte Steuerungsverhalten noch weiter von dem je nach Heizungsanlage, Klimazone, Ortslage, Bauphysik und Nutzergewohnheiten unterschiedlichen e-Funktionen folgenden wirklichen Verhalten einer solchen Heizungsanlage abweicht.

Eine andere bekannte, als Regelung bezeichnete Verfahrensweise versucht diesen Nachteilen dadurch zu begegnen, daß bei einer Heizungsanlage, die über einen Kessel oder eine Wärmepumpe mit Wärmeenergie versorgt wird, die Vorlauftemperatur so geändert wird, daß die Differenz zwischen Vorlauf- und Rücklauftemperatur auf einem vorgegebenen Sollwert gehalten wird, wobei dieser Sollwert wiederum als Funktion der Rücklauftemperatur vorgegeben ist und mit steigender Rücklauftemperatur konstant bleiben oder bevorzugt linear zunehmen kann. Die Veränderung der sich im Betrieb einstellenden Differenz von Vorlauf- und Rücklauftemperatur erfolgt dabei über eine Veränderung der Vorlauftemperatur, während die Rücklauftemperatur die Funktion der Führungsgröße übernimmt. Zur entsprechenden Nachführung der Vorlauftemperatur wird bei einer Ausführung dieser bekannten Heizungsanlage mit einem im Ein-Aus-Betrieb arbeitenden Kessel und

0192227

diesem nachgeschaltetem Drei-Wege-Mischer die Mischerstellung verändert und bei einer anderen Ausführungsform dieser bekannten Heizungsanlage mit gleichfalls diskontinuierlich arbeitendem Kessel ohne nachgeschalteten Mehrwege-Mischer die Zufuhr von Betriebsenergie zum Brenner des Kessels getaktet unterbrochen bzw. wieder aufgenommen. Zur Vermeidung der Anfahrschwierigkeiten der erstbeschriebenen bekannten Heizungsanlage wird unterhalb einer vorgegebenen Rücklauftemperatur, also in einem vorgegebenen Anfahrbereich, mit konstantem Sollwert der Vorlauftemperatur gefahren. Hierfür ist es erforderlich, in der Vorlaufleitung ein von der Differenz von Vorlauf- und Rücklauftemperatur abhängiges Mengenbegrenzungsventil einzuschalten und stromabwärts von diesem Vorlauf- und Rücklaufleitung mit einer Rückmischleitung zu verbinden, in der eine konstante Strömungsdrossel angeordnet ist. Andererseits ist es auch möglich, unterhalb eines vorgegebenen Wertes der Rücklauftemperatur die Differenz zwischen Vorlauf- und Rücklauftemperatur nicht etwa linear zu verkleinern, was - wie vorstehend beschrieben - durch Konstanthaltung der Vorlauftemperatur erfolgt, sondern diesen durch die Differenz von Vorlauf- und Rücklauftemperatur gegebenen Sollwert selbst konstant zu halten. In allen Fällen erfolgt dann für oberhalb des die Beendigung des Aufheizvorganges markierenden Grenzwertes der Rücklauftemperatur liegende Werte derselben eine ansteigende Nachführung des durch die Differenz von Vorlauf- und Rücklauftemperatur gegebenen Sollwertes.

Ersichtlich umgeht diese bekannte Lösung somit das Unvermögen des vorher beschriebenen bekannten Vorschlages, die Heizungsanlage anfahren zu können, und zwar dies dadurch, daß hier bewußt auf eine regelungs- bzw. steuerungstechnische Beeinflussung der Anlage für die Dauer des Anfahrvorganges verzichtet wird, vielmehr für diesen ein willkürlich gewähltes Verhalten vorgegeben wird. Für den Zustand angefahrenen Betriebes der Heizungsanlage weist diese bekannte Lösung jedoch im wesentlichen die gleichen nachteiligen Eigenschaften auf wie der vorher beschriebene bekannte Vorschlag. Auch hier nämlich wird eine lineare Abhängigkeit der Sollgröße von der Rückmeldegröße, nämlich hier der Rücklauftemperatur, willkürlich erzwungen und deren funktionsbestimmende Konstanten, nämlich Sockelbetrag und Steilheit, gleichfalls willkürlich und ohne jede erkennbare logische Bezugnahme auf natürliche Betriebswerte oder Eigenschaften der Heizungsanlage vorgegeben. Die notwendige Folge hiervor ist auch hier ein unerwünschtes Mitkopplungsverhalten mit kaum zu beherrschenden nervösen Schwingungsreaktionen, und zwar dies aus Gründen der Konzeption dieser bekannten Lösung über deren gesamtem Betriebsbereich der Rücklauftemperatur. Die dieser bekannten Konzeption zugrundeliegende Annahme, daß mit steigender Rücklauftemperatur auch stets die Differenz zwischen Vorlauf- und Rücklauftemperatur zunehmen müßte und umgekehrt oder aber auch konstant bleiben könnte, ist allenfalls für stationäre Betrachtung gültig, im tatsächlichen Betriebsverhalten einer Heizungsanlage, das stets dynamisch ist, ist es jedoch der Regelfall, daß diese angenommene Beziehung nicht stimmt, also durchaus bei höheren Rücklauftemperaturen vergleichsweise niedrigere Temperaturdifferenzen zwischen Vorlauf und Rücklauf auftreten können und umgekehrt bei verhältnismäßig tiefen Rücklauftemperaturen sogar sehr hohe Differenzen zwischen Vorlauf- und Rücklauftemperatur zu verzeichnen sein können. Und gerade dies führt zu jenen unerwünschten Mitkopplungen im Betriebsverhalten. Und weiterhin ist ersichtlich diese bekannte Lösung nicht universell einsetzbar. Beispielsweise für Wärmepumpen oder aber für im Ein-Aus-Betrieb arbeitende Kessel mit keiner oder nur geringer Vorlage an Wärmeträgermedium und entsprechend geringer Wärmespeicherkapazität ist diese bekannte Lösung unbrauchbar. Die Ausführungsform dieser bekannten Lösung mit Beeinflussung der Zufuhr der Betriebsenergie zum diskontinuierlich arbeitenden Brenner, die ohne Mehrwege-Mischer auskommen soll, ist grundsätzlich auf eine gewisse Mindest-Wärmespeicherkapazität angewiesen und kann auch bei deren Vorhandensein nur höchst unbefriedigend arbeiten. Wird nämlich beispielsweise aufgrund eines erhöhten Wärmebedarfs die Vielzahl der Heizkörper für Durchströmen einer größeren Menge an Wärmeträgermedium geöffnet, so resultiert hieraus eine steigende Rücklauftemperatur und damit ein geringer werdender Meßwert der Temperaturdifferenz zwischen Vorlauf und Rücklauf. Nach der Konzeption dieser bekannten Lösung bedeutet dies eine Anforderung von mehr Wärmeenergie vom Kessel her. Dieser jedoch muß auf seinen Speicher arbeiten und kann die erforderliche Wärmeenergie (Wärmeleistung) erst abgeben, wenn sein Speicher ausreichend aufgeladen ist. Nicht selten aber ist zu verzeichnen, daß die Parameter des Heizungssystems sich während dieser Aufladezeit so verändert haben, daß nunmehr der frühere Bedarf nicht mehr benötigt bzw. der Speicher jetzt seine aufgeladene Wärmeenergie nicht mehr los wird. Dies führt außer zu einem ungünstigen Regelverhalten zu nicht unbeträchtlichen Energieverlusten mit entsprechender Unwirtschaftlichkeit des Betriebes einer solchen bekannten Heizungsanlage.

Weiterhin ist für ein Heizungssystem bekannter mit Bestimmung der Differenz von Vorlauf- und Rücklauftemperatur des Wärmeträgermediums arbeitender Art mit einem Kessel als Wärmeerzeuger mit einem im Ein-Aus-Betrieb arbeitenden Brenner mit über einen Mikrorechner gesteuerter Zufuhr seiner Betriebsenergie, bei der zudem auch noch die Vorlaufleitung und die Rücklaufleitung über eine mit einem eingebauten Überströmventil als Begrenzer für den im Vorlauf fließenden Massenstrom versehene Überströmleitung in Verbindung stehen, vorgeschlagen worden, über einen verhältnismäßig komplizierten Rechenalgorithmus, der demgemäß auch eine einigermaßen aufwendige Implementierung im Mikrorechner bedingt, aus der Differenz von Vorlauf- und Rücklauftemperatur des Wärmeträgermediums, die im übrigen wahlweise noch mit einem Verstärkungsfaktor multipliziert werden kann, um eine Tages- und eine Nachtsteuerung realisieren zu können, durch Addition eines die durch den Kessel bedingte minimale Vorlauftemperatur repräsentierenden Wertes einen Sollwert für die Vorlauftemperatur zu bilden und diesen mit dem gemessenen Istwert desselben zu vergleichen und bei Feststellung einer Abweichung beider den Istwert durch Ein- und Ausschalten des Brenners nachzuregeln, wobei davon ausgegangen wird, daß der die Nachtsteuerung des Brenners gegenüber dessen Tagessteuerung bestimmende Verstärkungsfaktor, mit dem die Differenz von Vorlauf- und Rücklauftemperatur multipliziert wird, eine gebäudespezifische Stellgröße ist. Obgleich sich auch bei dieser bekannten Lösung eine lineare Abhängigkeit der Vorlauftemperatur von der Rücklauftemperatur ebenso wie der Differenz von Vorlauf- und Rücklauftemperatur von der Rücklauftemperatur mit allen bereits im Zusammenhang mit den anderen bekannten Lösungen beschriebenen nachteiligen Folgen ergibt, ist die Wirkung dieser bekannten Lösung eine andere als bei der letztbeschriebenen. Hier nämlich erzwingt das zwischen Vorlauf- und Rücklaufleitung eingeschaltete Überströmventil einen praktisch konstanten Massenstrom im Heizkörperkreislauf, indem immer dann, wenn mindestens eines der thermostatischen Heizkörperventile aufgrund einer Änderung des Wärmebedarfs im jeweils zugeordneten Raum drosselt, ein der damit erzwungenen Verringerung des Massenstroms des Wärmeträgermediums entsprechender Anteil zwangsweise über das Überströmventil unmittelbar in den zum Rücklauf gehörigen Kesseleinlauf zurückgespeist wird. Dies aber bedeutet hier, daß in solchen Fällen zu großen Wärmeangebotes an die Heizkörper die Rücklauftemperatur nicht etwa fallen würde, wie bei der vorher beschriebenen bekannten Lösung, sondern hier aufgrund der Zuspeisung von Vorlaufanteil über das Überströmventil steigt. Die Folge davon ist, daß hier die Vorlauftemperatur für steigende Rücklauftemperatur und nicht für fallende Rücklauftemperatur zurückgenommen werden muß. Zwar versucht diese bekannte Lösung somit von den sich daraus, daß der Massenstrom im Heizkörperkreis praktisch nicht zu beherrschen ist, bei den vorher beschriebenen bekannten Lösungen ergebenden nachteiligen Folgen dadurch loszukommen, daß zwangsweise dieser Massenstrom konstant gehalten wird, jedoch erkauft diese bekannte Lösung dies durch eine gefährliche Rekursion ihres zugrundeliegenden Rechenalgorithmus. Dieser nämlich sieht vor, daß aus den Meßwerten von Vorlauftemperatur und Rücklauftemperatur ein Sollwert für die Vorlauftemperatur gebildet und anschließend mit diesem Sollwert der sich tatsächlich einstellende Istwert der Vorlauftemperatur verglichen wird. Liegt eine Abweichung vor, so ist der Istwert der Vorlauftemperatur an deren Sollwert durch Ein- und Ausschalten des Brenners anzugleichen. Dadurch aber generiert sich aus dem zugrundeliegenden Algorithmus notwendigerweise ein neuer Sollwert für die Vorlauftemperatur. Mit anderen Worten heißt dies, daß jede Regeländerung automatisch einen neuen Sollwert der Vorlauftemperatur nach sich zieht. Dies aber führt notwendigerweise zu Instabilitäten der gesamten Regelung. Diesem systemimmanenten Nachteil kann auch nicht der weitere Vorschlag dieser bekannten Lösung Abhilfe schaffen, die Differenzbildung aus Vorlauf- und Rücklauftemperatur in der Umlaufzeit des Wärmeträgermediums entsprechenden periodischen Zeitabständen und nicht sogleich vorzunehmen. Diese bekannte Lösung erreicht somit trotz ihres durch das Überströmventil und dessen Montage bedingten Mehraufwandes weder das ihr gesetzte Ziel noch einen brauchbaren Vorteil gegenüber den anderen bekannten Lösungen.

Allen diesen bekannten mit Bestimmung der Differenz von Vorlauf- und Rücklauftemperatur des Wärmeträgermediums arbeitenden Lösungen ist weiterhin gemeinsam, daß sie im Prinzip keine echten Regelungen darstellen, denn sie benutzen zur Bildung ihrer jeweiligen Sollwerte stets die Rückmeldegröße, indem entsprechend dem jeweiligen zur Verwendung kommenden Rechenalgorithmus diese Rückmeldegröße für die Bildung des Sollwertes bestimmend wird. Das aber bedeutet nichts anderes, als daß der Sollwert stets abhängig ist von der Rückmeldegröße und damit seine Generierung eine Funktion des Istzustandes des Heizungssystems wird, mit anderen Worten also der Sollwert stets in dem Sinne nachgezogen wird, daß er dem jeweiligen Istwert nachläuft. Eine Regelung aber ist dadurch bestimmt, daß für sie definiert ist, was Istwert und was Sollwert ist, mithin der Sollwert stets vom Istwert unterscheidbar und unabhängig zu sein hat, weil sich nur auf diese Weise eine Abweichung des Istwertes vom Sollwert auf Eliminierung derselben regeln läßt.

In diesem Sinne aber stellen diese bekannten Lösungen nicht Regelungen, sondern Steuerungen dar, wobei sie als Rückmeldegrößen keine wie auch immer gearteten unabhängigen Informationen des Heizungssystems benutzen, sondern Größen, die eigentlich keine echten Informationen über den Wärmebedarf des zu beheizenden Gebäudes zu tragen geeignet sind, denen jedoch pseudo-empirische Zusammenhänge aufgepfropft werden, die ihrerseits zudem auch noch - wie vorstehend bereits dargelegt - allenfalls Annäherungen an das tatsächliche
Funktionsverhalten der miteinander gemäß der jeweiligen angenommenen
algorithmischen Verknüpfung mit allen entsprechenden durch Näherungsannahmen bedingten Fehlern sind. Diese somit nur Steuerungen
darstellenden bekannten Lösungen erweisen sich somit in mancherlei
Hinsicht den bekannten außentemperatur- bzw. witterungsgeführten
Steuerungen sogar noch unterlegen. Letztere arbeiten zwar bekanntlich nicht gerade besonders wirtschaftlich, sie unterliegen jedoch
nicht - wie die beschriebenen bekannten Lösungen ohne Führung über
die Außentemperatur - dem gefürchteten und praktisch nicht zu vermeidenden Mitkopplungsverhalten, das die erforderliche Stabilität
einer Regelung ausschließt. Wenn nämlich beispielsweise aufgrund zusätzlicher Wärmelieferung durch einen oder mehrere der beschriebenen
außentemperatur- bzw. witterungsunabhängigen Fremdeinflüsse bei den
bekannten Lösungen ohne Außentemperaturführung der Istwert der
Führungsgröße, wie beispielsweise der Vorlauftemperatur oder der
Differenz von Vorlauf- und Rücklauftemperatur, steigt, so wird automatisch auch der Sollwert für die betreffende Größe angehoben, was
aufgrund der zugrundegelegten Funktionsverknüpfung von Sollwert und
Rückmeldegröße wiederum zu einer solchen Veränderung der Rückmeldegröße führt, die ihrerseits eine weitere Veränderung des Sollwertes
in der gleichen Richtung veranlaßt. Dies aber wäre ein Mitkopplungsverhalten gegen unendlich, das ein Ausbrechen der Regelung zur Folge
hätte. Im umgekehrten Falle, beispielsweise eines zusätzlichen
Wärmebedarfs etwa durch plötzlich geöffnete Fenster oder aber eines
starken Kälteeinbruchs oder dergleichen, würde die Rückmeldegröße
eine Verringerung der Wärmezufuhr fordern und aufgrund ihrer funktionalen Verknüpfung mit dem Sollwert diesen senken, um als Folge
hiervon ihrerseits sich zu verringern und dadurch eine Nachführung
des Sollwertes in Abhängigkeit von ihrer eigenen Änderung und im
gleichen Sinne wie dieselbe zu erzwingen. Die Folge hiervor wäre,
daß bei diesen bekannten Lösungen ohne Außentemperaturführung das
gesamte Heizsystem unvermeidbar in einen Betriebszustand mit ständig ausgeschaltetem Wärmeerzeuger fährt und keine Möglichkeit mehr hat, selbst eine Wiederaufnahme oder Erhöhung der Wärmezufuhr zu sich selbst zu veranlassen.

Und schließlich ist allen diesen bekannten Lösungen auch noch gemeinsam, daß sie jeweils nicht für alle Arten von Heizungsanlagen, wie gleichzeitig für solche mit kontinuierlich befeuertem Wärmeerzeuger oder diskontinuierlich befeuertem bzw. betriebenem Wärmeerzeuger mit oder ohne Speicher und/oder mit oder ohne nachgeschaltetem Mehrwege-Mischer, und schon gar nicht für Kühlanlagen geeignet sind.

Der Vollständigkeit halber sei auch noch erwähnt, daß diese bekannten Lösungen zwar jeweils eine Möglichkeit angeben, von einem Tagesbetrieb auf einen Nachtbetrieb umzuschalten, sie sind jedoch sämtlich nicht dafür geeignet, stark unterschiedliche Wärmeanforderungen in einzelnen Räumen zu erfüllen, wie beispielsweise in einem bestimmten Raum über den bzw. die diesem zugeordneten Heizkörper eine besonders hohe Temperatur im Sinne eines Komfortbetriebes aufrechtzuerhalten, während andere Räume auf vergleichsweise sehr niedriger Temperatur zu halten sind. Zwar haben die automatischen Drosseleinrichtungen der den einzelnen Räumen zugeordneten Heizkörper jeweils eigene Sollwertgeber für die jeweilige Raumtemperatur, jedoch können erfahrungsgemäß Heizungsanlagen gemäß diesen bekannten Lösungen nicht einen Heizbetrieb optimal fahren, bei dem in einem Raum oder einer Vielzahl von Räumen eine sehr hohe Temperatur und in einem anderen Raum oder einer Vielzahl solcher anderer Räume davon wesentlich unterschiedliche niedrigere Temperaturen aufrecht erhalten werden sollen, da bei diesen bekannten Steuerungen, auch wenn sie als Regelungen bezeichnet werden, das gesamte System nur für einen Betriebszustand ausgelegt werden kann. In einem solchen Falle von Auslegung für beispielsweise einen normaler Wärmeanforderung entsprechenden Betrieb, der stets eine Begrenzung der in einem beliebigen zu beheizenden Raum maximal erzielbaren bzw. aufrechterhaltbaren Raumtemperatur zur Folge hat, kann zwar in einem gewissen Rahmen, der durch die Stellspanne der einzelnen Sollwertgeber für die Raumtemperatur vorgegeben ist, die Raumtemperatur in den einzelnen Räumen unterschiedlich gehalten werden, jedoch ist es in solchen Fällen nicht möglich, einen Raum oder mehrere Räume auf sehr hoher Temperatur zu halten (Komfortbetrieb für diesen Raum bzw. diese Räume), wie das beispielsweise im Wohnbereich für Zimmer mit kranken oder rekonvaleszenten Benutzern oder im industriellen Bereich für spezielle Zuchträume mit Brutfunktion der Fall sein kann. Eine Auslegung für solchen Komfortbetrieb ist bei diesen bekannten Lösungen vom Prinzip her nicht möglich. Dadurch aber ist auch jede Möglichkeit für eine im Interesse einer weitestgehenden Universalität der Anpassungsmöglichkeiten an anlagen- und/oder bauspezifische sowie klimazonen- und/oder ortslagenbedingte und besonders auch benutzerspezifische Parameter an sich wünschenswerte Umschaltung von einer Betriebsart, die zwar höhere Wärmeverluste in Kauf nimmt, dabei aber in einem Raum oder mehreren oder allen Räumen die Aufrechterhaltung einer wesentlich höheren Temperatur ermöglicht, auf einen beispielsweise als Nachtabsenkungs- oder Frostschutzbetrieb zu bezeichnenden Betrieb, der in Zeiten geringen Wärmebedarfs in den betreffenden Räumen minimale Wärmeverluste garantiert, mit oder ohne eine oder mehrere zwischengeschaltete Betriebsstufe(n) bei diesen bekannten Lösungen ausgeschlossen.

Der Erfindung liegt somit die Aufgabe zugrunde, mit einfachen und kostengünstigen Mitteln unter Vermeidung der Nachteile der für Heizen bekannten Lösungen eine bedarfsweise sowohl für Heizen als auch für Kühlen unabhängig von der Art des mit fossilem Brennstoff betriebenen Wärme- bzw. Kälteerzeugers mit kontinuierlichem oder diskontinuierlichem Betrieb und unabhängig davon, ob die Wärme- bzw. Kälteleistung dem im Heizungs- bzw. Kühlmittelvorlauf befindlichen Wärmeträgermedium kontinuierlich oder diskontinuierlich zugeführt wird, gleichermaßen einsetzbare Möglichkeit zu schaffen, die Raumtemperaturen einer Vielzahl von zu beheizenden bzw. zu kühlenden Räumen individuell jeweils auf einem gewünschten Wert zu halten, und zwar dies in dem Sinne optimal, daß Vorteile nicht nur hinsichtlich der Universalität der Einsetzbarkeit für Einrohr- oder Zweirohrheizungen bzw. -kühlungen mit oder ohne kontinuierlich oder diskontinuierlich arbeitendem Mehrwege-Mischer, sondern auch ökonomischer Art in bezug auf insbesondere Vereinfachung von Produktion, Lagerhaltung, Distribution, niedrigen Gestehungspreis, Vereinfachung der Montage, Erweiterung des technischen Einsatzfeldes und Nachrüstbarkeit und schließlich auch technischer Art erzielbar sind, indem bereits bei der Ersterstellung einer Heizungs- oder Kühlanlage nach der Erfindung Planung und Einsatz der Regeleinrichtung derart möglich sein soll, daß erstmalig schon in diesem Stadium auf eine etwa beabsichtigte Erweiterung oder aus irgendwelchen Gründen vorgesehene zukünftige Umrüstungen, wie beispielsweise nachträglichen Einbau einer Wärmepumpe oder Kältemaschine zusätzlich zu einem ursprünglich vorgesehenen Wärme- bzw. Kälteerzeuger anderer Art, Rücksicht genommen werden kann, oder aber die Nachrüstung einer Klimaanlage zusätzlich zu einer vorhandenen Heizungsanlage oder umgekehrt einer Heizungsanlage zusätzlich zu einer vorhandenen Kühlanlage oder aber auch die Nutzung einer für Winterbetrieb vorhandenen Heizungsanlage als im Sommerbetrieb arbeitende Kühlanlage ermöglicht wird, wobei in allen Fällen mit erheblichen arbeits- und schmutzmäßigen Belastungen verbundene Umrüstungsarbeiten bezüglich Kabelverlegungen etc. weitestgehend vermeidbar sein sollen. Dabei soll gleichzeitig die Möglichkeit gegeben sein, jederzeit wunschgemäß von einer Betriebsart, die die Aufrechterhaltung einer bei Heizung sehr hohen bzw. bei Kühlung sehr tiefen Temperatur in einem Raum oder mehreren oder allen an das Heizungs- bzw. Kühlungssystem angeschlossenen Räumen gewährleistet, mit oder ohne Zwischenschaltung eines Betriebszustandes oder mehrerer Betriebszustände mit bei Heizung geringerer bzw. bei Kühlung höherer erreichbarer Raumtemperatur, jedoch auch geringeren Wärmeverlusten durch Wärme- bzw. Kälteableitung und/oder -abstrahlung auf eine Betriebsart umschalten zu können, bei der aufgrund bei Heizung sehr niedriger bzw. bei Kühlung sehr hoher benötigter Raumtemperaturen die Wärmeverluste minimal gehalten werden können.

0192227

Zusammenfassend läßt sich die übergeordnete Aufgabe auch so formulieren, daß mit minimalem Aufwand eine echte Regelung geschaffen werden soll, die nicht auf äußere Größen angewiesen ist, dennoch aber alle Fremdeinflüsse aus sich heraus bereits berücksichtigt und hierfür eine von allen inneren Systemgrößen des Heiz- bzw. Kühlkreislaufes des Wärmeträgermediums unabhängige Größe als Führungsgröße für die Regelung benutzt.

Dies wird durch die Erfindung in überraschend einfacher und wirtschaftlicher Weise dadurch erreicht, daß gemäß dem auf ein Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden, gerichteten ersten übergeordneten Erfindungsgedanken daß die Rauch- oder Abgastemperatur der Wärme- oder Kältequelle gemessen und hierfür ein Sollwert-Band angelegt ist, innerhalb dessen die zulässigen Werte der Rauch- oder Abgastemperatur liegen, daß das gesamte Sollwert-Band mit der Ober- und Untergrenze entsprechend den Anforderungen verschieblich ist und daß in den Bereichen außerhalb des Sollwert-Bandes der jeweilige Ist-Wert zum Soll-Wert hin regelbar ist. Dabei kann in Fortführung der Erfindung zweckmäßig eine Abweichung der Rauch- bzw. Abgastemperatur über die obere Grenze des vorgegebenen Sollwert-Bandes hinaus durch Vergrößerung und eine Abweichung der Rauch- bzw. Abgastemperatur unter die untere Grenze des vorgegebenen Sollwert-Bandes durch Verringerung der in den Heizungs- bzw. Kühlmittelvorlauf eingespeisten Wärme- bzw. Kälteleistung eliminiert werden.

Die Eliminierung der Differenz des Ist-Wertes zum Sollwert-Band kann dabei je nach Anwendungsfall stetig kontinuierlich, oder quasi kontinuierlich, oder diskontinuierlich (z. B. durch Ein- und Ausschalten) erfolgen.

Der auf eine Vorrichtung zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle, speisbar sind, wobei diese mittel- oder unmittelbar so mit Betriebsenergie versorgt werden, daß ein Teil der zugeführten Betriebsenergie als Rauch- bzw. Abgas die Wärme- bzw. Kältequelle verläßt, gerichtete Erfindungsgedanke kennzeichnet sich dadurch, daß eine solche Vorrichtung eine Einrichtung zur Messung der Temperatur des Rauch- bzw. Abgases der Wärme- oder Kältequelle und eine Regeleinrichtung mit einstellbaren Sollwertgebern für je einen eine obere und eine untere Grenze eines Sollwert-Bandes der Rauch- bzw. Abgastemperatur bildenden oberen und unteren Sollwert derselben und einer über eine Messwertleitung mit der Messeinrichtung für die Rauch- bzw. Abgastemperatur verbundenen Vergleichseinrichtung zur Bestimmung der Abweichung der Rauch- bzw. Abgastemperatur über die obere und/oder unter die untere Grenze ihres Sollwert-Bandes sowie mit einem über eine Steuerleitung mit einer Einrichtung zur Beeinflussung der in den Heizungs- bzw. Kühlmittelvorlauf eingespeisten Wärme- bzw. Kälteleistung verbundenen Stellbefehlgeber aufweist.

Es ist ersichtlich, daß durch die Erfindung erstmalig auch die Möglichkeit geschaffen wird, ein Heizungsverfahren gattungsgemäßer Art so führen zu können, daß eine echte Regelung mit einem von einer Rückmeldegröße unabhängigen Sollwert vorliegt, wobei nach der Konzeption der Erfindung die Funktion des Sollwertes nicht etwa durch einen konstanten oder gar in irgend einer Form gemäß einer irgendwie gearteten Abhängigkeit nachgeführten Wert einer der für das Heizungsverfahren bestimmenden physikalischen Größen, sondern in Form eines Sollwert-Bandes vorgegeben wird, und zwar dies spezifisch in Form eines durch eine obere Grenze und eine untere Grenze der Rauch- bzw. Abgastemperatur bestimmten Sollwert-Bandes. Zudem bietet die Konzeption der Erfindung erstmalig die Möglichkeit, mit den gleichen Verfahrensschritten und gleichen Mitteln eine solche echte Regelung in praktisch voller Universalität ungeachtet der Art der Ausbildung der Heizungsanlage insbesondere hinsichtlich der Art der Erzeugung bzw. Einbringung der erforderlichen Wärmeleistung zu verwirklichen, wobei es grundsätzlich gleichgültig ist, ob beispielsweise der Wärmeerzeuger als für kontinuierlichen oder aber für Ein-Aus-Betrieb ausgelegter Kessel mit oder ohne nachgeschaltete(r) Mehrwege-Mischeinrichtung oder aber als entsprechend konzipierte Wärmepumpe ausgebildet ist. Dabei ist besonders hervorzuheben, daß die Erfindung sich nicht nur erstmalig gleichermaßen auch für Kühlanlagen eignet, sondern bei diesen geradezu gegenüber Heizungsanlagen noch gesteigerte Vorteile erbringt.

Bereits die Beseitigung der eingangs beschriebenen Nachteile bekannter Lösungen für den Betrieb von Heizungsanlagen durch die Erfindung stellt eine wesentliche Weiterentwicklung der Technik auf dem Gebiet des Heizens dar, es gelten jedoch sämtliche für eine Heizungsanlage gattungsgemäßer Art dargelegten Gesichtspunkte in noch schwerwiegenderem Maße für Kühlen. Dies hat seinen prinzipiellen Grund darin, daß, wie schon früher dargelegt wurde, die rationelle Energieverwendung durch eine optimale und energiesparende Regelung bei Kühlanlagen noch mehr Kosteneinsparungen erbringt als bei Heizanlagen, weil die Erzeugung von Kälteleistung grundsätzlich sehr viel kostspieliger ist als die von Wärmeleistung.

Die Lösung nach der Erfindung garantiert im Gegensatz zu bekannten Lösungen mit dem vorstehend bereits beschriebenen gefürchteten Mitkopplungsverhalten mit den dadurch resultierenden Gefahren für die Stabilität der Verfahrensführung erstmalig nicht nur ein funktionsfähiges Anfahrverhalten, sondern auch eine zuverlässige Stabilität eines zudem auch noch eine echte Regelung verwirklichenden Betriebsverfahrens, wobei nicht nur ein Außentemperaturfühler nicht erforderlich, sondern sogar unerwünscht ist, im übrigen aber wesentliche Eingriffe in eine bestehende Anlage ebenso unnötig sind wie die Ausstattung einer die Erfindung verwirklichenden Heizungs- bzw. Kühlanlage im Ersterstellungsfall, da die Erfindung von der Seite des Anschlusses von Meßgeräten für verfahrensführende physikalische Größen mit einem einfachen Temperaturfühler auskommt, der zudem auch noch im Wärme- bzw. Kälteerzeuger herstellerseitig vorinstalliert sein kann. Die auf diese Weise aus vielfältigen Gründen durch die Erfindung erzielbaren Vorteile hinsichtlich Vereinfachung und Erleichterung der Montage und Einsparung von Arbeitszeit und Schmutzbelästigungen und die damit insgesamt einhergehende Steigerung der Wirtschaftlichkeit nicht nur aus dem Gesichtspunkt einer Möglichkeit der erheblichen Senkung des Gestehungspreises, sondern auch der Einsparung von Betriebskosten liegen auf der Hand. Bei der Montage ist nämlich lediglich noch der Anschluß der Vor- und Rücklaufleitung(en) für das Wärmeträgermedium erforderlich. Nicht unerwähnt in diesem Zusammenhang aber dürfen die Möglichkeiten für gravierende Einsparungen an für die Verfahrensführung aufzuwendender Wärme- bzw. Kälteenergie bleiben, durch welche erfindungsgemäß der Wärme- bzw. Kältewirtschaftswirkungsgrad erheblich gesteigert werden kann.

Ein weiterer Vorteil der Erfindung ist darin zu sehen, daß für das Regelungsverfahren ein wie auch immer gearteter Rechenalgorithmus nicht erforderlich ist, vielmehr die Erfindung mit der höchst einfachen Anweisung auskommt, daß immer dann, wenn die Führungsgröße in Form der Rauch- bzw. Abgastemperatur die eine Grenze des erfindungsgemäßen Sollwert-Bandes überschreitet, ein bestimmter Einfluß auf die Stellgröße in Form einer Veränderung der Zuführung von Wärme- bzw. Kältenergie zum Heizungs- bzw. Kühlmittelvorlauf genommen wird, während bei Ausscheren dieser Führungsgröße über die andere Grenze ihres Sollwert-Bandes hinweg die gleiche Stellgröße eben in der anderen Richtung beeinflusst wird. Während also alle bekannten Lösungen statisch deterministisch arbeiten, das heißt in

0192227

diesem Sinn mit formal beschreibendem Algorithmus und - wie schon ausgeführt - unzulänglich linearen Beziehungen, die dynamisch keinerlei Gültigkeit haben und entsprechend mit der Überwindung von systemimmanenten Schwierigkeiten zu kämpfen haben, geht die Erfindung von einem ganz anderen Ansatz, der viel eher als ein dynamisch stochastischer zu bezeichnen ist, aus und überwindet gerade wegen seines innewohnenden dynamischen Prinzips, das für alle Zeiten gültig ist und niemals zu irgendeiner Instabilität neigen kann, alle vorgenannten Schwierigkeiten und heimst dabei aufgabengemäß den Vorteil ein, ohne Messungen von anlagen- bzw. gebäudespezifischen und/oder nutzerbezogenen physikalischen Größen und auch ohne Zuhilfenahme notwendigerweise mehr oder weniger gequälter Rechenalgorithmen jegliche wie auch immer gearteten Außen- und/oder Inneneinflüsse auf den tatsächlichen Wärmebedarf automatisch mitzuberücksichtigen und dadurch einen optimal wirtschaftlichen Betrieb gewährleisten zu können.

Der wesentlichste Vorteil der Erfindung liegt jedoch darin, daß die Regelung aufgabengemäß von dem Heizungs- bzw. Kühlsystem immanenten, d. h. sich aus dem Heizungs- bzw. Kühlsystem selbst ergebenden Größen unabhängig ist, dennoch aber von sich aus zusätzlich zu dem Aufstellungsort, den klimatisch oder anderweitig bedingten Lastverhältnissen und dem Benutzerverhalten bedingten Belastungseinflüssen auch alle diese systemimmanenten Einflussgrößen ohne Messung derselben miterfaßt und mitberücksichtigt. Eine solche Einflußgröße kann sich bei Anlagen nach dem Stande der Technik beispielsweise durch Verschmutzung etwa durch Verkalkung des das Wärmeträgermedium führenden Leitungssystems und seiner Wärmetauscher oder dadurch ergeben, daß das Meßinstrument für den Massenstrom des Wärmeträgermediums, wie beispielsweise ein Wasserzähler, oder ein Meßinstrument für die Temperatur des Wärmeträgermediums, wie etwa eine Temperaturfühler-Manschette, beispielsweise durch Alterung oder durch örtliche Verschiebung im Verlaufe des Betriebes oder durch unsachgemäße Anbringung eine gewisse Drift aufweisen kann, die ohne Eichnormal praktisch nicht zu beheben ist.

Indem die Erfindung sich als Führungsgröße für die Regelung eine Größe aus dem Zuführungskreislauf für Betriebsenergie zum Wärme- bzw. Kälteerzeuger nutzbar macht, wird die gesamte Regelung unabhängig von etwaigem Änderungsverhalten von Betriebsgrößen auf der Wärmeträgermediumsseite der Heizungs- bzw. Kühlanlage, und es erspart sich somit jeglicher Eichaufwand für diese. Überraschenderweise erfaßt dabei diese erfindungsgemäß gewählte Führungsgröße gezielt alle die Einflüsse, die im Laufe der Betriebsdauer für eine erfahrungsgemäß nicht unwesentliche Verschlechterung des Wirkungsgrades und damit der Wirtschaftlichkeit und/oder des ökologischen Verhaltens der Anlage verantwortlich sind.

Dabei ist überraschend, daß man erfindungsgemäß tatsächlich mit einer einzigen physikalischen Größe der Betriebsenergiezuführungsseite der Heizungs- bzw. Kühlanlage gattungsgemäßer Art auskommen kann, um eine Führungsgröße für die gewünschte Regelung zu schaffen, indem einfach hierfür die Rauch- bzw. Abgastemperatur des gattungsgemäßen Wärme- bzw. Kälteerzeugers benutzt wird. Dabei ist hervorzuheben, daß es sich in jedem Falle um einen offenen Kreislauf für die primärseitige Zuführung der Betriebsenergie zum Wärme- bzw. Kälteerzeuger handelt, also einen solchen, bei dem ein Teil der zugeführten Energie in Form von Rauch- oder Abgas ohne Nutzung als Betriebsenergie für den Wärme- bzw. Kälteerzeuger entweicht. Ein hierfür geeigneter Wärme- bzw. Kälteerzeuger kann z. B. ein mit Holz, Kohle, Koks, Öl oder Gas beheizter Kessel oder aber eine beispielsweise verbrennungsmotorisch betriebene Wärmepumpe oder Kältemaschine oder auch eine Sorptionswärmepumpe oder eine Sorptionskältemaschine sein, wobei in letzterem Fall jeweils der Kocher des Sorptionsgemisches mit geeignetem fossilem Brennstoff in offenem Kreis primärseitig befeuert wird. Bei verbrennungsmotorisch betriebenen Kompressoren von Wärmepumpen oder Kältemaschinen wird dabei von Abgas gesprochen, während das einen Teil der zugeführten Energie abführende Medium bei gasbefeuerten Kesseln oder Kochern von Sorptionswärmepumpen oder Sorptionskältemaschinen gleichfalls als Abgas, bei mit anderem fossilem Brennstoff befeuerten Kesseln oder Kochern von Sorptionswärmepumpen oder Soprtionskältemaschinen als Rauchgas bezeichnet wird. In allen Fällen aber kann in überraschender Weise erfindungsgemäß die Rauch- bzw. Abgastemperatur als sämtliche Einflüsse auf der Verbraucherseite, kommen diese nun von der Belastung unmittelbar oder aus dem Betriebsverhalten des das Wärmeträgermedium führenden Teils der Anlage her, ohne Berücksichtigung ihrer einzelnen Einflussnahmen aufeinander insgesamt erfassende Führungsgröße erfolgreich und mit Vorteil genutzt werden.

Hierdurch wird neben dem Vorteil, daß nur eine einzige Information in Form eben dieser Rauch- bzw. Abgastemperatur für eine sachgerechte Regelung erforderlich ist, auch noch bewirkt, daß man keiner weiteren Meßgeräte für andere Betriebsgrößen auf der das Wärmeträgermedium führenden Seite der Anlage und keiner Verbindungsleitungen derselben zur Regeleinrichtung bedarf, wodurch nicht nur der Installationsaufwand für eine Vorrichtung nach der Erfindung vergleichsweise extrem niedrig ist, sondern sich insbesondere Belästigungen durch Schmutz und Lärm bei der Montage im Vergleich zu herkömmlichen Ausführungen praktisch vollkommen vermeiden lassen. Von besonderer Wichtigkeit ist, daß das einzige erforderliche Meßgerät für die Rauch- bzw. Abgastemperatur auf der Feuerungsseite des Wärme- bzw. Kälteerzeugers angeordnet ist und daher bereits herstellerseitig an der richtigen Stelle im Rauch- bzw. Abgasführungsdukt angebracht werden kann. Außer vorteilhafter Vereinfachung von Lagerhaltung und Montage sowie Einsatz preisgünstiger handelsüblicher Ausführungen von Temperaturmeßgeräten mit der erwünschten Folge der Möglichkeit der Senkung des Gestehungspreises eines für eine Vorrichtung gattungsgemäßer Art erforderlichen Wärme- bzw. Kälteerzeugers und der Möglichkeit zur werkseitigen Vorhaltung fester Kesseltypen mit den auch hierdurch bedingten Vorteilen hinsichtlich Vereinfachung von Produktion, Lagerhaltung, Materialeinsatz und -vorhaltung ist von besonderem Vorteil, daß erforderliche Eichungen des Meßgerätes für die Führungsgröße für die Regelung nicht mehr am Einsatzort vorgenommen zu werden brauchen, sondern mit erheblich größerer Präzision bereits im Herstellerwerk stattfinden können.

Die Erfindung ermöglicht es in vorteilhafter Weise weiterhin, durch werkseitige oder entwicklungstechnische Anpassung von Heizflächen an die Bedürfnisse moderner Wärme- bzw. Kälteerzeugungsanlagen alle aus ökologischer Sicht erforderlichen Auflagen ohne besonderen Aufwand erfüllen zu können. Insbesondere kann bei Heizungsanlagen für Ein-, Zwei- oder Mehrfamilienhäuser die bedarfsgerechte Regelung sämtlicher Verbraucher unmittelbar in die Wärmetauscherfläche des Wärme- bzw. Kälteerzeugers integriert werden. Dadurch nämlich, daß sich überraschenderweise der gesamte Energiebedarf in einer Größe, nämlich in der Rauch- bzw. Abgastemperatur, widerspiegelt, läßt sich die Optimierung der Regelung durch die Erfindung mit Vorteil darauf reduzieren, diese Größe wünschenswert in einem engen Spektrum zu halten.

Hierdurch wird es wiederum möglich, einer anderen übergeordneten Aufgabe gerecht zu werden, die erstmalig der Erfindung gestellt worden ist und darin liegt, eine Systemgröße als Instrument zu nutzen, durch welche erstmalig eine Priorisierung einer beliebigen Größe des Tripels von Umweltbelastung, Heizungs- bzw. Kühlungskomfort und Energieausbeute bzw. Gesamtwirkungsgrad möglich wird. Es hat sich nämlich gezeigt, daß es einerseits durchaus möglich ist, Komfortbetrieb bezüglich der Raumtemperaturanforderungen sowohl bei Heizung als auch bei Kühlung einerseits und Energieausbeute andererseits mit Umweltschutz über eine Regelgröße zu verbinden und diese Anforderungen so zu optimieren, daß nicht hoher Heizungs- bzw. Kühlungskomfort mit starker Umweltbelastung erkauft oder umgekehrt bei umweltfreundlicher Heizung bzw. Kühlung auf Komfort verzichtet werden muß.

Nicht zu vergessen ist, zu erwähnen, daß man durch die Erfindung sogar bei Kondensationskesseln bis zu niedrigsten Rauchgastemperaturen gehen und es allein in das Ermessen des Herstellers aufgrund von dessen Know-How gestellt sein lassen kann, ein Optimum an höchster Energieausbeute, hohem Benutzerkomfort und geringster Umweltbelastung einstellen zu können.

In weiterer vorteilhafter Fortbildung der Erfindung kann aber auch eine Abweichung der Rauch- bzw. Abgastemperatur über die obere Grenze des vorgegebenen Sollwert-Bandes hinaus durch Verringerung der in den Heizungs- bzw. Kühlmittelvorlauf eingespeisten Wärme- bzw. Kälteleistung entsprechend dem Maß dieser Abweichung und eine Abweichung der Rauch- bzw. Abgastemperatur unter die untere Grenze des vorgegebenen Sollwert-Bandes durch Vergrößerung der in den Heizungs- bzw. Kühlmittelvorlauf eingespeisten Wärme- bzw. Kälteleistung entsprechend dem Maß dieser Abweichung eliminiert werden. Entsprechend kann die Regeleinrichtung einen einerseits über eine Impulsleitung mit der Vergleichseinrichtung und andererseits über eine weitere Impulsleitung mit dem Stellbefehlgeber verbundenen Proportionalregler aufweisen. Es hat sich nämlich überraschend herausgestellt, daß entgegen einem in der Fachwelt bestehenden Vorurteil, daß mit reinem Proportionalregler Heizungsregelungen nicht zweckgerecht zu verwirklichen seien, handelsübliche reine Proportionalregler durchaus verwendbar sind, und zwar aufgrund und in Verbindung mit der erfindungsgemäßen Konzeption eines Sollwert-Bandes, um jedes ungünstige Schwingungsverhalten der Regelvorrichtung nach der Erfindung, das bei dieser ohnehin nicht zu erwarten ist, zuverlässig auszuschalten, indem hierdurch ein Maß für die Stärke der Gegenregelung geboten wird.

Zur Verbesserung der Genauigkeit der Regelung kann in weiterer zweckmäßiger Ausgestaltung der Erfindung gleichermaßen das Gesamtmaß der Abweichung der Rauch- bzw. Abgastemperatur über die obere Grenze des vorgegebenen Sollwert-Bandes hinaus im Verlauf der Zeit ermittelt und eine Abweichung der Rauch- bzw. Abgastemperatur über die obere Grenze dieses Sollwert-Bandes hinaus durch Verringerung der in den Heizungs- bzw. Kühlmittelvorlauf eingespeisten Wärme- bzw. Kälteleistung entsprechend diesem Gesamtmaß der Abweichung der Rauch- bzw. Abgastemperatur eliminiert und/oder das Gesamtmaß der Abweichung der Rauch- bzw. Abgastemperatur unter die untere Grenze des vorgegebenen Sollwert-Bandes im Verlauf der Zeit ermittelt und eine Abweichung der Rauch- bzw. Abgastemperatur unter die untere Grenze dieses Sollwert-Bandes durch Vergrößerung der in den Heizungs- bzw. Kühlmittelvorlauf eingespeisten Wärme- bzw. Kälteleistung entsprechend diesem Gesamtmaß der Abweichung der Rauch- bzw. Abgastemperatur eliminiert werden. Entsprechend kann die Regeleinrichtung einen über Impulsleitungen mit der Vergleichseinrichtung und dem Proportionalregler sowie dem Stellbefehlgeber verbundenen Integralregler mit zeitabhängigem Integrierwerk für die Abweichung der Rauch- bzw. Abgastemperatur über die obere Grenze des Sollwert-Bandes derselben hinaus und/oder zeitabhängigem Integrierwerk für die Abweichung der Rauch- bzw. Abgastemperatur unter die untere Grenze des Sollwert-Bandes derselben aufweisen. Hierdurch werden sämtliche Regelabweichungen der Rauch- bzw. Abgastemperatur von dem die Führungsgröße bildenden Sollwert-Band, die überhaupt aufgetreten sind, über die Zeit integriert und je nach Größe des Integrals Stellbefehle ausgeführt, was über die Zeit eine besonders exakte Einhaltung bzw. besonders genaue Einregulierung in die Sollgröße mit guter Dämpfung bzw. gutem Einschwingverhalten ermöglicht.

Weiterhin sieht eine andere zweckmäßige Fortbildung gemäß einem untergeordneten Erfindungsgedanken gleichermaßen vor, daß das Maß der zeitlichen Änderung einer Abweichung der Rauch- bzw. Abgastemperatur über die obere Grenze des vorgegebenen Sollwert-Bandes hinaus und/oder der zeitlichen Änderung dieses Maßes zeitlicher Änderung der Abweichung der Rauch- bzw. Abgastemperatur ermittelt und diese Abweichung der Rauch- bzw. Abgastemperatur durch Verringerung der in den Heizungs- bzw. Kühlmittelvorlauf eingespeisten Wärme- bzw. Kälteleistung entsprechend diesem Maß der zeitlichen Änderung der Abweichung der Rauch- bzw. Abgastemperatur bzw. diesem Maß der zeitlichen Änderung dieses Maßes zeitlicher Änderung der Abweichung der Rauch- bzw. Abgastemperatur eliminiert und/oder das Maß der zeitlichen Änderung einer Abweichung der Rauch- bzw. Abgastemperatur unter die untere Grenze des vorgegebenen Sollwert-Bandes und/oder der zeitlichen Änderung dieses Maßes zeitlicher Änderung der Abweichung der Rauch- bzw. Abgastemperatur ermittelt und diese Abweichung der Rauch- bzw. Abgastemperatur durch Vergrößerung der in den Heizungs- bzw. Kühlmittelvorlauf eingespeisten Wärme- bzw. Kälteleistung entsprechend diesem Maß der zeitlichen Änderung der Abweichung der Rauch- bzw. Abgastemperatur bzw. diesem Maß der zeitlichen Änderung dieses Maßes zeitlicher Änderung der Abweichung der Rauch- bzw. Abgastemperatur eliminiert wird. Entsprechend kann zweckmäßig die Regeleinrichtung einen über Impulsleitungen mit der Vergleichseinrichtung und dem Proportionalregler und/oder gegebenenfalls dem Integralregler sowie dem Stellbefehlgeber verbundenen Differentialregler mit einer Einrichtung zur Bestimmung des Maßes der zeitlichen Änderung der Rauch- bzw. Abgastemperatur und/oder einer Einrichtung zur Bestimmung der zeitlichen Änderung des Maßes der zeitlichen Änderung der Rauch- bzw. Abgastemperatur aufweisen.

Es hat sich nämlich überraschend herausgestellt, daß bereits eine Differentialregelung, die als Maß die Änderungsgeschwindigkeit der Rauch- bzw. Abgastemperatur benutzt, immer dann von besonderem Vorteil ist, wenn - am Beispiel einer Heizungsanlage dargestellt - Heizkörper abgeschaltet werden oder Heizkörper abgeschaltet sind und noch beispielsweise ein Raum zu beheizen ist, d. h. auf hoher Heizkörpertemperaturspreizung bzw. mit sehr geringem eigenem Massenstromdurchsatz gefahren wird, sich höchst einfach und bequem und besonders kostengünstig und dabei doch ausgesprochen zuverlässig eine weitere Verbesserung der Erfindung insoweit erzielen läßt, als auch für solche Betriebsfälle sich der unbefriedigende Zustand ausschalten läßt, daß die Regelung in bezug auf Energieeinsparung zu langsam sein kann, da der Anstieg der Rauch- bzw. Abgastemperatur unter diesen Betriebsverhältnissen sehr steil ist. Entgegen allen Erwartungen hat sich herausgestellt, daß die Regelung gemäß diesem untergeordneten Erfindungsgedanken in Abhängigkeit von der Änderungsgeschwindigkeit der Rauch- bzw. Abgastemperatur besonders schnell und zuverlässig ist. Eine weitere Steigerung der Schnelligkeit und Feinfühligkeit der Regelung nach der Erfindung wird durch die andere Variante dieses untergeordneten Erfindungsgedankens erbracht, gemäß derer in Abhängigkeit von der Änderungsbeschleunigung der Rauch- bzw. Abgastemperatur, d. h. von der zeitlichen Änderung des Maßes der zeitlichen Änderung derselben geregelt wird. Gleiches gilt natürlich auch für Kühlbetrieb.

Zweckmäßig kann in weiterer Ausgestaltung der Erfindung zur Anpassung der Regelungskonstanten, nämlich der Verstärkung des Proportionalreglers und/oder der Nachstellzeit des Integralreglers und/oder der Vorhaltzeit des Differentialreglers, an die jeweiligen Eigentümlichkeiten der Heizungs- bzw. Kühlanlage und/oder der mit dieser zu temperierenden Räume im Hinblick auf Betriebsparameter und/oder lage- und/oder klimaspezifische oder benutzereigentümliche Eigenheiten eine weitere Verbesserung dadurch erzielt werden, daß die obere und/oder die untere Grenze des Sollwert-Bandes der Rauch- bzw. Abgastemperatur herstellerseitig leistungsfähigkeitsbedingt und/oder nutzerbedürfnisbezogen gewählt wird. Dies bedeutet die zweckmäßige Möglichkeit einer werkseitigen Vorwahl von für eine bestimmte Heizungs- bzw. Kühlanlage und/oder die Kombination derselben mit einem bestimmten Typ einer Regelungsvorrichtung nach der Erfindung für zweckmäßig erachteten Werten für Verstärkung und/oder Nachstellzeit und/oder Vorhaltzeit, wobei dann die Regelungsvorrichtung auch noch so ausgebildet werden kann, daß sie im Wege des Selbstlernens den Regelvorgang an die genannten Eigentümlichkeiten optimierend anpasst. Diese hersteller- bzw. werkseitige Vorgabe einer oder mehrerer Regelungskonstanten erübrigt vorteilhaft nicht nur zeitaufwendige Einstellarbeiten am Betriebsort, sondern gestattet besondere Präzision bei der Vorgabeeinstellung dieser für eine Minimierung der Energieverluste bestimmenden Regelungskonstanten.

Ein anderer untergeordneter Erfindungsgedanke befaßt sich gemäß einer zugrundeliegenden untergeordneten Aufgabe mit der Ermittlung des für eine bestimmte Heizungs- bzw. Kühlanlage aufgrund der Gesamtheit der Einflußgrößen, denen sie unterliegt, optimalen Maßes der Führungsgröße. Hierfür sieht dieser untergeordnete Erfindungsgedanke vor, daß bei Inbetriebnahme des Verfahrens für Heizbetrieb oder für Kühlbetrieb bei Vollast und voller Öffnung aller Drosseleinrichtungen die Rauch- bzw. Abgastemperatur als minimal mögliche Rauch- bzw. Abgastemperatur, die als Inbetriebnahmerauch- bzw. -abgastemperatur zu bezeichnen ist, zu dem Zeitpunkt, zu dem nach einer Zeitspanne mit praktisch konstantem oder allenfalls geringfügig steigendem Wert der Rauch- bzw. Abgastemperatur erstmalig eine signifikante Vergrößerung derselben auftritt, oder nach einer vorgegebenen Zeitspanne nach Beginn des Anfahrvorganges, ermittelt und der größere Sollwert der Rauch- bzw. Abgastemperatur entsprechend einem Vielfachen dieser minimal möglichen Rauch- bzw. Abgastemperatur (Inbetriebnahmerauch- bzw. -abgastemperatur) und der kleinere Sollwert der Rauch- bzw. Abgastemperatur entsprechend einem im Vergleich zu diesem Vielfachen kleineren Vielfachen oder einem Bruchteil dieser minimal möglichen Rauch- bzw. Abgastemperatur (Inbetriebnahmerauch- bzw. -abgastemperatur) gewählt wird. Diese Verfahrensweise kann mit Vorzug bei der als "Jungfernfahrt" zu bezeichnenden erstmaligen Inbetriebnahme einer mit der Erfindung ausgerüsteten Heizungs- bzw. Kühlanlage verwirklicht werden und erbringt dann die tatsächlich minimal mögliche Rauch- bzw. Abgastemperatur als die einzige relevante Größe, in der alle auf die Heizungs- bzw. Kühlanlage wirkenden äußeren und bezogen auf das das Wärmeträgermedium führende Leitungssystem inneren Einflußgrößen enthalten sind, ohne daß diese im einzelnen bestimmt oder gemessen zu werden bräuchten.

Eine zweckmäßige Ausgestaltung der Erfindung gemäß einem anderen untergeordneten Erfindungsgedanken kennzeichnet sich dadurch, daß bei Heizbetrieb für Aufheizen nach einer Abkühlung bzw. bei Kühlbetrieb für Abkühlen nach einer Erwärmung und/oder bei jeder Wiederaufnahme der Zufuhr von Betriebsenergie zum Wärme- bzw. Kälteerzeuger nach einer Beendigung derselben bei Vollast und voller Öffnung aller Drosseleinrichtungen die Rauch- bzw. Abgastemperatur als minimale Rauch- bzw Abgastemperatur, die auch als Anfahrrauch- bzw. -abgastemperatur zu bezeichnen ist, zu dem Zeitpunkt, zu dem nach einer Zeitspanne mit praktisch konstantem oder allenfalls geringfügig steigendem Wert der Rauch- bzw. Abgastemperatur erstmalig eine signifikante Vergrößerung derselben auftritt, oder nach einer vorgegebenen Zeitspanne nach Beginn des Anfahrvorganges, ermittelt und der größere Sollwert der Rauch- bzw. Abgastemperatur entsprechend einem Vielfachen dieser minimalen Rauch- bzw. Abgastemperatur (Anfahrrauch- bzw. -abgastemperatur) und der kleinere Sollwert der Rauch- bzw. Abgastemperatur entsprechend einem im Vergleich zu diesem Vielfachen kleineren Vielfachen oder einem Bruchteil dieser minimalen Rauch- bzw. Abgastemperatur (Anfahrrauch- bzw. -abgastemperatur) gewählt wird. Dies erbringt einen Indikator dafür, daß sich der Wärmeübergang vom Rauchgas zum Wärmeträgermedium der Heizungs- bzw. Kühlanlage dadurch verschlechtert hat, daß der Wärmetauscher des Wärme- bzw. Kälteerzeugers auf seiner Rauchgasseite verrußt und/oder auf seiner Wärmeträgermediumsseite verkalkt ist und/oder aus irgendwelchen Gründen, wie beispielsweise durch Leckage und/oder Hängen der Drosseleinrichtung(en) eines oder mehrerer Heizkörper(s) oder Kühleinrichtung(en) dieser Wärmetauscher nicht mehr mit der gesamten Menge des Wärmeträgermediums beaufschlagt wird. Durch verhältnismäßig einfache Besichtigung dieses Wärmetauschers und Reinigen von Ruß und/oder Kalk lassen sich einfach die wärmetauscherseitigen Fehlerquellen von den im das Wärmeträgermedium führenden Leitungssystem etwa vorhandenen sonstigen Fehlerquellen selektieren.

Vorrichtungsseitig wird die Erfindung diesen untergeordneten Erfindungsgedanken dadurch gerecht, daß die Regeleinrichtung eine Sollwert-Wahleinrichtung mit einer vorzugsweise über eine Messwertleitung mit der Messeinrichtung für die Rauch- bzw. Abgastemperatur verbundenen Detektoreinrichtung zur Ermittlung der zu dem Zeitpunkt, zu dem nach einer Zeitspanne mit praktisch konstantem oder allenfalls geringfügig steigendem Wert der Rauch- bzw. Abgastemperatur erstmalig eine signifikante Vergrößerung derselben auftritt, oder nach einer vorgegebenen Zeitspanne nach Beginn des Anfahrvorganges, im Verlauf der Inbetriebnahme der Vorrichtung für Heizbetrieb oder für Kühlbetrieb bei Vollast und voller Öffnung aller Drosseleinrichtungen als minimal mögliche Rauch- bzw. Abgastemperatur (Inbetriebnahmerauch- bzw. -abgastemperatur) und/oder im Verlauf des Heiz- betriebes bei Aufheizen nach einer Abkühlung bzw. im Verlauf des Kühlbetriebes bei Abkühlen nach einer Erwärmung bei Vollast und voller Öffnung aller Drosseleinrichtungen als minimale Rauch- bzw. Abgastemperatur (Anfahrrauch- bzw. -abgastemperatur) auftretenden Rauch- bzw. Abgastemperatur und einer oder je einer über eine Impulsleitung mit dieser verbundenen einstellbaren Verhältnisgabeeinrichtung als Sollwert -Bildungseinrichtung für die obere bzw. die untere Grenze des Sollwert-Bandes der Rauch- bzw. Abgastemperatur sowie jeweils eine über Impulsleitungen mit der zugeordneten Sollwert-Bildungseinrichtung der Sollwert-Wahleinrichtung und andererseits mit dem zugeordneten Sollwertgeber verbundene Einrichtung zur automatischen Verstellung desselben im Sinne einer Ersteinstellung bzw. einer Veränderung eines eingestellten Wertes der zugeordneten oberen bzw. unteren Grenze des Sollwert-Bandes der Rauch- bzw. Abgastemperatur aufweist.

Hervorzuheben ist in diesem Zusammenhang, daß man dann, wenn man nach den vorstehend erläuterten Kriterien festgestellt hat, daß es sich im Zuge eines ermittelten Anstiegs der Rauch- bzw. Abgastemperatur von ihrem ursprünglichen Inbetriebnahmewert auf einen höheren Wert in Form der sogenannten Anfahrrauch- bzw. -abgastemperatur nur um eine Verrußung oder Verkalkung der Anlage handelt, diese durchaus in bisheriger Weise weiterfahren kann, wobei die festgestellte höhere Anfahrrauch- bzw. -abgastemperatur die Bestimmungsfunktion der ursprünglichen Inbetriebnahmerauch- bzw. -abgastemperatur für die Festlegung der Führungsgröße der Regelung in Form des erfindungsgemäßen Sollwert-Bandes übernehmen kann, was den Vorteil erbringt, daß in einem solchen Fall auf einen Service-Techniker verzichtet werden kann.

Hierfür kann gemäß einem weiteren untergeordneten Erfindunsgedanken bei Inbetriebnahme des Verfahrens für Heizbetrieb oder für Kühlbetrieb oder bei Heizbetrieb für Aufheizen nach einer Abkühlung bzw. bei Kühlbetrieb für Abkühlen nach einer Erwärmung jeweils bei Vollast und voller Öffnung aller Drosseleinrichtungen die Länge der Zeitspanne, während derer erstmalig die Rauch- bzw. Abgastemperatur als minimal mögliche Rauch- bzw. Abgastemperatur (Inbetriebnahmerauch- bzw. -abgastemperatur) bzw. als minimale Rauch- bzw. Abgastemperatur (Anfahrrauch- bzw. -abgastemperatur) mit praktisch konstantem oder allenfalls geringfügig steigendem Wert auftritt, und/oder die zeitliche Änderung der Rauch- bzw. Abgastemperatur nach dem Zeitpunkt, zu dem nach dieser Zeitspanne mit praktisch konstantem oder allenfalls geringfügig steigendem Wert der Rauch- bzw. Abgastemperatur erstmalig eine signifikante Vergrößerung derselben auftritt, ermittelt und entsprechend dem Maß der Länge dieser Zeitspanne und/oder dem Maß der zeitlichen Änderung dieser Rauch- bzw. Abgastemperatur der größere und der kleinere vorgegebene Sollwert der Rauch- bzw. Abgastemperatur verändert werden, indem bei größerer Länge dieser Zeitspanne und/oder kleinerem Maß der zeitlichen Änderung dieser Rauch- bzw. Abgastemperatur beide vorgegebenen Sollwerte der Rauch- bzw. Abgastemperatur um einen größeren Betrag und bei kleinerer Länge dieser Zeitspanne und/oder größerem Maß der zeitlichen Änderung der Rauch- bzw. Abgastemperatur beide vorgegebenen Sollwerte der Rauch- bzw. Abgastemperatur um einen kleineren Betrag vergrößert werden. Vorrichtungsmäßig kann dabei zweckmäßig die Regeleinrichtung eine Sollwert-Wahleinrichtung mit einer vorzugsweise über eine Messwertleitung mit der Messeinrichtung für die Rauch- bzw. Abgastemperatur verbundenen Detektoreinrichtung zur Ermittlung der zu dem Zeitpunkt, zu dem nach einer Zeitspanne mit praktisch konstantem oder allenfalls geringfügig steigendem Wert der Rauch- bzw. Abgastemperatur erstmalig eine signifikante Vergrößerung derselben auftritt, oder nach einer vorgegebenen Zeitspanne nach Beginn des Anfahrvorganges im Verlauf der Inbetriebnahme der Vorrichtung für Heizbetrieb oder für Kühlbetrieb bei Vollast und voller Öffnung aller Drosseleinrichtungen als minimal mögliche Rauch- bzw. Abgastemperatur (Inbetriebnahmerauch- bzw. -abgastemperatur) und/oder im Verlauf des Heizbetriebes bei Aufheizen nach einer Abkühlung bzw. im Verlauf des Kühlbetriebes bei Abkühlen nach einer Erwärmung bei Vollast und voller Öffnung aller Drosseleinrichtungen als minimale Rauch- bzw. Abgastemperatur (Anfahrrauch- bzw. -abgastemperatur) auftretenden Rauch- bzw. Abgastemperatur und einer oder je einer über eine Impulsleitung mit dieser verbundenen einstellbaren Verhältnisgabeeinrichtung als Sollwert-Bildungseinrichtung für die obere bzw. die untere Grenze des Sollwert-Bandes der Rauch- bzw. Abgastemperatur, ferner eine über eine Impulsleitung mit der Vergleichseinrichtung zur Bestimmung der Abweichung der Rauch- bzw. Abgastemperatur über die obere und/oder unter die untere Grenze ihres Sollwert-Bandes oder mit einer ihrerseits über eine Impulsleitung mit dieser Vergleichseinrichtung verbundenen Momentanwert-Abweichungs-Speichereinrichtung verbundene Betragsvergleichseinrichtung zur Ermittlung des Beginns und des Endes einer Zeitspanne mit praktisch konstantem oder allenfalls geringfügig steigendem Wert der Rauch- bzw. Abgastemperatur durch Bestimmung des Unterschiedes zwischen jeweils letztem und vorletztem Momentanwert der Rauch- bzw. Abgastemperatur und eine über eine Impulsleitung mit der Detektoreinrichtung verbundene Zeitspannen-Messeinrichtung zur Ermittlung der Länge der Zeitspanne mit praktisch konstantem oder allenfalls geringfügig steigendem Wert der Rauch- bzw. Abgastemperatur mit einer mit ihr über eine Impulsleitung verbundenen Zeitspannenvorgabe- und -vergleichseinrichtung und mit einer Einschalt- und einer Ausschalteinrichtung, die ihrerseits jeweils über eine Impulsleitung mit der Betragsvergleichseinrichtung verbunden sind, wobei zumindest die Ausschalteinrichtung vorzugsweise auch mit der Detektoreinrichtung über eine Impulsleitung verbunden ist, und/oder einer jeweils über eine Impulsleitung einerseits entweder mit der Betragsvergleichseinrichtung oder mit der Vergleichseinrichtung zur Bestimmung der Abweichung der Rauch- bzw. Abgastemperatur über die obere und/oder unter die untere Grenze ihres Sollwert-Bandes und andererseits mit einer Einrichtung zur Abgabe von Zeitspannen entsprechenden Impulsen verbundenen Dividiereinrichtung zur Ermittlung des zeitlichen Gradienten der Vergrößerung der Rauch- bzw. Abgastemperatur nach Beendigung der Zeitspanne mit praktisch konstantem oder allenfalls geringfügig steigendem Wert derselben, die jeweils über eine Impulsleitung mit einer Gradienten-Vorgabe- und -Vergleichseinrichtung mit einer vom Zeitpunkt des Endes der Zeitspanne mit praktisch konstantem oder allenfalls geringfügig steigendem Wert der Rauch- bzw. Abgastemperatur oder der vorgegebenen Zeitspanne nach Beginn des Anfahrvorganges für die Vorrichtung abhängigen Einschalt- und/oder Ausschalteinrichtung, vorzugsweise mit zumindest der Ausschalteinrichtung einer Zeitspannen-Messeinrichtung zur Ermittlung der Zeitspanne mit praktisch konstantem oder allenfalls geringfügig steigendem Wert der Rauch- bzw. Abgastemperatur, verbunden ist, aufweist, wobei die bzw. jede der Sollwert-Bildungseinrichtung(en) über jeweils eine Impulsleitung einerseits mit der Detektoreinrichtung und andererseits mit der Zeitspannen-Messeinrichtung unmittelbar oder über deren Zeitspannen-Vorgabe- und -Vergleichseinrichtung bzw. mit der Dividiereinrichtung unmittelbar oder über deren Gradienten-Vorgabe- und -Vergleichseinrichtung sowie in jedem Fall mit dem Stellbefehlgeber verbunden ist bzw. sind. Auf diese Weise läßt sich höchst einfach und wirtschaftlich eine Festlegung der wünschenswerten Lage und Breite des Sollwert-Bandes in direkter Abhängigkeit vom Startverhalten der Heizungs- bzw. Kühlanlage erzielen, indem eine oder beide dieses abbildenden Größen in Form der Länge der Zeitspanne, während derer im Zuge des Hochfahrens der Anlage eine verhältnismäßig konstante und allenfalls geringfügig steigende Rauch- bzw. Abgastemperatur gemessen wird, bzw. in Form der Steilheit, mit der sich ein danach erstmalig festgestellter Anstieg der Rauch- bzw. Abgastemperatur als weiterer Verlauf derselben fortsetzt, zur Festlegung der Lage und Breite des Sollwert-Bandes der Rauch- bzw. Abgastemperatur herangezogen wird.

In manchen Fällen kann jedoch eine relativierende Festlegung der Lage und Breite des Sollwert-Bandes der Rauch- bzw. Abgastemperatur in Abhängigkeit vom Verhältnis von minimaler Rauch- bzw. Abgastemperatur, wie diese beim täglichen Anfahren der Heizungs- bzw. Kühlanlage gemessen wird, zu der minimal möglichen Rauch- bzw. Abgastemperatur, wie diese sich bei der erstmaligen Inbetriebnahme der Heizungs- bzw. Kühlanlage eingestellt hat, zweckmäßig und erwünscht sein. Zu diesem Zwecke kann gemäß einem alternativen untergeordneten Erfindungsgedanken bei Inbetriebnahme des Verfahrens für Heizbetrieb oder für Kühlbetrieb bei Vollast und voller Öffnung aller Drosseleinrichtungen die Rauch- bzw. Abgastemperatur als minimal mögliche Rauch- bzw. Abgastemperatur (Inbetriebnahmerauch- bzw. -abgastemperatur) und bei Heizbetrieb für Aufheizen nach einer Abkühlung bzw. bei Kühlbetrieb für Abkühlen nach einer Erwärmung bei Vollast und voller Öffnung aller Drosseleinrichtungen die Rauch- bzw. Abgastemperatur als minimal mögliche oder minimale Rauch- bzw. Abgastemperatur (Anfahrrauch- bzw. -abgastemperatur) ermittelt und bei Auftreten einer Abweichung der minimalen Rauch- bzw. Abgastemperatur (Anfahrrauch- bzw. -abgastemperatur) von der minimal möglichen Rauch- bzw. Abgastemperatur (Inbetriebnahmerauch- bzw. -abgastemperatur) das vorgegebene Sollwert-Band der Rauch- bzw. Abgastemperatur in Abhängigkeit vom Verhältnis von minimaler zu minimal möglicher Rauch- bzw. Abgastemperatur verändert werden. Entsprechend kann zweckmäßig die Regeleinrichtung eine Sollwert-Wahleinrichtung mit einer oder je einer vorzugsweise über eine Messwertleitung mit der Messeinrichtung für die Rauch- bzw. Abgastemperatur verbundenen Detektoreinrichtung zur Ermittlung der zu dem Zeitpunkt, zu dem nach einer Zeitspanne mit praktisch konstantem oder allenfalls geringfügig steigendem Wert der Rauch- bzw. Abgastemperatur erstmalig eine signifikante Vergrößerung derselben auftritt, oder nach einer vorgegebenen Zeitspanne nach Beginn des Anfahrvorganges, im Verlauf der Inbetriebnahme der Vorrichtung für Heizbetrieb oder für Kühlbetrieb bei Vollast und voller Öffnung aller Drosseleinrichtungen als minimal mögliche Rauch- bzw. Abgastemperatur (Inbetriebnahmerauch- bzw. -abgastemperatur) und im Verlauf des Heizbetriebes bei Aufheizen nach einer Abkühlung bzw. im Verlauf des Kühlbetriebes bei Abkühlen nach einer Erwärmung bei Vollast und voller Öffnung aller Drosseleinrichtungen als minimale Rauch- bzw. Abgastemperatur (Anfahrrauch- bzw. -abgastemperatur) auftretenden Rauch- bzw. Abgastemperatur und eine Messwertspeichereinrichtung für die minimal mögliche Rauch- bzw. Abgastemperatur (Inbetriebnahmerauch- bzw. -abgastemperatur) sowie eine einerseits über eine Impulsleitung mit dieser und andererseits über eine Messwertleitung mit der Messeinrichtung für die Rauch- bzw. Abgastemperatur oder über eine Impulsleitung mit der Detektoreinrichtung verbundene Vergleichseinrichtung zur Ermittlung von Abweichungen der minimalen Rauch- bzw. Abgastemperatur (Anfahrrauch- bzw. -abgastemperatur) von der minimal möglichen Rauch- bzw. Abgastemperatur (Inbetriebnahmerauch- bzw. -abgastemperatur) und eine über eine Impulsleitung mit dieser verbundene Verhältnisbildungseinrichtung aufweisen, die über jeweils eine Impulsleitung mit zumindest einer der Sollwert-Bildungseinrichtungen für die obere bzw. untere Grenze des Sollwert-Bandes der Rauch- bzw. Abgastemperatur oder mit der oder zumindest einer der Programmspeichereinrichtung(en) für die Beeinflussung des Sollwert-Bandes der Rauch- bzw. Abgastemperatur oder mit zumindest einer Verstelleinrichtung für diese oder mit zumindest einem Sollwertgeber verbunden und mittels derer die betreffende Sollwert-Bildungseinrichtung bzw. Programmspeichereinrichtung bzw. Verstelleinrichtung bzw. der betreffende Sollwertgeber im Sinne einer Änderung des vorgegebenen Sollwert-Bandes der Rauch- bzw Abgastemperatur in Abhängigkeit vom Verhältnis von minimal möglicher Rauch- bzw. Abgastemperatur (Inbetriebnahmerauch- bzw -abgastemperatur) zu minimaler Rauch- bzw. Abgastemperatur (Anfahrrauch- bzw. -abgastemperatur) verstellbar ist. Ersichtlich wird hierdurch ermöglicht, daß eine in erfindungsgemäßer Weise ausgestattete Heizungs- bzw. Kühlanlage auch dann noch mit gleich guter Funktion weiterbetrieben werden kann, wenn sie in der beschriebenen Weise bezüglich ihrer Rauch- bzw. Abgastemperatur eine Drift zu bezüglich ihrer ursprünglichen Inbetriebnahmerauch- bzw. -abgastemperatur höheren Werten aufweist.

Im übrigen kann eine solche Drift zweckmäßig auch noch anderweitig ausgenützt werden, indem in weiterer Fortbildung der Erfindung gemäß einem anderen untergeordneten Gedanken derselben bei Inbetriebnahme des Verfahrens für Heizbetrieb oder für Kühlbetrieb bei Vollast und voller Öffnung aller Drosseleinrichtungen die Rauch- bzw. Abgastemperatur als minimal mögliche Rauch- bzw. Abgastemperatur (Inbetriebnahmerauch- bzw. -abgastemperatur) und bei Heizbetrieb für Aufheizen nach einer Abkühlung bzw. bei Kühlbetrieb für Abkühlen nach einer Erwärmung bei Vollast und voller Öffnung aller Drosseleinrichtungen die Rauch- bzw. Abgastemperatur als minimale Rauch- bzw. Abgastemperatur (Anfahrrauch- bzw. -abgastemperatur) ermittelt und bei Auftreten einer vorbestimmten Abweichung der minimalen Rauch- bzw. Abgastemperatur (Anfahrrauch- bzw. -abgastemperatur) von der minimal möglichen Rauch- bzw. Abgastemperatur (Inbetriebnahmerauch- bzw. -abgastemperatur) diese Unregelmäßigkeit optisch und/oder akustisch wahrnehmbar gemacht wird. Hierfür kann zweckmäßig mindestens eine Meldeeinrichtung zur Abgabe einer optisch und/oder akustisch wahrnehmbaren Information vorgesehen sein, wobei die Regeleinrichtung eine Sollwert-Wahleinrichtung mit einer oder je einer vorzugsweise über eine Messwertleitung mit der Messeinrichtung für die Rauch- bzw. Abgastemperatur verbundenen Detektoreinrichtung zur Ermittlung der zu dem Zeitpunkt, zu dem nach einer Zeitspanne mit praktisch konstantem oder allenfalls geringfügig steigendem Wert der Rauch- bzw. Abgastemperatur erstmalig eine signifikante Vergrößerung derselben auftritt, oder nach einer vorgegebenen Zeitspanne nach Beginn des Anfahrvorganges, im Verlauf der Inbetriebnahme der Vorrichtung für Heizbetrieb oder für Kühlbetrieb bei Vollast und voller Öffnung aller Drosseleinrichtungen als minimal mögliche Rauch- bzw.

Abgastemperatur (Inbetriebnahmerauch- bzw. -abgastemperatur) und im Verlauf des Heizbetriebes bei Aufheizen nach einer Abkühlung bzw. im Verlauf des Kühlbetriebes bei Abkühlen nach einer Erwärmung bei Vollast und voller Öffnung aller Drosseleinrichtungen als minimale Rauch- bzw. Abgastemperatur (Anfahrrauch- bzw. -abgastemperatur) auftretenden Rauch- bzw. Abgastemperatur und eine Messwertspeichereinrichtung für die minimal mögliche Rauch- bzw. Abgastemperatur (Inbetriebnahmerauch- bzw. -abgastemperatur) sowie eine einerseits über eine Impulsleitung mit dieser und andererseits über eine Messwertleitung mit der Messeinrichtung für die Rauch- bzw. Abgastemperatur oder über eine Impulsleitung mit der Detektoreinrichtung verbundene Vergleichseinrichtung zur Ermittlung von Abweichungen der minimalen Rauch- bzw. Abgastemperatur (Anfahrrauch- bzw. -abgastemperatur) von der minimal möglichen Rauch- bzw. Abgastemperatur (Inbetriebnahmerauch- bzw. -abgastemperatur) mit einer Grenzdetektoreinrichtung aufweist, die über jeweils eine Impulsleitung mit der bzw. den Meldeeinrichtung(en) verbunden ist und mittels derer diese zur Wahrnehmbarmachung einer einem dem Über- oder Unterschreiten eines vorbestimmten Wertes einer solchen Abweichung entsprechenden Unregelmäßigkeit aktivierbar ist bzw. sind. Der Vorteil dieses untergeordneten Erfindungsgedankens ist, daß dieser eine entsprechend erfindungsgemäß ausgerüstete Heizungs- bzw. Kühlanlage besonders servicefreundlich macht. Denn es kann auf diese Weise dem Betreiber derselben die Vorhersage gegeben werden, daß er nicht mehr wirtschaftlich fährt, sondern etwas getan werden muß, weil der Wärmeübergang vom Rauch- bzw. Abgas über den Wärmetauscher des Wärme- bzw. Kälteerzeugers zum im Heizungs- bzw. Kühlmittelkreislauf zirkulierenden Wärmeträgermedium hin gestört ist, was seine Ursache in einer rauch- bzw. abgasseitigen Verrußung und/oder einer wärmeträgermediumsseitigen Verkalkung dieses Wärmetauschers und/oder darin haben kann, daß diesem aufgrund heizungs- bzw. kühlmittelkreislaufseitigen Defektes beispielsweise in Form einer Leckage etwa der Umwälzpumpe oder des Hängens der Drosseleinrichtung(en) eines oder mehrerer Heizkörper(s) bzw. einer oder mehrerer Kühleinrichtungen nicht mehr ausreichend Wärmeträgermedium zur Verfügung gestellt wird. All diese Defekte spiegeln sich nämlich in der Drift der Rauch- bzw. Abgastemperatur zu höheren Werten hin wieder, die ihrerseits wiederum ein Maß für die Unwirtschaftlichkeit der Verfahrensführung ist.

Nachzutragen ist, daß in allen Fällen gemäß einem weiteren untergeordneten Erfindungsgedanken mit abnehmendem Wert der oberen oder der unteren Grenze des Sollwert-Bandes die Differenz zwischen diesen beiden Grenzwerten und/oder das Verhältnis derselben zunehmend kleiner gewählt werden sollte. Hierfür kann in erfinderischer Fortbildung der Regelungsvorrichtung nach der Erfindung die Sollwert-Wahleinrichtung eine über eine Impulsleitung mit der Detektoreinrichtung verbundene Programmspeichereinrichtung mit einer über eine Impulsleitung mit der Sollwert-Bildungseinrichtung für die obere Grenze des Sollwert-Bandes der Rauch- bzw. Abgastemperatur verbundenen Verstelleinrichtung für diese und/oder einer über eine Impulsleitung mit der Sollwert-Bildungseinrichtung für die untere Grenze des Sollwert-Bandes der Rauch- bzw. Abgastemperatur verbundenen Verstelleinrichtung für diese oder eine Programmspeichereinrichtung für die obere Grenze des Sollwert-Bandes der Rauch- bzw. Abgastemperatur mit über eine Impulsleitung mit der Sollwert-Bildungseinrichtung für diese obere Grenze verbundenen Verstelleinrichtung für diese und/oder eine Programmspeichereinrichtung für die untere Grenze des Sollwert-Bandes der Rauch- bzw. Abgastemperatur mit über eine Impulsleitung mit der Sollwert-Bildungseinrichtung für diese untere Grenze verbundenen Verstelleinrichtung für diese aufweisen, wobei durch zumindest eine der Verstelleinrichtungen entsprechend einer in der bzw. den Programmspeichereinrichtung(en) gespeicherten Abhängigkeit das in der zugeordneten Sollwert-Bildungseinrichtung gebildete Verhältnis in dem Sinne veränderbar ist, daß einem abnehmenden Wert der oberen oder unteren Grenze des Sollwert-Bandes der Rauch- bzw. Abgastemperatur eine zunehmend geringere Differenz zwischen diesen beiden Grenzwerten und/oder ein zunehmend kleineres Verhältnis derselben entspricht. Es hat sich nämlich überraschend gezeigt, daß es insbesondere aus Gründen einer Verbesserung der Stabilität der Regelung und in bereits beschriebener Weise damit einhergehender Energieeinsparungen besonders zweckmäßig ist, wenn mit zunehmender Rauch- bzw. Abgastemperatur eine größere Schwankungsbreite für diese zugelassen wird, also auch die Bandbreite des erfindungsgemäßen Sollwert-Bandes größer vorgegeben wird.

Die Erfindung bietet aber gemäß einer weiteren sie zweckmäßig fortbildenden Ausgestaltung auch noch die bisher in der Fachwelt nicht für realisierbar gehaltene Möglichkeit für die Abgabe einer für den Benutzer einer Heizungs- bzw. Kühlanlage beschriebener Art höchst wertvollen weiteren Information, indem nämlich bei Fehlen einer Abweichung der Rauch- bzw. Abgastemperatur über die obere Grenze ihres Sollwert-Bandes überhaupt und/oder bei Fehlen einer Abweichung der Rauch- bzw. Abgastemperatur über die obere Grenze ihres Sollwert-Bandes innerhalb einer vorgegebenen Zeitspanne diese Unregelmäßigkeit optisch und/oder akustisch wahrnehmbar gemacht wird. Hierfür kann zweckmäßig vorrichtungsseitig mindestens eine Meldeeinrichtung zur Abgabe einer optisch und/oder akustisch wahrnehmbaren Information vorgesehen sein, die über eine Impulsleitung an eine Auslöseeinrichtung angeschlossen ist, die ihrerseits über eine Impulsleitung mit der Vergleichseinrichtung der Regeleinrichtung zur Bestimmung der Abweichung der Rauch- bzw. Abgastemperatur über die obere und/oder unter die untere Grenze ihres Sollwert-Bandes und/oder mit einer Messwertspeichereinrichtung verbunden ist, die über eine Impulsleitung mit dieser und/oder mit einer über eine Messwertleitung mit der Messeinrichtung für die Rauch- bzw. Abgastemperatur verbundenen Zeitsteuereinrichtung zur Durchführung einer Mehrzahl von Messungen der Rauch- bzw. Abgastemperatur durch diese Messeinrichtung oder mit einer Zeitsteuereinrichtung zur Aufnahme und/oder zum Abruf eines Messwertes oder einer Mehrzahl von von der Messeinrichtung gelieferten Messwerten der Rauch- bzw. Abgastemperatur durch diese Messwertspeichereinrichtung bzw. von dieser jeweils innerhalb einer vorgegebenen Zeitspanne verbunden ist, angeschlossen und von dieser bei Fehlen einer Abweichung der Rauch- bzw. Abgastemperatur über die obere Grenze ihres Sollwert-Bandes überhaupt und/oder bei Fehlen einer Abweichung der Rauch- bzw. Abgastemperatur über die obere Grenze ihres Sollwert-Bandes innerhalb einer vorgegebenen Zeitspanne zur Wahrnehmbarmachung dieser Unregelmäßigkeit aktivierbar ist bzw. sind. Hierdurch kann mit einfachen und kostengünstigen und dennoch höchst zuverlässigen Mitteln dem Benutzer einer Heizungs- bzw. Kühlanlage mitgeteilt werden, daß diese auf der Rauch- bzw. Abgasseite des Wärmetauschers ihres Wärme- bzw. Kälteerzeugers mit einem nicht mehr zu vernachlässigenden Wärmeübergangsverlust oder aber mit einem beträchtlichen Verlust an Wärme- bzw. Kälteenergie auf seiten ihres das Wärmeträgermedium führenden Teils arbeitet, wie das etwa bei Heizungsbetrieb z. B. dann der Fall sein kann, wenn der Benutzer sein zu beheizendes Haus oder dergleichen nicht geschlossen hält, sondern beispielsweise durch ein ständig offenes Fenster eines mit einem hohen Raumtemperatur-Sollwert bedienten Raumes Energie vergeudet, damit er entsprechende Maßnahmen treffen kann. Dies ist im übrigen für Kühlbetrieb noch wesentlich wichtiger, weil bei diesem durch Beseitigung einer solchen Kälteenergie-Leckage vergleichsweise wesentlich mehr an Kosten gespart werden kann als im Heizbetrieb.

Außer dem beschriebenen Nichtüberschreiten der oberen Grenze des Sollwert-Bandes der Rauch- bzw. Abgastemperatur und dem Nichtüberschreiten derselben vorzugsweise während einer vorgegebenen Zeitspanne liefert auch das Unterschreiten der unteren Grenze des Sollwert-Bandes der Rauch- bzw. Abgastemperatur eine wertvolle Information, wenn gemäß einem anderen untergeordneten Erfindungsgedanken bei Auftreten einer Abweichung der Rauch- bzw. Abgastemperatur unter die minimale Rauch- bzw. Abgastemperatur (Anfahrrauch- bzw. -abgastemperatur) und/oder die minimal mögliche Rauch- bzw. Abgastemperatur (Inbetriebnahmerauch- bzw. -abgastemperatur) bei Vollast und voller Öffnung aller Drosseleinrichtungen und/oder bei Auftreten einer Abweichung der Rauch- bzw. Abgastemperatur unter die minimale Rauch- bzw. Abgastemperatur (Anfahrrauch- bzw. -abgastemperatur) und/oder die minimal mögliche Rauch- bzw. Abgastemperatur (Inbetriebnahmerauch- bzw. -abgastemperatur) bei Vollast und voller Öffnung aller Drosseleinrichtungen innerhalb einer vorgegebenen Zeitspanne diese Unregelmäßigkeit optisch und/oder akustisch wahrnehmbar gemacht wird. Vorrichtungsseitig kann hierfür mindestens eine Meldeeinrichtung zur Abgabe einer optisch und/oder akustisch wahrnehmbaren Information vorgesehen sein, die über eine Impulsleitung an eine Auslöseeinrichtung angeschlossen ist, die ihrerseits über eine Impulsleitung mit der Vergleichseinrichtung der Regeleinrichtung zur Bestimmung der Abweichung der Rauch- bzw. Abgastemperatur über die obere und/oder unter die untere Grenze ihres Sollwert-Bandes und/oder mit einer Messwertspeichereinrichtung verbunden ist, die über eine Impulsleitung mit dieser und/oder mit einer über eine Messwertleitung mit der Messeinrichtung für die Rauch- bzw. Abgastemperatur verbundenen Zeitsteuereinrichtung zur Durchführung einer Mehrzahl von Messungen der Rauch- bzw. Abgastemperatur durch diese Messeinrichtung oder mit einer Zeitsteuereinrichtung zur Aufnahme und/oder zum Abruf eines Messwertes oder einer Mehrzahl von von der Messeinrichtung gelieferten Messwerten der Rauch- bzw. Abgastemperatur durch diese Messwertspeichereinrichtung bzw. von dieser jeweils innerhalb einer vorgegebenen Zeitspanne verbunden ist, angeschlossen und von dieser bei Auftreten einer Abweichung der Rauch- bzw. Abgastemperatur unter die minimale Rauch- bzw. Abgastemperatur (Anfahrrauch- bzw. -abgastemperatur) und/oder die minimal mögliche Rauch- bzw. Abgastemperatur (Inbetriebnahmerauch- bzw. -abgastemperatur) bei Vollast und voller Öffnung aller Drosseleinrichtungen und/oder bei Auftreten einer Abweichung der Rauch- bzw. Abgastemperatur unter die minimale Rauch- bzw. Abgastemperatur (Anfahrrauch- bzw. -abgastemperatur) und/oder die minimal mögliche Rauch- bzw. Abgastemperatur (Inbetriebnahmerauch- bzw. -abgastemperatur) bei Vollast und voller Öffnung aller Drosseleinrichtungen innerhalb einer vorgegebenen Zeitspanne zur Wahrnehmbarmachung dieser Unregelmäßigkeit aktivierbar ist bzw. sind.

- 51 -                                    0192227

Für den Fall der besonderen Ausführungsform der Erfindung mit Veränderung der dem im Heizungs- bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger kann gemäß einem untergeordneten Erfindungsgedanken zweckmäßig bei Auftreten einer Abweichung der Rauch- bzw. Abgastemperatur über die obere Grenze ihres vorgegebenen Sollwert-Bandes hinaus die Zufuhr von Betriebsenergie zum Wärme- bzw. Kälteerzeuger beendet und bei Auftreten einer Abweichung der Rauch- bzw. Abgastemperatur unter die untere Grenze ihres Sollwert-Bandes die Zufuhr von Betriebsenergie zum Wärme- bzw. Kälteerzeuger aufgenommen werden. Hierfür kann vorrichtungsseitig zweckmäßig vorgesehen sein, daß die Regeleinrichtung einen zeitlich getaktete Stellbefehle abgebenden Stellbefehlgeber aufweist, mittels dessen der Einrichtung zur Beeinflussung der Zufuhr der Betriebsenergie zum Wärme- bzw. Kälteerzeuger die Stellbefehle als Ein-Aus-Befehle zuführbar sind, wobei jeweils bei Ermittlung einer Abweichung der Rauch- bzw. Abgastemperatur über die obere Grenze ihres vorgegebenen Sollwert-Bandes hinaus durch einen Aus-Befehl die Zufuhr von Betriebsenergie zum Wärme- bzw. Kälteerzeuger sperrbar und bei Ermittlung einer Abweichung der Rauch- bzw. Abgastemperatur unter die untere Grenze ihres vorgegebenen Sollwert-Bandes durch einen Ein-Befehl die Zufuhr von Betriebsenergie zum Wärme- bzw. Kälteerzeuger freigebbar ist.

Für den selben Fall der besonderen Ausführungsform der Erfindung mit Veränderung der dem im Heizungs- bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger kann gemäß einem untergeordneten Erfindungsgedanken zweckmäßig bei Auftreten einer Abweichung der Rauch- bzw. Abgastemperatur über die obere Grenze ihres vorgegebenen Sollwert-Bandes hinaus das Zeitverhältnis der Ein- zur Ausschaltung der Zufuhr von Betriebsenergie zum Wärme- bzw. Kälteerzeuger entsprechend dem Maß der Abweichung der Rauch- bzw. Abgastemperatur verringert und bei Auftreten einer Abweichung der Rauch- bzw. Abgastemperatur unter die untere Grenze Ihres vorgegebenen Sollwert-Bandes das Zeitverhältnis der Ein- zur Ausschaltung der Zufuhr von Betriebsenergie zum Wärme- bzw. Kälteerzeuger entsprechend dem Maß der Abweichung der Rauch- bzw. Abgastemperatur erhöht werden. Hierfür kann vorrichtungsseitig zweckmäßig vorgesehen sein, daß die Regeleinrichtung einen zeitlich getaktete Stellbefehle abgebenden Stellbefehlgeber aufweist, mittels dessen der Einrichtung zur Beeinflussung der Zufuhr der Betriebsenergie zum Wärme- bzw. Kälteerzeuger die Stellbefehle als veränderbare Zeitverhältnisse der Ein- zur Ausschaltung der Zufuhr von Betriebsenergie zum Wärme- bzw. Kälteerzeuger zuführbar sind, wobei jeweils bei Ermittlung einer Abweichung der Rauch- bzw. Abgastemperatur über die obere Grenze ihres vorgegebenen Sollwert-Bandes hinaus die Zufuhr von Betriebsenergie zum Wärme- bzw. Kälteerzeuger durch ein kleineres Zeitverhältnis der Ein- zur Ausschaltung der Zufuhr von Betriebsenergie zum Wärme- bzw. Kälteerzeuger entsprechend dem Maß der Abweichung verringerbar und bei Ermittlung einer Abweichung der Rauch- bzw. Abgastemperatur unter die untere Grenze ihres vorgegebenen Sollwert-Bandes die Zufuhr von Betriebsenergie zum Wärme- bzw. Kälteerzeuger durch ein größeres Zeitverhältnis der Ein- zur Ausschaltung der Zufuhr von Betriebsenergie zum Wärme- bzw. Kälteerzeuger entsprechend dem Maß der Abweichung erhöhbar ist.

Bei mit diskontinuierlicher Zufuhr der Wärme- bzw. Kälteleistung zum Heizungs- bzw. Kühlmittelvorlauf arbeitenden Anlagen nach dem Stande der Technik, bei denen üblicherweise, jedoch keinesfalls notwendig, mit geringer Wärmeträgermediums-Vorlage gearbeitet wird, beispielsweise indem Kessel mit geringer Wasservorlage oder beispielsweise als Therme oder Geyser bezeichnete Durchlauferhitzer oder aber Wärmepumpen bzw. Kältemaschinen ohne Pufferspeicher als Wärme- bzw. Kälteerzeuger eingesetzt werden, ist weder die bekannte Regelung mit konstantem Sollwert des Gesamtmassenstroms als Führungsgröße noch eine der bekannten Nachführsteuerungen mit auf einer Temperatur des Wärmeträgermediums über einen willkürlich gewählten Rechenalgorithmus fußender Führungsgröße funktionsfähig, wie vorstehend bereits ausführlich erläutert. Herkömmliche Regelungen mit Führung über die Außentemperatur sind bei allen Systemen dieser Art, die eine verhältnismäßig große Spreizung zwischen Vorlauf- und Rücklauftemperatur des Wärmeträgermediums haben, nur schwer zu verwirklichen, weil nach Abschalten die Vorlauftemperatur zur Rücklauftemperatur wird und damit während der Ausszeit eine große Differenz zur eingestellten witterungsgeführten Vorlauftemperaturvorgabe auftritt. Hier müßte der Wärme- bzw. Kälteerzeuger ständig takten, um diese Temperatur zu halten, es sei denn, man würde künstliche Verzögerungsglieder etc. einsetzen oder eine so große Hysterese vorgeben, daß der Einfluß der Führung durch Außentemperatur bzw. Witterung praktisch ausgeschaltet wäre. Hier könnten weder auf Implementierung in der Regeleinrichtung beruhende Maßnahmen noch ein Referenzraum wirksam Abhilfe schaffen, der gleichfalls eine Zeitdehnung erbringen würde, weil sich der Raum nicht sofort erwärmt oder abkühlt, also selbst eine Zeitspreizungseinrichtung darstellt, die einen Zeitpuffer erbringt. Nicht zu übersehen ist ferner auch der sich hier einstellende Nachteil, daß stets ein gewisses Maß an Überversorgung an Energie vorzusehen ist, das heißt der Referenzraum temperaturmäßig um ein gewisses Maß zu hoch eingestellt werden muß, um zu vermeiden, daß die anderen Räume an Energieunterversorgung leiden.

Weiterhin zeichnet sich die Erfindung gegenüber dem Stand der Technik dadurch aus, daß dem Nutzer derselben durch diese erstmalig die Möglichkeit an die Hand gegeben ist, mit ein und derselben Regelungsvorrichtung nach der Erfindung nach seiner eigenen Wahl und Bestimmung unterschiedliche Betriebsarten zu ihm genehmen Zeiten auch bei einer Heizungs- bzw. Kühlanlage gattungsgemäßer Art mit Wärme- bzw. Kälteerzeuger, dem die Betriebsenergie diskontinuierlich zugeführt wird, einstellen zu können, indem für Komfortbetrieb, bei dem für mindestens einen zu temperierenden Raum eine im Vergleich zu dem bzw. den anderen zu temperierenden Raum bzw. Räumen vergleichsweise hohe bzw. niedrige Raumtemperatur aufrechtzuerhalten ist, eine geringe Bandbreite des Sollwert-Bandes der Rauch- bzw. Abgastempera-

0192227

tur mit größerem oberhalb einer willkürlich, vorzugsweise mit dem Wert der minimalen Rauch- bzw. Abgastemperatur (Anfahrrauch- bzw. abgastemperatur) oder der minimal möglichen Rauch- bzw. Abgastemperatur (Inbetriebnahmerauch- bzw. -abgastemperatur) gewählten Referenztemperatur und geringerem unterhalb dieser Referenztemperatur liegendem Anteil dieser Bandbreite bei hoher oberer und/oder unterer Grenze des Sollwert-Bandes der Rauch- bzw. Abgastemperatur und/oder für Normalbetrieb, bei dem für alle zu temperierenden Räume eine etwa gleiche Raumtemperatur von für gutes Behaglichkeitsgefühl ausreichender Höhe aufrechtzuerhalten ist, eine mittlere Bandbreite des Sollwert-Bandes der Rauch- bzw. Abgastemperatur mit mittlerem oberhalb einer willkürlich, vorzugsweise mit dem Wert der minimalen Rauch bzw. Abgastemperatur (Anfahrrauch- bzw. -abgastemperatur) oder der minimal möglichen Rauch- bzw. Abgastemperatur (Inbetriebnahmerauch- bzw. -abgastemperatur) gewählten Referenztemperatur und mittlerem unterhalb dieser Referenztemperatur liegendem Anteil dieser Bandbreite bei mittlerer oberer und/oder unterer Grenze des Sollwert-Bandes der Rauch- bzw. Abgastemperatur und/oder für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, eine vergleichsweise große Bandbreite des Sollwert-Bandes der Rauch- bzw. Abgastemperatur mit geringerem oberhalb einer willkürlich, vorzugsweise mit dem Wert der minimalen Rauch- bzw. Abgastemperatur (Anfahrrauch- bzw. -abgastemperatur) oder der minimal möglichen Rauch- bzw. Abgastemperatur (Inbetriebnahmerauch- bzw. -abgastemperatur) gewählten Referenztemperatur und größerem unterhalb dieser Referenztemperatur liegendem Anteil dieser Bandbreite bei vergleichsweise niedriger oberer und/oder unterer Grenze des Sollwert-Bandes der Rauch- bzw. Abgastemperatur und/oder speziell für Beheizung von Räumen für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, eine besonders große Bandbreite des Sollwert-Bandes der Rauch- bzw. Abgastemperatur mit praktisch vollständig unterhalb einer willkürlich, vorzugsweise mit dem Wert der minimalen Rauch- bzw. Abgastemperatur (Anfahrrauch- bzw. -abgastemperatur) oder der minimal möglichen Rauch- bzw. Abgastemperatur (Inbetriebnahmerauch- bzw. -abgastemperatur) gewählten Referenztemperatur und/oder mit allenfalls geringfügig oberhalb dieser Referenztemperatur liegender, vorzugsweise dieser entsprechender oberer Grenze des Sollwert-Bandes der Rauch- bzw. Abgastemperatur und/oder mit auf einem besonders niedrigen Wert, vorzugsweise nur geringfügig über der zulässigen Rauch- bzw. Abgasmindesttemperatur liegender, beispielsweise dem der Umgebungstemperatur des Wärme- bzw. Kälteerzeugers entsprechenden Wert willkürlich gewählter unterer Grenze des Sollwert-Bandes der Rauch- bzw. Abgastemperatur vorgegeben wird. Entsprechend kann vorrichtungstechnisch die Regeleinrichtung eine Speichereinrichtung, in der mindestens zwei, vorzugsweise mehr, bevorzugte Paarungen von Ober- und Untergrenzen des Sollwert-Bandes der Rauch- bzw. Abgastemperatur, wie beispielsweise für Komfort- , Normal , Spar- , Nachtabsenkungs- oder Frostschutzbetrieb, gespeichert sind, und eine über zumindest eine Impulsleitung mit dieser verbundene Umschalteinrichtung zur Ausschaltung der Wirkung einer und Einschaltung der Wirkung einer anderen dieser bevorzugten Paarungen aufweisen, die über jeweils eine Impulsleitung mit zumindest einer der etwa vorhandenen Sollwert-Bildungseinrichtungen für die obere bzw. untere Grenze des Sollwert-Bandes der Rauch- bzw. Abgastemperatur oder mit der oder zumindest einer der etwa vorhandenen Programmspeichereinrichtung(en) für die Beeinflussung des Sollwert-Bandes der Rauch- bzw. Abgastemperatur oder mit zumindest einer etwa vorhandenen Verstelleinrichtung für diese oder mit zumindest einem Sollwertgeber verbunden ist. Zweckmäßig können dabei in der Speichereinrichtung die bevorzugten Paarungen von Ober- und Untergrenzen des Sollwert-Bandes der Rauch- bzw. Abgastemperatur mit in Richtung zunehmender Werte derselben vorzugsweise proportional geringer werdendem Unterschied und/oder Verhältnis des oberhalb und des unterhalb der gewählten Referenztemperatur liegenden Anteils der Bandbreite dieses Sollwert-Bandes gespeichert sein. Durch diese Möglichkeit der Wahl der Bänder wird dem Nutzer der Erfindung bzw. dem Betreiber der mit dieser ausgerüsteten Heizungs- bzw. Kühlanlage die Möglichkeit gegeben, diese einerseits mit lokal unterschiedlich verteilten Wärme- bzw. Kältelasten zu fahren, beispielsweise im Heizbetrieb bei Nutzung des Komfort-Bandes, das er im übrigen nicht über das gesamte Jahr zu benutzen braucht, sondern nur nach Wunsch bzw. Bedürfnis, dabei aber eine besondere Wirtschaftlichkeit trotz Offenhaltung aller Möglichkeiten für die Aufrechterhaltung praktisch beliebig hoher Raumtemperaturen in einem Teil der zu beheizenden Räume dadurch erreichen zu können, daß er zu Zeiten geringeren Wärmebedarfs ein ökonomischerem und auch ökologisch günstigerem Betrieb entsprechendes Sollwert-Band, beispielsweise ein Normal- oder Spar-Band, den Regelungsbetrieb bestimmen läßt, bei dem alle anderen Räume mit vergleichsweise viel niedrigeren Wärmelasten bzw. Raumtemperaturen bedient werden. Entsprechendes gilt natürlich auch für Kühlbetrieb. Dabei liegt die besondere Wirtschaftlichkeit darin, daß nicht immer mit der größten Lastspitze gefahren werden muß, sondern man sich für die Zeiten geringerer Wärme- bzw. Kältelast, wie etwa bei Heizbetrieb beispielsweise jahreszeitlich bedingt im Sommerbetrieb und/oder nutzerbezogen bei Nachtabsenkung, mit einem günstigeren Sollwert-Band der Rauch- bzw. Abgastemperatur zufrieden geben kann. Dies ist bei herkömmlichen Regelungsarten nicht möglich. Hier muß für einen bestimmten zeitlich nur begrenzt auftretenden Bedarfsfall für das ganze Jahr oder auch über die gesamte Tageszeit ausreichend Wärme- bzw. Kälteleistung vorgehalten werden, das heißt, daß in den Zeiten ohne diesen Bedarfsfall sehr unwirtschaftlich gefahren wird, oder der Betreiber einer solchen Heizungs- bzw. Kühlanlage muß für jeden Bedarfsfall ständig seine Heizkurve umstellen.

Somit erbringt die Erfindung die Möglichkeit, jederzeit wunschgemäß von einer Betriebsart mit Aufrechterhaltung einer bei Heizbetrieb extrem hohen bzw. bei Kühlbetrieb extrem tiefen Temperatur in einem Teilbereich der mit der betreffenden Heizungs- bzw. Kühlanlage zu bedienenden Räume auf eine andere Betriebsart mit bei Heizbetrieb niedrigerer bzw. bei Kühlbetrieb höherer benötigter Raumtemperatur in dem betreffenden Teilbereich der mit der Heizungs- bzw. Kühlanlage zu bedienenden Räume umschalten zu können, was natürlich die vorteilhafte Folge hat, daß bei solcher Betriebsarten-Umschaltung in dieser Richtung die zu verkraftenden Wärmeverluste sowohl durch Wärme- bzw. Kälteableitung als auch durch Wärme- bzw. Kälteabstrahlung (Wärmeeinstrahlung) geringer werden, wobei erfindungsgemäß weder der Zahl solcher Umschaltvorgänge noch der Art der Umschaltung eine Grenze gesetzt ist, indem nämlich diese Umschaltung von einer Betriebsart auf die andere und wieder zurück auch kontinuierlich erfolgen kann.

Bei einer Ausführung der Erfindung mit Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger kann es besonders zweckmäßig sein, wenn in erfinderischer Fortbildung bei Auftreten einer Abweichung der Rauch- bzw. Abgastemperatur über die obere Grenze ihres vorgegebenen Sollwert-Bandes hinaus die Zufuhr von Betriebsenergie zum Wärme- bzw. Kälteerzeuger in Abhängigkeit von dieser Abweichung verringert und bei Auftreten einer Abweichung der Rauch- bzw. Abgastemperatur unter die untere Grenze ihres vorgegebenen Sollwert-Bandes die Zufuhr von Betriebsenergie zum Wärme- bzw. Kälteerzeuger in Abhängigkeit von dieser Abweichung vergrößert wird. Entsprechend kann vorrichtungsseitig zweckmäßig vorgesehen sein, daß die Regeleinrichtung einen einen während der Betriebsdauer des Wärme- bzw. Kälteerzeugers ständig vorhandenen modulierten Stellbefehl abgebenden Stellbefehlgeber aufweist, mittels dessen der Einrichtung zur Beeinflussung der Zufuhr der Betriebsenergie zum Wärme- bzw. Kälteerzeuger die Stellbefehle als betragsmäßige Modulationsunterschiede eines während der Betriebsdauer ständig anstehenden Betriebsbefehls zuführbar sind, wobei jeweils bei Ermittlung einer Abweichung der Rauch- bzw. Abgastemperatur über die obere Grenze ihres vorgegebenen Sollwert-Bandes hinaus die Zufuhr von Betriebsenergie zum Wärme- bzw. Kälteerzeuger in Abhängigkeit von dieser Abweichung verringerbar und bei Ermittlung einer Abweichung der Rauch- bzw. Abgastemperatur unter die untere Grenze ihres vorgegebenen Sollwert-Bandes die Zufuhr von Betriebsenergie zum Wärme- bzw. Kälteerzeuger in Abhängigkeit von dieser Abweichung vergrößerbar ist.

Während bei herkömmlichen Regelungen mit kontinuierlicher Einspeisung der Wärme- bzw. Kälteleistung in den Heizungs- bzw. Kühlmittelvorlauf der Vorteil der Kontinuität nur so ausgenutzt wird, daß bei diesen Regelungen die Kontinuität lediglich auf äußere Systemgrößen gerichtet ist, wie beispielsweise das Halten einer Vorlauftemperatur als Funktion der Außentemperatur oder einer Referenzraumtemperatur, und damit nicht der wahre Verbrauch des Benutzers, sondern eine an sich systemwidrige physikalische Größe nachgefahren wird, was dazu führt, daß sich praktisch alle automatisch wirkenden Drosseleinrichtungen in einer bei Heizbetrieb zu großen Schließstellung bzw. in einer bei Kühlbetrieb zu geringen Öffnungsstellung befinden, weil Fremdeinflüsse hier praktisch nicht erfassbar sind, bietet diese erfinderische Fortbildung der Erfindung eine echte auch die inneren physikalischen Einflussgrößen des Systems berücksichtigende Bezugsgröße in Form der sich im Betrieb automatisch einstellenden Änderungen der Rauch- bzw. Abgastemperatur, die es erlaubt, die Leistung des Wärme- bzw. Kälteerzeugers exakt auf den im jeweiligen Zeitpunkt bzw. im Verlauf der Betriebszeit jeweils auftretenden Wärme- bzw. Kälteenergiebedarf abzustimmen und die Regelung zudem auch noch besonders feinstufig kontinuierlich diesem tatsächlichen Verbrauch nachfahren zu können.

Eine andere alternative Ausgestaltung der Erfindung befaßt sich mit der Regelung mit Veränderung der dem im Heizungs- bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, und sieht in nicht naheliegender Weise vor, daß bei Auftreten einer Abweichung der Rauch- bzw. Abgastemperatur über die obere oder unter die untere Grenze ihres vorgegebenen Sollwert-Bandes die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung verändert wird. Hierfür kann vorrichtungsseitig zweckmäßig als über die Steuerleitung mit der Regeleinrichtung verbundene Einrichtung zur Beeinflussung der in den Heizungs- bzw. Kühlmittelvorlauf eingespeisten Wärme- bzw. Kälteleistung eine Mehrwege-Mischeinrichtung, wie beispielsweise ein den jeweiligen Wärmeträgermediumsausgang des Wärme- bzw. Kälteerzeugers einerseits mit dem Heizungs- bzw. Kühlmittelvorlauf und andererseits einer vom Heizungs- bzw. Kühlmittelrücklauf kommenden Beimischleitung für Wärmeträgermedium verbindender Drei-Wege-Mischer oder ein den Wärmeträgermediumsausgang des Wärme- bzw. Kälteerzeugers und/oder den Heizungs- bzw. Kühlmittelrücklauf jeweils mit dem Heizungs- bzw. Kühlmittelvorlauf sowie den Wärmeträgermediumsausgang des Wärme- bzw. Kälteerzeugers und/oder den Heizungs- bzw. Kühlmittelrücklauf mit einer an den Wärmeträgermediumseingang des Wärme- bzw. Kälteerzeugers angeschlossenen Rückführleitung verbindender Vier-Wege-Mischer, vorgesehen sein, wobei die Regeleinrichtung einen einen während der Betriebsdauer der Vorrichtung ständig vorhandenen modulierten Stellbefehl abgebenden Stellbefehlgeber aufweist, mittels dessen dem Antrieb der Mehrwege-Mischeinrichtung die Stellbefehle als betragsmäßige Modulationsunterschiede eines während der Betriebsdauer der Vorrichtung ständig anstehenden Betriebsbefehls zuführbar sind, wobei jeweils bei Ermittlung einer Abweichung der Rauch- bzw. Abgastemperatur über die obere oder unter die untere Grenze ihres vorgegebenen Sollwert-Bandes die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung veränderbar ist.

In weiterer zweckmäßiger Fortbildung dieses untergeordneten Erfindungsgedankens kann der Anteil des vom Wärme- bzw. Kälteerzeuger her in den Heizungs- bzw. Kühlmittelvorlauf eingespeisten Massenstroms am Gesamtmassenstrom bei Auftreten einer Abweichung der Rauch- bzw. Abgastemperatur über die obere Grenze ihres vorgegebenen Sollwert-Bandes hinaus verringert und bei Auftreten einer Abweichung der Rauch- bzw. Abgastemperatur unter die untere Grenze ihres vorgegebenen Sollwert-Bandes vergrößert werden. Hierfür kann vorrichtungsseitig zweckmäßig ein einen modulierten kontinuierlichen Stellbefehl abgebender Stellbefehlgeber vorgesehen sein, mittels dessen der Antrieb der Mehrwege-Mischeinrichtung in dem Sinne betätigbar ist, daß der Anteil des vom Wärme- bzw. Kälteerzeuger her in den Heizungs- bzw. Kühlmittelvorlauf eingespeisten Massenstroms zum Gesamtmassenstrom bei Ermittlung einer Abweichung der Rauch- bzw. Abgastemperatur über die obere Grenze ihres vorgegebenen Sollwert-Bandes hinaus verringerbar und bei Ermittlung einer Abweichung unter die untere Grenze ihres vorgegebenen Sollwert-Bandes vergrößerbar ist.

Abgesehen davon, daß sich bei Nutzung der Erfindung in Verbindung mit Mehrwege-Mischern welcher Ausführung auch immer die gleichen Vorteile ergeben, wie diese bereits im Zusammenhang mit kontinuierlich arbeitenden Systemen beschrieben sind, stellt sich bei dieser Variante der Erfindung zusätzlich noch eine weitere Zahl gern genutzter weiterer Vorteile ein. Zwar ist grundsätzlich eine im Ein-Aus-Betrieb arbeitende Heizungs- bzw. Kühlanlage bzw. -vorrichtung im allgemeinen billiger als eine kontinuierlich arbeitende entsprechende Anlage bzw. Vorrichtung, es hat sich jedoch herausgestellt, daß im ersteren Fall auch bei Nutzung der Erfindung ein breiteres Sollwert-Band für die Rauch- bzw. Abgastemperatur zu wählen ist als bei einer kontinuierlich arbeitenden Anlage bzw. Vorrichtung, weil der Ein-Aus-Betrieb prinzipiell immer um ein bestimmtes Maß zu viel Energie abgibt, man also dann, wenn man ein zu schmales Band gewählt hat, zu viele Schaltspiele erhält, was aus vorstehend bereits beschriebenen Gründen unerwünscht ist. Um das zu mindern und zu einem energiesparenderen schmaleren Sollwert-Band für die Rauch- bzw. Abgastemperatur zu kommen, nutzt die Erfindung in ihrer mit Mehrwege-Mischern arbeitenden Ausführungsform die Glättungsfunktion eines solchen Mischers aus, indem dessen Sollwert-Band, das heißt das Sollwert-Band für die Verstellung seines Ventilgliedes, schmaler gehalten werden kann. Die sich hierdurch überraschend einstellende günstige Folge ist, daß hierdurch mit geringem Mehraufwand für den Mehrwege-Mischer das diskontinuierlich arbeitende System zu einem quasi-kontinuierlich arbeitenden System mit allen Vorteilen eines kontinuierlich arbeitenden Systems gemacht werden kann. Hierdurch werden ferner auch die Nachteile eines in herkömmlicher Weise mit außentemperaturgeführtem Mischer arbeitenden Systems, bei dem dem Mischer in Abhängigkeit von der Außentemperatur ein Vorlaufsollwert aufgeprägt wird, so daß er zwar diesem kontinuierlich, aber schon kontinuierlich systemwidrig und nicht auf den tatsächlichen Bedarf abgestellt nachfährt, ausgeschaltet, die im übrigen die gleichen sind wie für eine Anlage mit beispielsweise kontinuierlich witterungsgeführtem Brenner.

Auch für Heizungs- bzw. Kühlverfahren bzw. -anlagen mit kontinuierlicher Zuführung der Betriebsenergie zum Wärme- bzw. Kälteerzeuger und/oder mit Mehrwege-Mischeinrichtung zeichnet sich die Erfindung gegenüber dem Stand der Technik dadurch aus, daß hier gleichermaßen dem Nutzer derselben erstmalig die Möglichkeit an die Hand gegeben ist, mit ein und derselben Regelungsvorrichtung nach der Erfindung nach seiner eigenen Wahl und Bestimmung unterschiedliche Betriebsarten zu ihm genehmen Zeiten einstellen zu können, indem für Komfortbetrieb, bei dem für mindestens einen zu temperierenden Raum eine im Vergleich zu dem bzw. den anderen zu temperierenden Raum bzw. Räumen vergleichsweise hohe bzw. niedrige Temperatur aufrechtzuerhalten ist, eine große Bandbreite des Sollwert-Bandes der Rauch- bzw. Abgastemperatur bei hoher oberer und/oder unterer Grenze desselben und/oder für Normalbetrieb, bei dem für alle zu temperierenden Räume eine etwa gleiche Raumtemperatur von für gutes Behaglichkeitsgefühl ausreichender Höhe aufrechtzuerhalten ist, eine mittlere Bandbreite des Sollwert-Bandes der Rauch- bzw. Abgastemperatur bei mittlerer oberer und/oder unterer Grenze desselben und/oder für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, eine vergleichsweise geringe Bandbreite des Sollwert-Bandes der Rauch- bzw. Abgastemperatur bei vergleichsweise niedriger oberer und/oder unterer Grenze desselben und/oder speziell für Beheizung von Räumen für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, eine nur geringfügig über dem Verschwindwert liegende Bandbreite des Soll-wert-Bandes der Rauch- bzw. Abgastemperatur bei auf einem extrem niedrigen, allenfalls geringfügig oberhalb einer willkürlich, beispielsweise mit dem Wert der minimalen Rauch- bzw. Abgastemperatur (Anfahrrauch- bzw. -abgastemperatur) oder der minimal möglichen Rauch- bzw. Abgastemperatur (Inbetriebnahmerauch- bzw. -abgastemperatur) gewählten Referenztemperatur, vorzugsweise auf einem dieser Referenztemperatur entsprechenden Wert liegender oberer und/oder unterer Grenze des Sollwert-Bandes der Rauch- bzw. Abgastemperatur vorgegeben wird. Entsprechend kann vorrichtungstechnisch auch hier die Regeleinrichtung eine Speichereinrichtung, in der mindestens zwei, vorzugsweise mehr, bevorzugte Paarungen von Ober- und Untergrenzen des Sollwert-Bandes der Rauch- bzw Abgastemperatur, wie beispielsweise für Komfort- , Normal- , Spar- , Nachtabsenkungs- oder Frostschutzbetrieb, gespeichert sind, und eine über zumindest eine Impulsleitung mit dieser verbundene Umschalteinrichtung zur Ausschaltung der Wirkung einer und Einschaltung der Wirkung einer anderen dieser bevorzugten Paarungen aufweisen, die über jeweils eine Impulsleitung mit zumindest einer der etwa vorhandenen Soll- wert-Bildungseinrichtungen für die obere bzw. untere Grenze des Sollwert-Bandes der Rauch- bzw. Abgastemperatur oder mit der oder zumindest einer der etwa vorhandenen Programmspeichereinrichtung(en) für die Beeinflussung des Sollwert-Bandes der Rauch- bzw. Abgastemperatur oder mit zumindest einer etwa vorhandenen Verstelleinrichtung für diese oder mit zumindest einem Sollwertgeber verbunden ist. Zweckmäßig können dabei hier in der Speichereinrichtung die bevorzugten Paarungen von Ober- und Untergrenzen des Sollwert-Bandes der Rauch- bzw. Abgastemperatur mit in Richtung zunehmender Werte derselben vorzugsweise proportional größer werdendem Unterschied und/oder Verhältnis von jeweiliger oberer und unterer Grenze der Rauch- bzw. Abgastemperatur gespeichert sein. Auch hier wird durch diese Möglichkeit der Wahl der Bänder dem Nutzer der Erfindung bzw. dem Betreiber der mit dieser ausgerüsteten Heizungs- bzw. Kühlanlage die Möglichkeit gegeben, diese einerseits mit lokal unterschiedlich verteilten Wärme- bzw. Kältelasten zu fahren, beispielsweise im Heizbetrieb bei Nutzung des Komfort-Bandes die gleichen Vorteile zu erzielen, wie bereits im Zusammenhang mit einer diskontinuierlich betriebenen Anlage beschrieben, und andererseits Umschaltungen von einer Betriebsart in bzw. auf die andere und wieder zurück je nach Belieben auch kontinuierlich vornehmen zu können. Aus diesem Grunde kann auf die vorstehenden Ausführungen zu einer Anlage mit in diskontinuierlichem Betrieb arbeitendem Wärme- bzw. Kälteerzeuger in vollem Umfange Bezug genommen werden.

Es ist im Rahmen der Erfindung auch möglich, die Bandbreite des Sollwert-Bandes der Rauch- bzw. Abgastemperatur mit ihrem Verschwindwert vorzugeben. Es hat sich nämlich überraschend gezeigt, daß es für kontinuierlich betriebene Systeme gattungsgemäßer Art, seien es nun solche mit Wärme- bzw. Kälteerzeuger mit kontinuierlicher Zufuhr ihrer Betriebsenergie oder aber solche mit Mehr- wege-Mischeinrichtung, abhängig von der speziellen Ausführungsart des betreffenden Wärme- bzw. Kälteerzeugers und/oder der speziellen

0192227

Art der Ausgestaltung der Führung des Rauch- bzw. Abgases durchaus möglich ist, einzelne Betriebsarten, wie Komfort- , Normal- , Nachtabsenkungs- , Spar- und/oder gegebenenfalls auch Frostschutzbetrieb auch so fahren zu können, daß man keine Nachteile aus einer zu großen Häufigkeit von Stellbefehlen für die Regelung der in den Heizungs- bzw. Kühlmittelvorlauf eingespeisten Wärme- bzw. Kälteleistung in Kauf nehmen muß. Dies wird gemäß diesem untergeordneten Erfindungsgedanken für diese speziellen Einsatzfälle in höchst einfacher und in jeder Hinsicht kostengünstiger Weise dadurch erreicht, daß man die genannten Betriebsarten sogar mit einer Bandbreite zu fahren in der Lage ist, die so klein sein kann, daß man praktisch von einem Festwert als Sollgröße sprechen kann. Der besondere Vorteil hiervon ist, daß sich in jedem solchen Betriebsfall eine erwünschte Schärfung der Regelung nebst damit verbundenen Möglichkeiten für weitergehende Energieeinsparungen ergibt, ohne daß die Betriebssicherheit der Regelung durch zu große Anzahl von Regelungseingriffen gefährdet wäre. Insbesondere ist in diesem Zusammenhang hervorzuheben, daß eine besonders zweckmäßige, weil extrem energieeinsparungsbegünstigte Betriebsart darin liegt, daß man die entsprechend diesem Erfindungsgedanken extrem geringe Bandbreite der Rauch- bzw. Abgastemperatur in die Nähe der unteren Grenze des Sollwert-Bandes derselben legt.

Die Erfindung bietet gemäß einem weiteren untergeordneten Erfindungsgedanken aber auch noch eine andere bisher in der Fachwelt nicht für realisierbar gehaltene Möglichkeit der Verbesserung der Betriebsweise der Regelung im Sinne einer Vereinfachung und Verbilligung bei gleichzeitiger Einsparung technisch hochqualifizierten Inbetriebnahmepersonals mit langjähriger Erfahrung oder der Notwendigkeit zeit- und kostenaufwendiger Einweisungen des Benutzers. In dieser nicht naheliegenden Ausgestaltung schafft die Erfindung gemäß der dieser zugrundeliegenden untergeordneten Teilaufgabe erstmalig die Möglichkeit, der Regelung eine Art von systemimmanenter Intelligenz integrieren zu können. Hierfür sieht dieser untergeordnete Erfindungsgedanke vor, daß über eine vorbestimmte Zeitspanne die Anzahl der im Betrieb auftretenden Abweichungen der Rauch- bzw. Abgastemperatur über die obere und/oder unter die untere Grenze ihres Sollwert-Bandes und/oder die Anzahl der im Betrieb auftretenden Veränderungen in Form von Aufnahmen und/oder Beendigungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung gemessen und entsprechend der Abweichung dieser Anzahl von einer vorgegebenen Zahl solcher Abweichungen der Rauch- bzw. Abgastemperatur bzw. Veränderungen dieser Wärme- bzw. Kälteleistungszufuhr bzw. Änderungen der Stellung dieses Organs der Mehrwege-Mischeinrichtung das Sollwert-Band der Rauch- bzw. Abgastemperatur verändert wird.

Hierbei handelt es sich um eine Art Selbstlernvorgang, bei dem die Vorrichtung nach der Erfindung selbst die eigene ihr vorgegebene Bandbreite für das Sollwert-Band der Rauch- bzw. Abgastemperatur erfaßt, und zwar dies in Erfüllung einer weiteren zugrundeliegenden untergeordneten Teilaufgabe so, daß immer ein Optimum für Energieeinsparung bei Maximierung des Wartungsintervalls bzw. der Lebensdauer eingestellt wird. Der wichtige Vorteil hiervon ist, daß es für das Erreichen eines optimalen Betriebes bei der Ausgestaltung der Erfindung gemäß diesem untergeordneten Gedanken derselben praktisch nicht darauf ankommt, ob die eine oder beide Grenze(n) des Sollwert-Bandes der Rauch- bzw. Abgastemperatur von vornherein in der Nähe des optimalen Arbeitswertes eingestellt ist bzw. sind, vielmehr auch dann, wenn seitens des Installateurs oder des Betreibers einer mit der Erfindung in dieser Ausgestaltung ausgerüsteten Heizungs- bzw. Kühlanlage ungünstigere Werte für die Führungsgröße in Form des erfindungsgemäßen Sollwert-Bandes für die Rauch- bzw. Abgastemperatur eingestellt worden sein sollten, sich die Vorrichtung nach der Erfindung selbst durch Selbstbeobachtung, d. h. in zeitlicher Folge gewonnene Meßwertnahme und Verarbeitung dieser Meßwerte in geeigneter Weise ihr eigenes Sollwert-Band so verändert, daß es sowohl der eingestellten gewünschten Betriebsweise als auch den herrschenden systemimmanenten und/oder von der Außenumgebung aufgeprägten Einflüssen gerecht wird, wobei bei ungünstiger erstmaliger Wahl der einen oder beider Grenze(n) des Sollwert-Bandes lediglich eine verhältnismäßig geringfügig längere Zeit die Folge ist, bis die Vorrichtung nach der Erfindung in das jeweils optimale Sollwert-Band selbsttätig eingelaufen ist.

Für Fälle, in denen je nach Auslegung der Vorrichtung nach der Erfindung das Selbstlernen über die Rauch- bzw. Abgastemperatur unmittelbar erfolgen soll, kann in weiterer Verbesserung der Vorrichtung nach der Erfindung die Regeleinrichtung eine vorzugsweise über eine Impulsleitung mit der Meßeinrichtung für die Rauch- bzw. Abgastemperatur verbundene Zeitsteuereinrichtung zur Durchführung einer Mehrzahl von Messungen der Rauch- bzw. Abgastemperatur durch die Messeinrichtung oder zur Aufnahme und/oder zum Abruf eines Messwertes oder einer Mehrzahl von von der Messeinrichtung gelieferten Messwerten der Rauch- bzw. Abgastemperatur während einer vorgegebenen Zeitspanne, eine Vergleichseinrichtung zur Ermittlung der Größe und/oder Richtung einer etwaigen Abweichung dieser Messwerte über die obere und/oder unter die untere Grenze des vorgegebenen Sollwert-Bandes der Rauch- bzw. Abgastemperatur, eine Zähleinrichtung für die während dieser vorgegebenen Zeitspanne etwa aufgetretenen Abweichungen dieser Messwerte, eine Programmspeichereinrichtung für eine vorgegebene während dieser vorgegebenen Zeitspanne zulässige Zahl von im Betrieb auftretenden Abweichungen der Rauch- bzw. Abgastemperatur über die obere und/oder unter die untere Grenze ihres Sollwert-Bandes und eine Detektoreinrichtung zur Ermittlung einer etwaigen Abweichung der von der Zähleinrichtung ermittelten Anzahl während dieser vorgegebenen Zeitspanne etwa aufgetretener Messwertabweichungen von der durch die Programmspeichereinrichtung vorgegebenen für diese vorgegebene Zeitspanne zulässigen Zahl von Messwertabweichungen sowie eine über eine Impulsleitung mit zumindest einem der Sollwertgeber verbundene Einrichtung zur auto-

matischen Veränderung des Sollwert-Bandes bzw. zumindest einer seiner Grenzen in Abhängigkeit von dieser durch die Detektoreinrichtung ermittelten Abweichung der Anzahl aufgetretener Messwertabweichungen von der zulässigen Zahl derselben aufweisen. Soll hingegen bei entsprechender Ausgestaltung der Vorrichtung nach der Erfindung das Selbstlernen über die Schaltspiele derselben erfolgen, so kann gemäß einer erfinderischen Variante dieses letztgenannten untergeordneten Erfindungsgedankens mit Vorzug die Regeleinrichtung eine weitere Zähleinrichtung zur Ermittlung der Zahl der während einer vorgegebenen Zeitspanne im Betrieb auftretenden Veränderungen in Form von Aufnahmen und/oder Beendigungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehr- wege-Mischeinrichtung mit Zählwerk für diese Veränderungen, eine Programmspeichereinrichtung für eine vorgegebene während dieser vorgegebenen Zeitspanne zulässige Zahl solcher Veränderungen und eine Detektoreinrichtung zur Ermittlung einer etwaigen Abweichung der vom Zählwerk der weiteren Zähleinrichtung ermittelten Anzahl solcher während dieser vorgegebenen Zeitspanne etwa aufgetretener Veränderungen von der durch die Programmspeichereinrichtung vorgegebenen für diese vorgegebene Zeitspanne zulässigen Zahl solcher Veränderungen sowie eine über eine Impulsleitung mit dem Sollwertgeber verbundene Einrichtung zur automatischen Veränderung des Soll- wert-Bandes bzw. zumindest einer seiner Grenzen in Abhängigkeit von dieser durch die Detektoreinrichtung ermittelten Abweichung der Anzahl aufgetretener Veränderungen von der zulässigen Zahl derselben aufweisen.

Dabei kann in allen diesen Fällen das erwünschte Selbstlernen gemäß einer erfinderischen Weiterbildung dieses untergeordneten Erfindungsgedankens dadurch erfolgen, daß bei Messung einer gegenüber einer vorgegebenen Zahl von Abweichungen der Rauch- bzw. Abgastemperatur über die obere und/oder unter die untere Grenze ihres Sollwert-Bandes und/oder einer gegenüber einer vorgegebenen Zahl von Veränderungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung größeren Anzahl solcher Abweichungen der Rauch- bzw. Abgastemperatur bzw. Veränderungen dieser Wärme- bzw. Kälteleistungszufuhr bzw. Änderungen der Stellung dieses Organs der Mehrwege-Mischeinrichtung die obere und/oder die untere Grenze des Sollwert-Bandes der Rauch- bzw. Abgastemperatur in Richtung einer Vergrößerung der Differenz dieser beiden Grenzen verändert und bei Messung einer gegenüber der vorgegebenen Zahl von Abweichungen der Rauch- bzw. Abgastemperatur über die obere und/oder unter die untere Grenze ihres Sollwert-Bandes und/oder einer gegenüber der vorgegebenen Zahl von Veränderungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs der Mehrwege-Mischeinrichtung geringeren Anzahl solcher Abweichungen der Rauch- bzw. Abgastemperatur bzw. Veränderungen dieser Wärme- bzw. Kälteleistungszufuhr bzw. Änderungen der Stellung dieses Organs der Mehrwege-Mischeinrichtung die obere und/oder die untere Grenze des Sollwert-Bandes der Rauch- bzw. Abgastemperatur in Richtung einer Verringerung der Differenz dieser beiden Grenzen verändert wird.

Hervorzuheben ist, daß nicht nur die sich mit dem Optimieren der Regelkonstanten oder die sich mit der Meldung von Unregelmäßigkeiten oder aber auch die sich mit unterschiedlichen Betriebsarten, wie Komfort- , Normal- , Nachtabsenkungs- bzw. Nachterwärmungs- oder Sparbetrieb oder dergleichen befassenden Ausführungsformen der Er-

- 69 -

0192227

findung, sondern auch die sich mit der Ermittlung der geeigneten Grenzwerte für das die Führungsgröße für die erfindungsgemäße Regelung bildende Sollwert-Band der Rauch- bzw. Abgastemperatur und nicht zuletzt auch die sich mit dem Selbstlernen des von systemimmanenten ebenso wie von von außen her aufgeprägten Einflußgrößen abhängigen Optimierens dieser Führungsgröße befassenden Ausführungsformen der Erfindung aus Gründen insbesondere der Energieeinsparung und wirtschaftlichen Verfahrensführung für Kühlbetrieb insbesondere bei Nachterwärmung bereits prinzipiell wesentlich größere Bedeutung haben als für Heizbetrieb.

Wie eingangs bereits erläutert, ist es eine der Erfindung zugrundeliegende Teilaufgabe, für möglichst gute Universalität der Regelung sowohl von der verfahrensmäßigen Führung derselben als auch von seiten der vorrichtungsmäßigen Implementierung zu sorgen. Dieser Aufgabe wird an sich die Erfindung in allen ihren bereits beschriebenen Ausführungsformen zufriedenstellend gerecht. Allerdings hat sich überraschend herausgestellt, daß sich durch einen weiteren untergeordneten Erfindungsgedanken die Lösung speziell dieser untergeordneten Teilaufgabe der Universalität in dieser Richtung mit höchst einfachen und kostengünstigen Mitteln noch weiter verbessern bzw. vervollkommnen läßt, wobei gleichzeitig auch noch eine bisher in der Fachwelt nicht für möglich gehaltene Bewältigung einer anderen untergeordneten Teilaufgabe in gleich vorteilhafter Weise möglich wird, die darauf gerichtet ist, die stets vorhandene Antipodität zwischen einerseits ökologisch optimalem Betrieb einer Heizungs- bzw. Kühlanlage und andererseits der Betriebssicherheit derselben sowie auch der Wirtschaftlichkeit in jeder Richtung zufriedenstellend zu handhaben, und zwar dies alles unabhängig von der Art und Ausgestaltung sowohl der das Wärmeträgermedium führenden als auch der rauch- bzw. abgasbestrichenen Seite der Heizungs- bzw. Kühlanlage.

0192227

Der zusätzlich zur der Erfindung zugrundeliegenden Aufgabe diese weiteren untergeordneten Teilaufgaben unabhängig von der Art und Ausgestaltung der Heizungs- bzw. Kühlanlage als mit kontinuierlich oder diskontinuierlich mit Betriebsenergie gespeistem Wärme- bzw. Kälteerzeuger und/oder dabei mit Mehrwege-Mischeinrichtung arbeitendes System bewältigende Aspekt der Erfindung kennzeichnet sich verfahrensmäßig dadurch, daß zusätzlich zur Rauch- bzw. Abgastemperatur zu zwei unterschiedlichen Zeitpunkten, beispielsweise einerseits bei Inbetriebnahme des Verfahrens für Heizbetrieb oder für Kühlbetrieb und andererseits bei Heizbetrieb für Aufheizen nach einer Abkühlung bzw. bei Kühlbetrieb für Abkühlen nach einer Erwärmung an einem anderen Tag oder bei Heizbetrieb für Aufheizen nach einer Abkühlung bzw. bei Kühlbetrieb für Abkühlen nach einer Erwärmung an unterschiedlichen Tagen, die Temperatur des Wärmeträgermediums am Eintritt in den Heizungs- bzw. Kühlmittelvorlauf (Vorlauftemperatur) und/oder in der die die einzelnen Heizkörper bzw. Kühleinrichtungen durchströmenden Einzelmassenströme des Wärmeträgermediums zusammenfassenden Rücklaufleitung (Rücklauftemperatur) gemessen und die obere und/oder die untere Grenze des Sollwert-Bandes der Rauch- bzw. Abgastemperatur in Abhängigkeit vom jeweiligen Messwert der Temperatur des Wärmeträgermediums am Eintritt in den Heizungs- bzw. Kühlmittelvorlauf (Vorlauftemperatur) oder der Temperatur des Wärmeträgermediums in der die die einzelnen Heizkörper bzw. Kühleinrichtungen durchströmenden Einzelmassenströme desselben zusammenfassenden Rücklaufleitung (Rücklauftemperatur) oder des Unterschiedes dieser beiden Temperaturen (Vorlauf-Rücklauf-Temperaturdifferenz) verändert wird. Vorrichtungsseitig wird dem die Erfindung dadurch gerecht, daß eine über eine Messwertleitung mit der Regeleinrichtung verbundene Messeinrichtung zur kontinuierlichen oder in vorbestimmten Zeitabständen erfolgenden Messung der Temperatur des Wärmeträgermediums am Eintritt in den Heizungs- bzw. Kühlmittelvorlauf (Vorlauftemperatur) und/oder eine über eine Messwertleitung mit der Regeleinrichtung verbundene Messeinrichtung zur kontinuierlichen oder in vorbestimmten Zeitabständen erfolgenden Messung der Temperatur des Wärmeträgermediums am Eintritt in den Wärme- bzw. Kälteerzeuger (Rücklauftemperatur) vorgesehen ist und daß die Regeleinrichtung eine Zeitsteuereinrichtung zur zeitgleichen Einleitung zumindest jeweils einer, vorzugsweise jeweils einer Mehrzahl von Messung(en) der Rauch- bzw. Abgastemperatur und der Vorlauftemperatur und/oder der Rücklauftemperatur und/oder zur Abgabe jeweils zeitgleicher Messwerte dieser Temperaturen, die jeweils über vorzugsweise eine Messwertleitung mit der betreffenden Temperaturmesseinrichtung verbunden ist, sowie im Falle der Messung von Vorlauf- und Rücklauftemperatur des Wärmeträgermediums vorzugsweise eine über jeweils vorzugsweise gleichfalls eine Messwertleitung mit sowohl der Messeinrichtung für die Vorlauftemperatur als auch mit der Messeinrichtung für die Rücklauftemperatur verbundene Einrichtung zur Ermittlung der Differenz dieser beiden Temperaturen und der oder jeder dieser Temperaturmesseinrichtung(en) zugeordnet je eine über eine Impulsleitung mit der betreffenden Temperaturmesseinrichtung oder mit einer ihrerseits über eine Impulsleitung an diese angeschlossenen Messwertspeichereinrichtung zur Speicherung in vorbestimmter zeitlicher Folge nacheinander gewonnener Messwerte der Vorlauf- bzw. Rücklauftemperatur oder der Einrichtung zur Ermittlung der Differenz dieser beiden Temperaturen zugeordnet eine über eine Impulsleitung mit dieser oder mit einer ihrerseits über eine Impulsleitung an diese angeschlossenen Messwertspeichereinrichtung zur Speicherung in vorbestimmter zeitlicher Folge nacheinander ermittelter Werte der Differenz von Vorlauf- und Rücklauftemperatur des Wärmeträgermediums und/oder beiden Temperaturmesseinrichtungen und/oder einer etwa vorhandenen Einrichtung zur Ermittlung der Differenz von Vorlauf- und Rücklauftemperatur des Wärmeträgermediums zugeordnet eine über Impulsleitungen mit jeder dieser Temperaturmesseinrichtungen und/oder dieser Einrichtung zur Ermittlung der Differenz von Vorlauf- und Rücklauftemperatur oder mit einer oder je einer ihrerseits über jeweils eine Impulsleitung an die zugeordnete(n) Temperaturmesseinrichtung(en) bzw. die Einrichtung zur Ermittlung der Differenz von Vorlauf- und Rücklauftemperatur angeschlossenen Messwertspeichereinrichtung zur Speicherung in vorbestimmter zeitlicher Folge nacheinander gewonnener Messwerte der Vorlauf- bzw. Rücklauftemperatur bzw. der Differenz dieser beiden Temperaturen verbundene Einrichtung zur Ermittlung der Abweichung in vorbestimmter zeitlicher Folge nacheinander gewonnener Messwerte der Vorlauf- bzw. der Rücklauftemperatur bzw. der Differenz dieser beiden Temperaturen voneinander sowie eine oder je eine jeweils über eine Impulsleitung mit dieser Einrichtung zur Ermittlung solcher Abweichungen verbundene Einrichtung zur automatischen Verstellung, insbesondere Nachführverstellung, des bzw. der zugeordneten Sollwertgeber(s) für die obere und/oder die untere Grenze des Sollwert-Bandes der Rauch- bzw. Abgastemperatur in Abhängigkeit von der durch diese ermittelten Abweichungen von Vorlauftemperatur bzw. Rücklauftemperatur bzw. Differenz dieser beiden Temperaturen gebildeten Veränderung dieser Temperaturen bzw. Differenz derselben aufweist.

Ersichtlich koppelt dieser Aspekt der Erfindung die erfindungsgemäße Sollwert-Band-Vorgabe an die Vorlauf- und/oder Rücklauftemperatur des Wärmeträgermediums oder die Differenz dieser beiden Temperaturen an. Der Vorteil hiervon liegt darin, daß die gegenüber herkömmlichen Versuchen einer Steuerung bzw. Regelung der Temperatur von zu temperierenden Räumen überragende Regelung nach der Erfindung über ein Sollwert-Band der Rauch- bzw. Abgastemperatur des gattungsgemäß ausgeführten Wärme- bzw. Kälteerzeugers in dem Sinne noch unterstützend flankiert wird, daß eine kennfeldgeregelte Wärme- bzw. Kälteanlage geschaffen wird. Dies wiederum bringt aufgabengemäß den bisher in der Fachwelt für unerreichbar gehaltenen weiteren Vorteil mit sich, daß bereits herstellerseitig bei Kenntnis allein der Hydraulik der Wärmeträgermediumsseite des Wärme- bzw. Kälteerzeugers, erst recht aber dann, wenn - wie im Ersterstellungsfall einer solchen Anlage - auch die Kenntnis der Hydraulik der gesamten Wärmeträgerseite der Anlage einschließlich des bzw. der Verbraucher(s) vorliegt, komplette Kennfelder für einen solchen Wärme- bzw. Kälteerzeuger erstellt werden können, so daß die Regelung in Abhängigkeit aller Betriebsparameter, nämlich für alle Vor- und Rücklauftemperaturen und alle möglichen Systemzustände der Verbraucherseite hinsichtlich so-

wohl Betriebsqualität als auch Energieausbeute (Wirkungsgrad) als auch Umweltschutz so gefahren werden kann, daß ein optimales Soll-wert-Band der Rauch- bzw. Abgastemperatur im Sinne der Erfindung generiert werden kann. Erkennbar wird nämlich hierdurch in erfinderischer Weise erstmalig eine durch den Stand der Technik nicht zu verwirklichende Möglichkeit aufgezeigt, Wirtschaftlichkeit, Energieeinsparung, Betriebssicherheit, Umweltschutz, Kompaktheit und damit Optimierung der Gestehungs- und gleichzeitig auch Betriebskosten einer Heizungs- bzw. Kühlanlage gattungsgemäßer Art zu optimieren, und zwar dies zudem auch noch dadurch, daß die Regelung bereits herstellerseitig mit der hierfür erforderlichen universellen Intelligenz ausgestattet wird. Insbesondere durch diese Integration von Wärme- bzw. Kälteerzeuger inklusive Verteilung und Regelung der in den Heizungs- bzw. Kühlmittelvorlauf eingespeisten Wärme- bzw. Kälteleistung mit der Verbraucherseite einer solchen Heizungs- bzw. Kühlanlage wird es erstmalig möglich, zu weiteren signifikanten Energieeinsparungen bei sogar höherem Betriebskomfort und gleichzeitig größerer Betriebssicherheit zu kommen. Zusammenfassend ist festzustellen, daß durch die Parametrisierung der Führungsgröße für die Regelung über die Vorlauf- und/oder die Rücklauftemperatur des Wärmeträgermediums der Heizungs- bzw. Kühlanlage und/oder die Differenz dieser beiden Temperaturen eine in jeder Richtung einer Erhöhung der Möglichkeiten für weitere Energieeinsparungen entgegenkommende Steigerung der Feinstufigkeit und Direktheit der Regelung möglich ist.

Im übrigen hat es sich als höchst nützlich herausgestellt, wenn in weiterer zweckmäßiger Fortbildung der Erfindung die Regeleinrichtung in zwei miteinander verbundene Funktionsgruppen gegliedert ist, deren eine die Einrichtungen für die jeweiligen Funktionen umfaßt, die während der Heiz- bzw. Kühlperiode in der Regel nicht oder nur selten verändert werden, und vorzugsweise in der Nähe des Wärme- bzw. Kälteerzeugers und/oder eines etwaigen Drei- oder Vier-Wege-Mischers angeordnet ist, während die andere die Einrichtungen für die vom Benutzer einstellbaren Funktionen umfaßt und als Raumschaltstation in bequemer Nähe des Benutzers angeordnet ist. Die sich hieraus ergebenden Vorteile insbesondere bezüglich der speziellen Benutzerfreundlichkeit durch äußerste Bequemlichkeit der Handhabung der Erfindung bzw. der mit dieser ausgerüsteten Heizungs- bzw. Kühlanlage liegen auf der Hand.

Zusammenfassend ist festzustellen, daß die Erfindung nicht nur erstmalig die Möglichkeit schafft, je nach Wahl Heizungs- oder Kühlanlagen mit kontinuierlich oder im Ein-Aus-Betrieb erfolgender Zufuhr der Wärme- bzw. Kälteleistung ungeachtet der Art und Ausgestaltung des Wärme- bzw. Kälteerzeugers mit gerätemäßig gleichen Mitteln mit den entsprechenden Vorteilen bezüglich Lagerhaltung, Gestehungspreis, Montageaufwand etc. erstellen und/oder betreiben, sondern in allen Fällen auch noch in bisher nicht erreichbarer Weise energieverbrauchsmäßig optimiert fahren zu können, wobei im übrigen die Regelung nach der Erfindung in vielfältiger Weise sich selbst auch noch Selbstlernvorgängen im Sinne einer von einer Einflußnahme durch den Anlagenbetreiber unabhängigen automatischen Optimierung unterziehen kann. Die günstige Folge hiervon ist insbesondere auch eine besonders weitgehende Vermeidung von Stillstandsverlusten des Wärme- bzw. Kälteerzeugers und der sonstigen Teile der Anlage und insbesondere bei diskontinuierlich arbeitenden Systemen die Vermeidung eines häufigen Taktens, wobei die Regelung nach der Erfindung es überflüssig macht, Simulationen einzelner oder aller Räume des durch die betreffende Heizungs- bzw. Kühlanlage erfindungsgemäß zu beheizenden bzw. zu kühlenden Verbrauchers vorzunehmen oder spezielle dynamische Lastberechnungen mit im Einzelfall ohnehin nicht bekannten und allenfalls nur mühselig und aufwendig zu bestimmenden Wärmeleitungs- bzw. -durchgangswerten durchzuführen, Himmelsrichtungsbetrachtungen anzustellen, Klimazonen zu berücksichtigen und dergleichen.

Im übrigen ist darauf zu verweisen, daß, wenn vorstehend oder nachfolgend von Kesseln als Wärmeerzeugern gesprochen wird, dieser Begriff auch als gas- oder ölbefeuerte Durchlauferhitzer, sogenannte Thermen oder Geyser, arbeitende Geräte mitumfaßt, indem diese sich von den gemeinhin als Kessel bezeichneten Geräten grundsätzlich nur dadurch unterscheiden, daß sie im allgemeinen mit geringer Vorlage an Wärmeträgermedium arbeiten und entsprechend eine kleinere Wärmespeicherkapazität aufweisen.

Weiterhin umfaßt hier und im folgenden der Begriff "Heizkörper" ganz allgemein jede beliebige Art von Heizungseinrichtung, die mit Wärmeträgermedium gespeist wird, und zwar dies ungeachtet ihrer speziellen Ausführung beispielsweise als Radiator oder Konvektor oder als Mischform beider jeweils mit oder ohne Gebläse für Verbesserung der Wärmeabgabe. Generell gesagt ist der benutzte Begriff "Heizkörper" vom Heizungssystem her gesehen als dessen bzw. einer von dessen Wärmeenergieverbraucher(n) zu verstehen, wobei es auf die spezielle Ausgestaltung der Wärmeabgabe ebenso wenig ankommt wie auf den Einsatz einer solchen als "Heizkörper" bezeichneten Heizeinrichtung im Wohn- oder Gewerbe- oder Industriebereich beispielsweise auch als Industriehallen-Luftheizgerät.

In allen vorstehenden Betrachtungen wurde keine Bedeutung auf die Lage der oberen Grenze der Rauch- bzw. Abgastemperatur gelegt, sondern vielmehr davon ausgegangen, daß bei Vollast, jedoch völligem Schließen aller automatischen Drosselorgane der Heizkörper bzw. Kühleinrichtungen die Rauch- bzw. Abgastemperatur theoretisch bis auf sehr hohe Werte ansteigen kann. An dieser Stelle ist zu vermerken, daß es jedoch durchaus auch sinnvoll sein kann, neben der minimalen und/oder der minimal möglichen Rauch- bzw. Abgastemperatur auch eine Rauch- bzw. Abgastemperatur zu ermitteln, die durchaus wesentlich höher liegen kann als diese minimale bzw. minimal mögliche Rauch- bzw. Abgastemperatur, jedoch wesentlich niedriger als eine solche aus theoretischer Betrachtung gewonnene hohe Rauch- bzw. Abgastemperatur. Eine solche bei Vollast und völligem Schließen aller automatischen Drosselorgane der Heizkörper bzw. Kühleinrichtungen als Konstante der betreffenden Heizungs- bzw. Kühlanlage ermittelte Rauch- bzw. Abgastemperatur wäre als maximale Rauch- bzw. Abgastemperatur zu bezeichnen und läßt sich mit Vorteil dafür nutzen, von vornherein eine Korrektur des für die lagemäßige Wahl des Sollwert-Bandes nutzbaren Raumes im Sinne einer Stauchung dieses Sollwert-Bandes vorzugeben oder aber ein etwa vorgegebenes Programm eines solchen Sollwert-Bandes bzw. mehrerer solcher Sollwert-Bänder, wie beispielsweise im Fall vorprogrammierter Möglichkeiten für Einstellung unterschiedlicher Betriebsarten, nachträglich auf spezielle Eigenheiten der Heizungs- bzw. Kühlanlage optimierend abstimmen zu können.

Insgesamt gesehen liegt der Vorteil eines solchen Vorgehens nach der Erfindung darin, daß man sich mit höchst einfachen und wirtschaftlichen Mitteln auf jede Heizungs- bzw. Kühlanlage optimal adaptieren und damit sogar solche Heizungs- bzw. Kühlanlagen bedienen kann, bei denen sich Regeleingriffe in die Heizungs- bzw. Kühlanlage nicht so signifikant in Änderungen der Rauch- bzw. Abgastemperatur bemerkbar machen. Hierdurch lassen sich auch solche Systeme im Sinne der Erfindung fahren, die sonst wegen der Notwendigkeit kleinster Regelbereiche unter Umständen hätten ausgeschlossen sein können.

Im folgenden wird die Erfindung anhand einiger bevorzugter Ausführungsbeispiele, die in den Zeichnungen lediglich schematisch dargestellt sind, rein beispielsweise näher erläutert. Dabei zeigen:

Fig. 1 eine schematische Darstellung einer die Erfindung verkörpernden Heizungsanlage in Einstrang-Bauweise mit in zwei Funktionsgruppen gegliederter Regeleinrichtung,

Fig. 2 in der Darstellung gemäß Fig. 1 entsprechender Darstellung eine andere Ausführungsform der Erfindung in Form einer Heizungsanlage in Zweistrang-Bauweise mit einem Vier-Wege-Mischer als Mehrwege-Mischeinrichtung und einer nicht aufgegliederten Regeleinrichtung, und

Fig.3 einen Ausschnitt aus der der Ausführungsform gemäß Fig. 2 entsprechenden Ausführung der Erfindung, bei der jedoch ein Drei-Wege-Mischer als Mehrwege-Mischeinrichtung eingesetzt ist,

Gleiche Bezugszeichen bezeichnen dabei jeweils gleiche Einzelheiten der Ausführungsbeispiele.

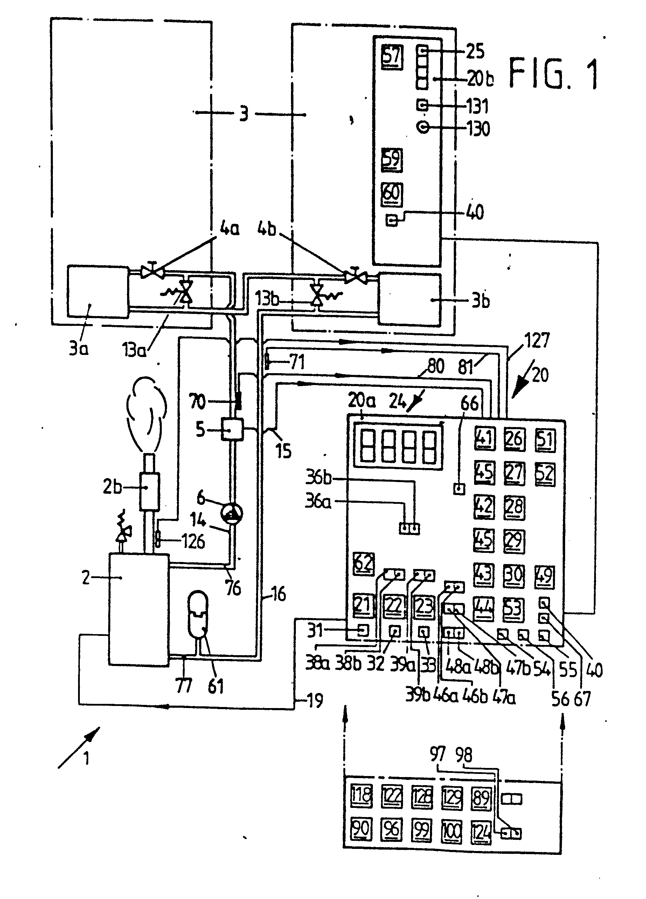

Die als Ganzes mit 1 bezeichnete Heizungsvorrichtung nach der Erfindung weist beim Ausführungsbeispiel gemäß Fig. 1 einen Wärmeerzeuger 2 auf, der als Wärmepumpe in Kompressions- oder Sorptionsbauweise mit einem sekundärseitig in das das Wärmeträgermedium führende Rohrleitungssystem eingeschalteten Wärmetauscher ausgebildet sein kann, wobei diesem Wärmetauscher die erforderliche Wärmeenergie mittelbar in Form eines in einem nicht näher dargestellten Kreislaufs zirkulierenden und ihn primärseitig beaufschlagenden Primärwärmeträgermediums von einer beispielsweise als verbrennungsmotorisch betriebene Kompressionswärmepumpe oder als mit fossilem Brennstoff betriebene Sorptionswärmepumpe ausgebildeten Wärmepumpen zugeführt wird. In beiden Fällen handelt es sich um ein sogenanntes offenes Zuführungssystem, da stets ein Teil der zugeführten Betriebsenergie als Rauch- bzw. Abgas über den Auspuff oder den Schornstein verloren geht. Die Zuführung der Betriebsenergie zum Wärmeerzeuger 2 erfolgt hier mittelbar, weil dem Wärmetauscher desselben ein Kreislauf mit Primärwärmeträgermedium vorgeschaltet ist, dem seinerseits die Wärmeenergie im Falle der Ausbildung als Kompressionswärmepumpe über den bzw. die Verbrennungsmotor(en) des Kompressors bzw. der Kompressoren und im Falle der Ausführung als Sorptionswärmepumpe über deren Kocher zugeführt wird.

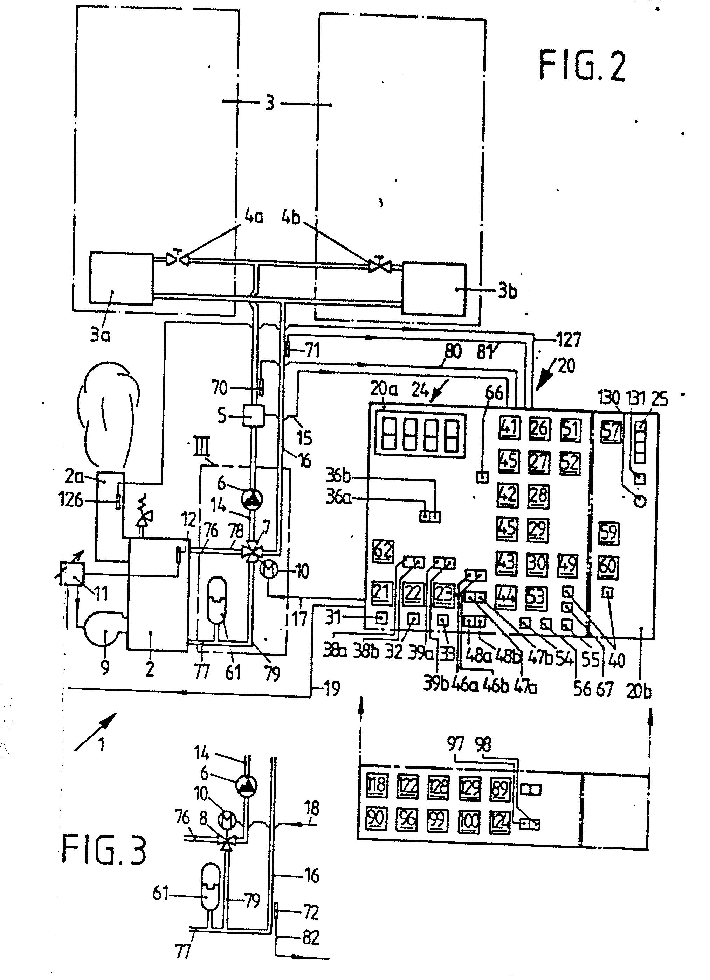

Statt der dargestellten Ausführung könnte auch ein brennstoffbefeuerter Heizkessel eingesetzt sein, wie letzterer in Fig. 2 rein beispielsweise dargestellt ist. Dann würde es sich hierbei um eine unmittelbare Zuführung der Betriebsenergie zum Wärmeerzeuger 2 bzw. dessen Wärmetauscher handeln, da dieser primärseitig von den heißen Rauchgasen direkt umspült wird. Die Darstellung des Wärmeerzeugers in Fig. 1 soll demgemäß nur beispielhaft eine von vielen möglichen Ausführungsformen eines Wärmeerzeugers symbolisieren.

Der Wärmeerzeuger 2 ist mit seinem Wärmeträgermediumsausgang 76 an die Vorlaufleitung 14 des das Wärmeträgermedium führenden Leitungssystems angeschlossen, das seinerseits - wie aus Fig. 1 ersichtlich - als Einstrang-System ausgebildet ist, indem nämlich der Heizungsvorlauf 14, in den eine Umwälzpumpe 6 beliebiger Ausführung bzw. Bauweise eingeschaltet ist, über eine automatische Drosseleinrichtung 4a zu einem Heizkörper 3a eines von mehreren, im dargestellten Ausführungsbeispiel zwei Räumen, führt, von dem dann eine Weiterführungsleitung zu einer weiteren automatischen Drosseleinrichtung 4b eines einem anderen Raum des als Ganzes mit 3 bezeichneten, mehrere Räume aufweisenden Wärmeverbrauchers zugeordneten weiteren Heizkörpers 3b führt. Dieser letzte Heizkörper der in Einstrang-Bauweise ausgeführten Heizungsvorrichtung 1 ist über eine Heizungsrücklaufleitung 16 an den Wärmeträgermediumseingang 77 des Wärmeerzeugers 2 angeschlossen. Die Zuläufe und Abläufe zu bzw. von den einzelnen Heizkörpern 3a bzw. 3b sind jeweils durch eine Überströmleitung kurzgeschlossen, in welche jeweils ein druckeinstellbares Überströmventil 13a bzw. 13b eingeschaltet ist. Am Wärmeträgermediumsrücklauf 16 ist im Bereich des Wärmeträgermediumseinganges 77 des Wärmeerzeugers 2 ein Ausdehnungsgefäß 61 für das Wärmeträgermedium angeschlossen.

Am Auspuff 2b der hier beispielsweise als mit einem verbrennungsmotorbetriebenen Kompressor arbeitende Wärmepumpe ist eine Messeinrichtung 126 für die Temperatur des Rauch- bzw. Abgases angeordnet, die über eine Messwertleitung 127 mit einer als Ganzes mit 20 bezeichneten Regeleinrichtung in Verbindung steht. Diese Regeleinrichtung wiederum steht über eine Steuerleitung 19 mit dem nicht im einzelnen dargestellten und auch nicht näher bezeichneten Stellglied

des Wärmeerzeugers 2 in Verbindung, das je nach Ausbildung desselben das Brennstoffregulierungsventil eines Brenners bei flammenbefeuertem Kessel oder das Gas- bzw. Ölregulierungsventil für die Zuführung von Treibstoff zum Dieselmotor oder Vergaser eines verbrennungsmotorbetriebenen Kompressors einer Kompressionswärmepumpe oder aber eine Rauchgas-By-pass-Klappe eines als Rauchgaskühler eingesetzten Wärmetauschers oder dergleichen sein kann.

Die zugehörige Regeleinrichtung 20, die beim Ausführungsbeispiel gemäß Fig. 1 aus zwei Funktionsgruppen 20a und 20b besteht, wird im folgenden im Zusammenhang mit dem Ausführungsbeispiel gemäß Fig. 2 näher erläutert.

Der Aufbau der wiederum als Ganzes mit 1 bezeichneten Heizungsvorrichtung nach der Erfindung gemäß Fig. 2 ist im wesentlichen der gleiche wie der gemäß Fig. 1. Auch hier ist der Wärmeerzeuger mit 2 bezeichnet, jedoch als brennerbetriebener Kessel dargestellt, dessen Brenner 9 als Einrichtung zur Beeinflussung der Betriebsenergie für den Wärmeerzeuger 2 über eine herkömmliche Regeleinrichtung mit einer Messeinrichtung 12 für die Temperatur des Wärmeträgermediums im Wärmeerzeuger 2 (Kesselthermometer) und einer Einrichtung 11 zur Beeinflussung der Zufuhr von Betriebsenergie zum Wärmeerzeuger 2 derart gefahren werden kann, daß die Temperatur des Wärmeträgermediums, beipielsweise des Kesselwassers, im Wärmeerzeuger einen vorgegebenen Wert nicht übersteigt. Dargestellt ist ferner, daß der Wärmeträgermediumsausgang 76 des Wärmeerzeugers 2 über eine Beimischleitung 78 an den einen Eingangsstutzen eines Vier-Wege-Mischers 7 und der Wärmeträgermediumseingang 77 des Wärmeerzeugers 2, an den im übrigen in der gleichen Weise, wie im Zusammenhang mit dem Ausführungsbeispiel gemäß Fig. 1 bereits erläutert, ein Ausdehnungsgefäß 61 für Wärmeträgermedium angeschlossen ist, an den einen Ausgangsstutzen des Vier-Wege-Mischers 7 über eine Rückführleitung 79 angeschlossen ist. Der andere Ausgangsstutzen des Vier-Wege-Mischers 7 ist über die Wärmeträgermediums-Vorlauf-Leitung 14 mit einer Leitungsverzweigung verbunden, die so viele Wärmeträgermediums-Abgänge aufweist, wie zu bedienende Heizkörper der Heizungsvorrichtung 1 vorhanden sind, es sei denn, es würden mehrere Leitungsverzweigungen hintereinandergeschaltet angeordnet werden, was in Einzelfällen zu bevorzugen sein kann, beispielsweise wenn die Zahl der Heizkörper besonders groß ist.

An die genannte Leitungsverzweigung, die vom Heizungsvorlauf 14 angespeist wird, sind im in Fig. 2 dargestellten Ausführungsbeispiel zwei Heizkörper 3a bzw. 3b jeweils über eine vorgeschaltete automatisch wirkende Drosseleinrichtung 4a bzw. 4b angeschlossen, wobei auch hier der hier allerdings nur aus zwei Heizkörpern 3a, 3b bestehende Wärmeverbraucher als Ganzes mit 3 bezeichnet ist. Die beiden Heizkörper 3a, 3b (und bei mehr vorhandenen Heizkörpern auch diese) sind mit ihren Wärmeträgermediums-Ausgängen jeweils mit einer weiteren zwar dargestellten, jedoch nicht näher bezeichneten Leitungsverzweigung verbunden, von der das Wärmeträgermedium über die mit dieser in Verbindung stehende Rücklaufleitung 16 zum Vier-Wege-Mischer 7 zurückströmt, indem der Heizungsrücklauf 16 an den anderen Eingangsstutzen des Vier-Wege-Mischers 7 angeschlossen ist.

Es ist ersichtlich, daß auf diese Weise eine Heizungsanlage in Zweistrang-Bauweise gebildet ist, wobei diese außerdem auch noch eine Mehrwege-Mischeinrichtung in Form eines Vier-Wege-Mischers 7 aufweist. Diesem ist im Heizungsvorlauf 14 eine Umwälzpumpe 6 nachgeschaltet.

Auch beim Ausführungsbeispiel gemäß Fig. 2 ist eine Messeinrichtung 126 für die Temperatur des Rauchgases vorgesehen, die - wie dargestellt - im Rauchgasabgang 2b (Rauchgas- bzw. Abgasstutzen) des hier mit fossilem Brennstoff befeuerten Heizkessels angeordnet sein kann und über eine Messwertleitung 127 an die Regeleinrichtung 20 angeschlossen ist. Diese weist einen Stellbefehlgeber 62 auf, der über eine Steuerleitung 17 mit dem Antrieb 10 der Mehrwege-Mischeinrichtung 7 verbunden ist.

In Fig. 3 ist dargestellt, daß die beim Ausführungsbeispiel gemäß Fig. 2 in Form eines Vier-Wege-Mischers 7 ausgebildete Mehrwege-Mischeinrichtung auch als Drei-Wege-Mischer 8 ausgeführt sein kann, wenn die Rohrleitungsführung für das Wärmeträgermedium entsprechend getroffen ist. Ohne daß in Fig. 3 der Wärmeerzeuger dargestellt wäre, was nichts anderes besagen soll, als daß dieser in beliebiger Weise ausgebildet sein kann, beispielsweise nach Art des Wärmeerzeugers gemäß Fig. 1 oder nach Art des Wärmeerzeugers gemäß Fig. 2, die vorstehend bereits beschrieben sind, ist der Wärmeträgermediums-Ausgang 76 desselben an den einen Strömungseingang des Drei-Wege-Mischers 8 angeschlossen, während an seinen Strömungsausgang der Heizungsvorlauf 14 angeschlossen ist, dessen weitere Leitungsführung die gleiche ist, wie im Zusammenhang mit dem Ausführungsbeispiel gemäß Fig. 2 bereits beschrieben. Der Heizungsrücklauf 16 ist an den Wärmeträgermediums-Eingang 77 des nicht dargestellten Wärmeerzeugers 2 angeschlossen, der seinerseits in bereits beschriebener Weise mit einem Ausdehnungsgefäß 61 für das Wärmeträgermedium in Verbindung steht. Strömungsaufwärts vom Ausdehnungsgefäß 61 ist der Heizungsrücklauf 16 über eine hier als Beimischleitung dienende Leitung 79 an den zweiten Eingang des Drei-Wege-Mischers 8 angeschlossen. In den Heizungsvorlauf 14 ist in bereits im Zusammenhang mit den Ausführungsbeispielen gemäß Fig. 1 und 2 beschriebener Weise eine Umwälzpumpe 6 eingeschaltet. Der Antrieb 10 der hier als Drei-Wege-Mischer 8 ausgebildeten Mehrwege-Mischeinrichtung ist über eine hier mit 18 bezeichnete Steuerleitung mit dem Stellbefehlgeber 62 der Regeleinrichtung 20 verbunden.

Die erfindungsgemäße Regelungseinrichtung 20 weist einzelne Aggregate bzw. Einrichtungen auf, deren impulsleitungsmäßige Verknüpfung vorstehend bereits erläutert worden ist und sich im übrigen aus den Ansprüchen und deren Erläuterung ergibt. Aus diesem Grunde werden die einzelnen Einrichtungen im folgenden lediglich hinsichtlich ihres Aufgabengebietes bzw. Einsatzzweckes beschrieben, da ihre Ausgestaltung dem Fachmann im einzelnen geläufig ist.

Der kontinuierlich gewonnene Messwert oder die in vorgegebenen Zeitabständen nacheinander gewonnenen Messwerte der Temperatur des Rauch- bzw. Abgases werden von der Messeinrichtung 126 über die Messwertleitung 127 je nach der vorgesehenen Konzeption ihrer Weiterverarbeitung entweder einer Vergleichseinrichtung 27 zur Bestimmung der Größe und/oder Richtung der Abweichung der Rauch- bzw. Abgastemperatur von einer Grenze ihres Sollwert-Bandes oder aber einer Messwertspeichereinrichtung 26 zugeführt. Das Vergleichsnormal für die Vergleichseinrichtung 27 wird in Form eines der oberen Grenze eines Sollwert-Bandes der Rauch- bzw. Abgastemperatur entsprechenden Impulses von einem einstellbaren Sollwertgeber 41 und in Form eines der unteren Grenze dieses Sollwert-Bandes entsprechenden Impulses von einem weiteren einstellbaren Sollwertgeber 42 geliefert.

Dargestellt ist ferner, daß die Regeleinrichtung 20 einen Proportionalregler 21 mit einer Einrichtung 31 zur Veränderung seiner Verstärkung, einen Integralregler 22 mit einer Einrichtung 32 zur Veränderung seiner Nachstellzeit und einen Differentialregler 23 mit einer Einrichtung 33 zur Veränderung der Vorhaltzeit desselben aufweisen kann. Dem Integralregler 22 ist dabei ein zeitabhängiges Integrierwerk 36a für die Abweichung der Rauch- bzw. Abgastemperatur über die obere Grenze ihres Sollwert-Bandes hinaus und ein zeitabhängiges Integrierwerk 36b für die Abweichung der Rauch- bzw. Abgastemperatur unter die untere Grenze ihres Sollwert-Bandes zugeordnet.

Dem Differentialregler 23 zugeordnet weist die Regeleinrichtung 20 ferner eine Einrichtung 38a zur Bestimmung des Maßes der zeitlichen Änderung einer Abweichung der Rauch- bzw. Abgastemperatur über die obere Grenze ihres vorgegebenen Sollwert-Bandes hinaus und eine Einrichtung 38b zur Bestimmung des Maßes der zeitlichen Änderung einer Abweichung der Rauch- bzw. Abgastemperatur unter die untere Grenze ihres vorgegebenen Sollwert-Bandes sowie bevorzugt auch eine Einrichtung 39a zur Bestimmung der zeitlichen Änderung des Maßes der zeitlichen Änderung einer Abweichung der Rauch- bzw. Abgastemperatur über die obere Grenze dieses Sollwert-Bandes hinaus sowie eine Einrichtung 39b zur Bestimmung der zeitlichen Änderung des Maßes der zeitlichen Änderung einer Abweichung der Rauch- bzw. Abgastemperatur unter die untere Grenze dieses Sollwert-Bandes auf. Die Einrichtungen 39a und 39b sind somit Einrichtungen zur Ermittlung der Änderungsbeschleunigung der betreffenden Abweichung der Rauch- bzw. Abgastemperatur von der einen bzw. anderen Grenze ihres Sollwert-Bandes, während die Einrichtungen 38a und 38b jeweils Einrichtungen zur Bestimmung der Änderungsgeschwindigkeit dieser Abweichungen sind.

Wie dargestellt, kann ferner zweckmäßig eine Einstelleinrichtung 66 für die Einrichtung 31 zur Veränderung der Verstärkung des Proportionalreglers 21 und die Einrichtung 32 zur Veränderung der Nachstellzeit des Integralreglers 22 und die Einrichtung 33 zur Veränderung der Vorhaltzeit des Differentialreglers 23 oder jeweils eine Einstelleinrichtung 66 für jede der genannten Veränderungseinrichtungen, soweit vorhanden, vorgesehen sein, durch welche die jeweils zugeordnete(n) Veränderungseinrichtung(en) 31 bzw. 32 bzw. 33 im Sinne einer Vermeidung des Überschreitens eines vorbestimmten Wertes des Verhältnisses zeitgleicher Ergebnisse beider Integrierwerke 36a bzw. 36b nachstellbar ist bzw. sind.

Weiterhin kann die Regeleinrichtung 20 eine Sollwert-Wahleinrichtung 43 mit einer Detektoreinrichtung 29 zur Ermittlung der zu dem Zeitpunkt, zu dem nach einer Zeispanne mit praktisch konstantem oder allenfalls geringfügig steigendem Wert der Rauch- bzw. Abgastemperatur erstmalig eine signifikante Vergrößerung derselben auftritt, oder nach einer vorgegebenen Zeitspanne nach Beginn des Anfahrvorganges, im Verlauf der Inbetriebnahme der Vorrichtung 1 bei Vollast und voller Öffnung aller Drosseleinrichtungen 4a bzw. 4b als minimal mögliche Rauch- bzw. Abgastemperatur auftretenden Rauch- bzw. Abgastemperatur, die als Inbetriebnahmerauch- bzw. -abgastemperatur bezeichnet wird, und/oder im Verlauf des Heizbetriebes bei Aufheizen nach einer Abkühlung bei Vollast und voller Öffnung aller Drosseleinrichtungen 4a bzw. 4b als minimale Rauch- bzw. Abgastemperatur auftretenden Rauch- bzw. Abgastemperatur, die als Anfahrrauch- bzw. -abgastemperatur bezeichnet wird, und einer oder je
einer einstellbaren Verhältnisgabeeinrichtung 46a, 46b bzw. 46a bzw.
46b als Sollwert-Bildungseinrichtung für die obere bzw. untere
Grenze des Sollwert-Bandes der Rauch- bzw. Abgastemperatur sowie jeweils eine mit der zugeordneten Sollwert-Bildungseinrichtung bzw.
Verhältnisgabeeinrichtung 46a, 46b bzw. 46a bzw. 46b und andererseits mit dem zugeordneten Sollwertgeber 41 bzw. 42 verbundene Einrichtung 45 zur automatischen Verstellung desselben im Sinne einer
Ersteinstellung bzw. einer Veränderung eines eingestellten Wertes
der zugeordneten oberen bzw. unteren Grenze des Sollwert-Bandes der
Rauch- bzw. Abgastemperatur aufweisen. Dargestellt ist, daß dem
Sollwertgeber 41 ebenso wie dem Sollwertgeber 42 jeweils eine eigene
automatische Verstelleinrichtung 45 zugeordnet ist.

Die Regeleinrichtung 20 weist auch eine Betragsvergleichseinrichtung
89 zur Ermittlung des Beginns und des Endes einer Zeitspanne mit
praktisch konstantem oder allenfalls geringfügig steigendem Wert der
Rauch- bzw. Abgastemperatur auf, die von der Vergleichseinrichtung
27 zur Bestimmung der Abweichung der Rauch- bzw. Abgastemperatur
über die obere und/oder unter die untere Grenze ihres Sollwert-
Bandes oder von einer eigens hierfür vorgesehenen, von dieser Vergleichseinrichtung 27 messwertmäßig beschickten Momentanwert-Abweichungs-Speichereinrichtung 90 ansteuerbar ist und mittels derer
der Unterschied zwischen jeweils letztem und vorletztem Momentanwert
der Rauch- bzw. Abgastemperatur für spätere Nutzung beispielsweise
durch die Betragsvergleichseinrichtung 89 gespeichert werden kann.
Ferner weist die Regeleinrichtung 20 zweckmäßig auch noch eine Zeitspannenmesseinrichtung 96 zur Ermittlung der Länge der Zeitspanne
mit praktisch konstantem oder allenfalls geringfügig steigendem Wert
der Rauch- bzw. Abgastemperatur mit einer Zeitspannenvorgabe- und -vergleichseinrichtung 57 und einer Einschalt- und einer
Ausschalteinrichtung 97 bzw. 98 auf, die mit der Betragsvergleichseinrichtung 89 in Wirkverbindung steht, wobei mit Vorzug zumindest

die Ausschalteinrichtung 98 auch mit der Detektoreinrichtung 29 in Impulszuführungsverbindung steht. Außerdem kann eine Dividiereinrichtung 67 vorgesehen sein, die einerseits entweder mit der Betragsvergleichseinrichtung 89 oder mit der Vergleichseinrichtung 27 zur Bestimmung der Abweichung der Rauch- bzw. Abgastemperatur über die obere und/oder unter die untere Grenze ihres Sollwert-Bandes und andererseits mit einer Einrichtung 99 zur Abgabe von Zeitspannen entsprechenden Impulsen in Wirkverbindung steht. Durch die Dividiereinrichtung 67 wird der zeitliche Gradient der Vergrößerung der Rauch- bzw. Abgastempratur nach Beendigung der Zeitspanne mit praktisch konstantem oder allenfalls geringfügig steigendem Wert der Rauch- bzw. Abgastemperatur ermittelt, nachdem der Beendigungszeitpunkt mit Vorzug durch die Betragsvergleichseinrichtung 89 festgelegt worden ist. Dieser kann aber auch durch die Dividiereinrichtung 67 selbst ermittelt werden, indem nämlich die plötzliche Anstiegssteilheit des Verlaufs der Rauch- bzw. Abgastemperatur das Ende der Aufheizperiode signalisiert. Der Dividiereinrichtung 67 zugeordnet ist ferner eine Gradienten-Vorgabe- und -Vergleichseinrichtung 100 mit einer vom Zeitpunkt des Endes der Zeitspanne mit konstantem oder allenfalls geringfügig steigendem Wert der Rauch- bzw. Abgastemperatur abhängigen Einschalt- und/oder Ausschalteinrichtung 97, 98, wobei als letztere auch die Ausschalteinrichtung 98 einer Zeitspannenmesseinrichtung 96 zur Ermittlung der Länge der Zeitspanne mit praktisch konstantem oder allenfalls geringfügig steigendem Wert der Rauch- bzw. Abgastemperatur mitausgenutzt werden kann. Die bzw. jede der Sollwert-Bildungseinrichtung(en) 46a, 46b bzw. 46a bzw. 46b steht bzw. stehen einerseits mit der Detektoreinrichtung 29 und andererseits mit der Zeitspannen-Messeinrichtung 96 unmittelbar oder über deren Zeitspannen-Vorgabe- und -Vergleichseinrichtung 57 bzw. mit der Dividiereinrichtung 67 unmittelbar oder über deren Gradienten-Vorgabe- und -Vergleichseinrichtung 100 sowie in jedem Fall mit dem Stellbefehlgeber 62 in Wirkverbindung.

Weiterhin kann die Sollwert-Wahleinrichtung 43, wie dargestellt, eine Programmspeichereinrichtung 47a, 47b aufweisen, die eine Verstelleinrichtung 48a für die Sollwert-Bildungseinrichtung 46a für die obere Grenze des Sollwert-Bandes der Rauch- bzw. Abgastemperatur und/oder eine Verstelleinrichtung 48b zur Verstellung der Sollwert-Bildungseinrichtung 46b für die untere Grenze dieses Sollwert-Bandes aufweist. Andererseits kann aber auch eine Programmspeichereinrichtung 47a für die obere Grenze des Sollwert-Bandes und eine eigene Programmspeichereinrichtung 47b für die untere Grenze dieses Sollwert-Bandes vorgesehen sein. In beiden Ausführungsfällen ist durch zumindest eine der Verstelleinrichtungen 48a bzw. 48b entsprechend einer in der bzw. den Programmspeichereinrichtung(en) 47a, 47b bzw. 47a bzw. 47b gespeicherten Abhängigkeit das in der zugeordneten Sollwert-Bildungseinrichtung 46a, 46b bzw. 46a bzw. 46b gebildete Verhältnis in dem Sinne veränderbar, daß einem abnehmenden Wert der oberen oder unteren Grenze des Sollwert-Bandes der Rauch- bzw. Abgastemperatur eine zunehmend geringere Differenz zwischen diesen beiden Grenzwerten und/oder ein zunehmend kleineres Verhältnis derselben entspricht.

Ferner kann die Regeleinrichtung 20 eine Messwertspeichereinrichtung 122 für die als Inbetriebnahmerauch- bzw. -abgastemperatur bezeichnete minimal mögliche Rauch- bzw. Abgastemperatur sowie eine Vergleichseinrichtung 118 zur Ermittlung von Abweichungen der minimalen Rauch- bzw. Abgastemperatur (Anfahrrauch- bzw. -abgastemperatur) von der minimal möglichen Rauch- bzw. Abgastemperatur (Inbetriebnahmerauch- bzw. -abgastemperatur) und eine zugeordnete Verhältnisbildungseinrichtung 28 aufweisen, mittels derer die bzw. eine oder beide der Sollwertbildungseinrichtung(en) 46a, 46b bzw. 46a bzw. 46b bzw. die bzw. eine oder beide der Programmspeichereinrichtung(en) 47a, 47b bzw. 47a bzw. 47b bzw. die bzw. eine oder beide Verstelleinrichtung(en) 48a bzw. 48b bzw. der eine oder beide Sollwertgeber 41 bzw. 42 im Sinne einer Änderung des vorgegebenen Sollwert-Bandes der Rauch- bzw. Abgastemperatur in Abhängigkeit vom Verhältnis von minimal möglicher Rauch- bzw. Abgastemperatur (Inbetriebnahmerauch- bzw. -abgastemperatur) zu minimaler Rauch- bzw. Abgastemperatur (Anfahrrauch- bzw. -abgastemperatur)) verstellbar ist.

Weiterhin ist mindestens eine Meldeeinrichtung 59 zur Abgabe einer optisch und/oder akustisch wahrnehmbaren Information vorgesehen, die über eine Grenzdetektoreinrichtung 30, mit der sie über jeweils eine Impulsleitung in Verbindung steht bzw. stehen und immer dann aktivierbar ist bzw. sind, wenn die Grenzdetektoreinrichtung 30 eine Abweichung der ihr von der Vergleichseinrichtung 118 übermittelten Abweichung der minimalen Rauch- bzw. Abgastemperatur (Anfahrrauch- bzw. -abgastemperatur) von der minimal möglichen Rauch- bzw. Abgastemperatur (Inbetriebnahmerauch- bzw. -abgastemperatur) ermittelt, die einen vorbestimmten Wert einer solchen Abweichung über- oder unterschreitet.

Um auch extreme Wärmeverluste an irgendeiner Stelle des Gesamtwärmeverbrauchers 3 ermitteln und melden zu können, die so extreme Leistungsverluste bedingen, daß Abweichungen der Rauch- bzw. Abgastemperatur über die obere Grenze ihres Sollwert-Bandes entweder überhaupt nicht oder zumindest doch während einer vorgegebenen Zeitspanne nicht auftreten, wie das beispielsweise bei offenstehendem Fenster in einer besonderen Kälteperiode der Fall sein kann, wodurch der betreffende Raum stark auskühlt und das System es nicht mehr schafft, den in dem Wärmeträgermedium führenden Leitungssystem umlaufenden Gesamtmassenstrom des Wärmeträgermediums so zu verringern, daß die Rauch- bzw. Abgastemperatur die obere Grenze ihres Sollwert-Bandes noch überschreiten kann, kann zweckmäßig weiterhin eine Meldeeinrichtung 60 zur Abgabe einer optisch und/oder akustisch wahrnehmbaren Information, die über eine Impulsleitung an eine Auslöseeinrichtung 40 angeschlossen ist, die ihrerseits mit der Vergleichseinrichtung 27 der Regeleinrichtung 20 zur Bestimmung der Abweichung der Rauch- bzw. Abgastemperatur über die obere und/oder unter die untere Grenze ihres Sollwert-Bandes und/oder mit einer Messwertspeichereinrichtung 26 verbunden ist, und eine Zeitsteuereinrichtung 51 zur Durchführung einer Mehrzahl von Messungen der Rauch- bzw. Abgastemperatur durch die Messeinrichtung 126 oder eine Zeitsteuereinrichtung 52 zur Aufnahme und/oder zum Abruf eines Messwertes oder einer Mehrzahl von von der Messeinrichtung 126 gelieferten Messwerten der Rauch- bzw. Abgastemperatur durch die Messwertspeichereinrichtung 26 bzw. von dieser jeweils innerhalb einer vorgegebenen Zeitspanne vorgesehen sein, wobei diese Meldeeinrichtung(en) 60 durch die Auslöseeinrichtung 40 immer dann aktivierbar ist bzw. sind, wenn zumindest nach einer vorgegebenen Zeitspanne keine Abweichung der Rauch- bzw. Abgastemperatur über die obere Grenze ihres Sollwert-Bandes zu verzeichnen ist.

Es kann aber auch ein Betriebszustand auftreten, bei dem die Rauch- bzw. Abgastemperatur ständig oder jedenfalls während einer vorgegebenen Zeitspanne bei Vollast und voller Öffnung aller Drosseleinrichtungen nicht über die minimale Rauch- bzw. Abgastemperatur (Anfahrrauch- bzw. -abgastemperatur) und/oder die minimal mögliche Rauch- bzw Abgastemperatur (Inbetriebnahmerauch- bzw. -abgastemperatur) hinauskommt. Dies deutet dann bei Ausführung des Wärmeerzeugers 2 als brennstoffbefeuerter Heizkessel auf einen Defekt des Brenners 9 desselben und bei Ausführung des Wärmeerzeugers 2 als brennstoffbefeuerte Sorptionswärmepumpe auf einen Defekt des Brenners des Kochers derselben sowie bei Ausführung des Wärmeerzeugers 2 als verbrennungsmotorisch betriebene Kompressionswärmepumpe auf einen Defekt des Kompressoraggregates entweder auf seiner Kompressorseite oder auf seiten seines Antriebsmotors hin. Um auch einen solchen allgemein als "Brennerdefekt" zu bezeichnenden Störfall detektieren zu können, kann die Auslöseeinrichtung 40 so ausgebildet sein, daß durch sie die Meldeeinrichtung(en) 60 bei Auftreten einer Abweichung der Rauch- bzw. Abgastemperatur unter die minimale Rauch- bzw. Abgastemperatur (Anfahrrauch- bzw. -abgastemperatur) und/oder die minimal mögliche Rauch- bzw. Abgastemperatur (Inbetriebnahmerrauch- bzw. -abgastemperatur) bei Vollast und voller Öffnung aller Drosseleinrichtungen 4a bzw. 4b überhaupt und/oder bei Auftreten dieses Zustandes innerhalb einer vorgegebenen Zeitspanne zur Wahrnehmbarmachung dieser durch diesen Zustand gebildeten Unregelmäßigkeit aktivierbar ist bzw. sind.

Es ist ersichtlich, daß bei der Ausführungsform der Erfindung gemäß Fig. 1 aufgrund von durch die Messeinrichtung 126 für die Rauch- bzw. Abgastemperatur ermittelten Messwerten derselben über die Regeleinrichtung 20 überwacht wird, ob diese Messwerte die obere Grenze des über die einstellbaren Sollwertgeber 41 und 42 eingestellten Sollwert-Bandes der Rauch- bzw. Abgastemperatur überschreiten oder aber die untere Grenze dieses Sollwert-Bandes unterschreiten. In beiden Fällen wird durch die Regeleinrichtung 20 die betreffende Abweichung der Rauch- bzw. Abgastemperatur von der betreffenden Grenze ihres Sollwert-Bandes ausgeregelt, indem über den Stellbefehlgeber 62 die in den Heizungsvorlauf 14 eingespeiste Wärmeleistung bei Ausscheren der Rauch- bzw. Abgastemperatur aus ihrem Sollwert-Band über die eine oder die andere Grenze desselben heraus so beeinflußt wird, daß die Rauch- bzw. Abgastemperatur wieder in den Bereich zwischen den beiden Grenzen ihres Sollwert-Bandes zurückgeführt wird. Insoweit unterscheidet sich die Erfindung wesentlich vom Stande der Technik, als bei ihr nämlich einerseits in neuartiger Weise eine bisher nicht für zur Regelung brauchbare Messwerte ergebend erachtete physikalische Größe, nämlich die Rauch- bzw. Abgastemperatur, als Führungsgröße für die Regelung herangezogen wird und andererseits nicht etwa eine physikalische Größe auf Konstanz geregelt wird, sondern eine Abweichung dieser physikalischen Größe im speziellen der Rauch- bzw. Abgastemperatur, über eine obere vorgegebene Grenze eines Sollwert-Bandes hinweg oder unter eine untere Grenze desselben auf ihren Verschwindwert ausgeregelt wird, während beliebige Abweichungen von beiden Grenzen des Sollwert-Bandes dieser physikalischen Größe, hier der Rauch- bzw. Abgastemperatur, von der Regelung toleriert werden, sofern sich diese wertmäßig nur innerhalb dieses vorgegebenen Sollwert-Bandes bewegt, wobei auch Schwankungen dieser physikalischen Größe (der Rauch- bzw. Abgastemperatur) beliebiger Größe erfindungsgemäß ohne Einfluß auf die Regelung bleiben, sofern sie nicht zu einem Überschreiten der oberen Grenze des vorgegebenen Sollwert-Bandes oder einem Unterschreiten der unteren Grenze desselben führen. Die Vorteile dieser Regelung nach der Erfindung sind eingangs bereits detailliert erläutert worden.

Die Art, wie diese Ausregelung solcher durch Überschreiten der oberen Grenze des Sollwert-Bandes oder Unterschreiten der unteren Grenze desselben bedingten Abweichungen bewerkstelligt wird, hängt von der Art der Heizungsvorrichtung 1 im allgemeinen und der Ausgestaltung der Zuspeisung der Wärmeleistung zum Heizungsvorlauf 14 im besonderen ab. Bei der Ausführungsform der Erfindung gemäß Fig. 1 ist, wie vorstehend bereits erläutert, ein Regelungszugriff vom Stellbefehlgeber 62 der Regeleinrichtung 20 her auf eine nicht näher dargestellte und auch nicht bezeichnete Einrichtung zur Beeinflussung der Zufuhr von Betriebsenergie zum mit fossilem Brennstoff betriebenen Wärmeerzeuger 2 als Stellglied vorgesehen. Dieses kann als kontinuierlich verstellbare oder aber im Ein-Aus-Betrieb arbeitende Einrichtung beliebiger bekannter Art ausgebildet sein. In jedem Fall erfolgt bei der Ausführungsform der Erfindung gemäß Fig. 1 die Beeinflussung der dem Heizungsvorlauf 14 zugeführten Wärmeleistung über Einwirkung auf die Zufuhr von Betriebsenergie zum Antriebsmotor des Kompressors des als Kompressionswärmepumpe oder zum Kocher des als Sorptionswärmepumpe ausgebildeten Wärmeerzeugers 2. Ist dieser für kontinuierliche Zuführung von Betriebsenergie während der Betriebsdauer ausgelegt, so erfolgt die Einwirkung auf die dem Heizungsvorlauf 14 zugeführte Wärmeleistung durch Verringerung der Zufuhr der Betriebsenergie zum Wärmeerzeuger 2 dann, wenn die Regeleinrichtung 20 ein Überschreiten der oberen Grenze des Sollwert-Bandes der Rauch- bzw. Abgastemperatur ermittelt hat, und durch Vergrößerung der Zufuhr von Betriebsenergie zum Wärmeerzeuger 2 dann, wenn ein Unterschreiten der unteren Grenze des Sollwert-Bandes der Rauch- bzw. Abgastemperatur vorliegt. Handelt es sich hingegen um einen Wärmeerzeuger 2 mit diskontinuierlicher Zuführung seiner Betriebsenergie, dann erfolgt erfindungsgemäß die Einflußnahme auf diese so, daß immer dann, wenn ein Überschreiten der oberen Grenze des Sollwert-Bandes der Rauch- bzw. Abgastemperatur vorliegt, die Zufuhr von Betriebsenergie zum Wärmeerzeuger 2 unterbrochen bzw. abgeschaltet und dann, wenn die Regeleinrichtung 20 ein Unterschreiten der unteren Grenze des Sollwert-Bandes der Rauch- bzw. Abgastemperatur ermittelt, die Zufuhr von Betriebsenergie zum Wärmeerzeuger 2 aufgenommen wird.

Eine andere Betriebsart sieht vor, daß für einen Wärmeerzeuger 2 mit diskontinuierlicher Zufuhr seiner Betriebsenergie bei Überschreiten der oberen Grenze des Sollwert-Bandes das Zeitverhältnis der Ein- zur Ausschaltung der Zufuhr von Betriebsenergie zum Wärme- bzw. Kälteerzeuger erhöht wird und bei Unterschreiten der unteren Grenze selbiges Zeitverhältnis verringert wird. Bei dieser Betriebsart wird also nicht bei Überschreiten des Sollwert-Bandes jeweils die Betriebsenergie-Zufuhr veranlaßt oder unterbunden, sondern anstelle dessen das Zeitverhältnis der Ein- zur Ausschaltung der Zufuhr von Betriebsenergie zum Wärme- bzw. Kälteerzeuger bei Bandüber- oder Unterschreitung verändert.

Die Ausführungsform der Erfindung gemäß Fig. 2 und ebenso auch eine dieser dann, wenn in dieser der strich-punktiert umrandete Bereich III durch die Rohrleitungs- , Mehrwege-Mischeinrichtungs- und Umwälzpumpen-Anordnung gemäß Fig. 3 ersetzt wird, entsprechende Ausführungsform unterscheiden sich von der gemäß Fig. 1 abgesehen von der lediglich beispielhaft dargestellten Anwendung in Verbindung mit einer Zweistrang-Anlage nur darin, daß die Einflußnahme auf die Zuführung der Wärmeleistung zum Heizungsvorlauf 14 hier nicht durch irgendwie geartete Änderung der Zufuhr der Betriebsenergie zum Wärmeerzeuger 2 erfolgt, sondern durch Zugriff auf die hier jeweils vorgesehene Mehrwege-Mischeinrichtung in Form des Vier-Wege-Mischers 7 gemäß Fig. 2 oder des Drei-Wege-Mischers 8 gemäß Fig. 3. Die hier dargestellte Ausführung eines über einen gas- oder ölbefeuerten Brenner 9 mit Betriebsenergie versorgten Heizkessels als Wärmeerzeuger 2, der über die Messeinrichtung 12 für die Temperatur des Wärmeträgermediums im Kessel (Kesselthermometer) und die Einrichtung 11 zur Beeinflussung der Zufuhr von Betriebsenergie zum Brenner, die beispielsweise ein Regulierventil für das als Primärenergie dienende Gas oder Öl umfassen kann, auf eine vorbestimmte Temperatur des Wärmeträgermediums im Kessel (dargestellt durch den Einstellpfeil an der Einrichtung 11) geregelt werden kann, kann ihrerseits für kontinuierliche oder diskontinuierliche Zuführung der Betriebsenergie ausgelegt sein, je nach dem, wie der Brenner 9 ausgebildet ist. Dessen ungeachtet ist bei den Ausführungen der Erfindung gemäß Fig. 2 und Fig. 3 jedoch die Beeinflussung der dem Heizungsvorlauf 14 zugespeisten Wärmeleistung über die jeweilige Mehrwege-Mischeinrichtung 7 bzw. 8 derart vorgesehen, daß durch diese das Verhältnis des in den Heizungsvorlauf 14 eingespeisten heißen Massenstroms des Wärmeträgermediums zum Gesamtmassenstrom und/oder die Stellung des dieses Verhältnis bestimmenden Organs der Mehrwege-Mischeinrichtung 7 bzw. 8 verändert wird, indem vom Stellbefehlgeber 62 der Regeleinrichtung 20 über die jeweilige Steuerleitung 17 bzw. 18 der Verstellantrieb 10 für die betreffende Mehrwege-Mischeinrichtung 7 bzw. 8 entsprechend betätigt wird. Diese Betätigung erfolgt dabei erfindungsgemäß so, daß immer dann, wenn die ermittelte Rauch- bzw. Abgastemperatur zu einer Abweichung über die obere Grenze ihres Sollwert-Bandes führt, das Verhältnis von dem Heizungsvorlauf 14 zugespeistem Massenstrom zum Gesamtmassenstrom verringert und dann, wenn ein Unterschreiten der unteren Grenze des Sollwert-Bandes der Rauch- bzw. Abgastemperatur vorliegt, dieses Verhältnis von dem Heizungsvorlauf 14 zugespeistem Massenstrom zum Gesamtmassenstrom vergrößert wird.

Für die Möglichkeiten der größenmäßigen Änderung dieses Verhältnisses bzw. der zugeordneten Stellung des dieses bestimmenden Organs der betreffenden Mehrwege-Mischeinrichtung 7 bzw. 8 sind vorstehend bereits detaillierte Angaben ebenso gemacht wie für das Maß der Beeinflussung der Zuführung der Betriebsenergie zum Wärmeerzeuger 2 ungeachtet dessen, ob diese kontinuierlich oder diskontinuierlich erfolgt.

Es ist ersichtlich, daß eine Ausführung eines Wärmeerzeugers 2 als brennerbefeuerter Heizkessel auch in Fig. 1 zur Anwendung kommen kann, ebenso wie gleichermaßen eine Ausführung eines Wärmeerzeugers 2, wie diese in Verbindung mit Fig. 1 beschrieben ist, bei der Vorrichtung 1 gemäß Fig. 2 Verwendung finden kann. Gleichermaßen sind auch die Ausführungen gemäß Fig. 2 und Fig. 3 in Verbindung mit Einstrang-Anlagen gemäß Fig. 1 im Rahmen der Erfindung mit allen Vorteilen derselben verwendbar. Die dargestellten Ausführungen sollen nur beispielhaft Möglichkeiten aufzeigen, die wichtigsten Varianten der Erfindung zu verwirklichen, ohne dabei erschöpfend alle Möglichkeiten von Kombinationen von Wärmeerzeuger-Ausführungen, Arten der Veränderung der dem Heizungsvorlauf 14 zuzuspeisenden Wärmeleistung und/oder Ausführungen der Regeleinrichtung insbesondere bezüglich deren Vervollkommnung im Hinblick auf die Vielzahl der nach der Erfindung möglichen Selbstlernvorgänge bildlich darzustellen. Aus dem gleichen Grunde ist auch auf die Darstellung der impulsleitungsmäßigen Verknüpfung der einzelnen Aggregate bzw. Einrichtungen der Regeleinrichtung 20 verzichtet worden, weil diese bereits einleitend und in den betreffenden Ansprüchen detailliert erläutert sind und im Bedarfsfall der Fachmann andersartige impulsleitungsmäßige Verknüpfungen in Kenntnis der beschriebenen Verknüpfungen ohne erfinderisches Zutun einfach ermitteln kann.

Um erfindungsgemäß die unterschiedlichen Betriebsarten im Sinne von Komfort- , Normal- , Spar- , Nachtabsenkungs- oder Frostschutzbetrieb fahren zu können, weist die Regeleinrichtung 20 ferner eine Speichereinrichtung 24 auf, in der beim dargestellten Ausführungsbeispiel vier bevorzugte Paarungen von Ober- und Untergrenzen des Sollwert-Bandes der Rauch- bzw. Abgastemperatur gespeichert sind, nämlich für Komfort- , Normal- , Spar- bzw. Nachtabsenkungsbetrieb und letztlich auch für Frostschutzbetrieb, wobei die gespeicherten Wertepaarungen für im Ein-Aus-Betrieb arbeitende Wärmeerzeuger in eingangs bereits beschriebener Weise anders gewählt sein sollten als die für kontinuierlich mit Betriebsenergie versorgte Wärmeerzeuger oder für unabhängig von der Art des Wärmeerzeugers mit einer Mehr-wege-Mischeinrichtung arbeitende Anlagen zu wählenden und in der Speichereinrichtung 24 zu speichernden Wertepaarungen. Dieser Speichereinrichtung 24, die im übrigen hinsichtlich ihrer den Ober- und Untergrenzen des Sollwert-Bandes der Rauch- bzw. Abgastemperatur für die einzelnen Betriebsarten entsprechenden gespeicherten Wertepaarungen mit Vorzug einstellbar ausgeführt ist, so daß diese Wertepaarungen entweder vom Herstellerwerk oder aber vom installierenden Heizungsbauer oder aber auch vom Benutzer nach Wunsch eingestellt werden können, ist eine Umschalteinrichtung 25 zugeordnet, mittels derer der Benutzer der Heizungsvorrichtung 1 nunmehr je nach Wunsch bzw. Bedarf die Funktion der Regeleinrichtung 20 so umschalten kann, daß sie statt der einen Betriebsart, beispielsweise Komfortbetrieb, einer anderen gewählten Betriebsart, beispielsweise Spar- bzw. Nachtabsenkungsbetrieb, gerecht wird. Diese Umschaltung kann im übrigen auch zeitgesteuert automatisch erfolgen. Hierfür kann ein Zeitschaltwerk 131 vorgesehen sein, das in geeigneter Weise über Impulsleitungen mit der Speichereinrichtung 24 und/oder der Umschalteinrichtung 25 für diese verbunden ist.

Dargestellt ist auch, daß die Regeleinrichtung eine Zähleinrichtung 54 für die während einer vorgegebenen Zeitspanne, während derer von der Zeitsteuereinrichtung 51 gesteuert eine Mehrzahl von Messungen der Rauch- bzw. Abgastemperatur durch die Messeinrichtung 126 durchgeführt und/oder ein Messwert oder eine Mehrzahl von von der Messeinrichtung 126 gelieferten Messwerten der Rauch- bzw. Abgastemperatur aufgenommen oder abgerufen wird, etwa aufgetretenen Abweichungen dieser Messwerte über die obere und/oder unter die untere Grenze des vorgegebenen Sollwert-Bandes der Rauch- bzw. Abgastemperatur und eine Programmspeichereinrichtung 53 für eine vorgegebene während dieser vorgegebenen Zeitspanne zulässige Zahl von im Betrieb auftretenden Abweichungen der Rauch- bzw. Abgastemperatur über die obere und/oder unter die untere Grenze ihres Sollwert-Bandes sowie weiterhin eine Detektoreinrichtung 124 zur Ermittlung einer etwaigen Abweichung der von der Zähleinrichtung 54 ermittelten Anzahl während dieser Zeitspanne etwa aufgetretener Messwertabweichungen und schließlich einen mit zumindest einem der Sollwertgeber 41 bzw. 42 in Wirkverbindung stehende Einrichtung 44 zur automatischen Veränderung des Sollwert-Bandes bzw. zumindest einer seiner Grenzen in Abhängigkeit von dieser durch die Detektoreinrichtung 124 ermittelten Abweichung der Anzahl aufgetretener Messwertabweichungen von der zulässigen Zahl derselben aufweist. Eine weitere Zähleinrichtung 55 dient der Ermittlung der Zahl der während einer vorgegebenen Zeitspanne im Betrieb auftretenden Veränderungen in Form von Aufnahmen und/oder Beendigungen der Zufuhr von Wärme- bzw. Kälteleistung zum im Heizungsvorlauf 14 befindlichen Wärmeträgermedium und weist ein Zählwerk 56 für diese Veränderungen auf. Auf diese Weise kann auch über die Abweichung der gemessenen Anzahl solcher während einer vorgegebenen Zeitspanne im Betrieb aufgetretener Veränderungen von einer vorgegebenen während dieser vorgegebenen Zeitspanne zulässigen Zahl derselben im Sinne eines Selbstlernvorganges automatisch das Sollwert-Band bzw. zumindest eine seiner Grenzen nachführend verändert werden.

Während in Fig. 2 gleichfalls lediglich beispielhaft eine Regeleinrichtung 20 dargestellt ist, die nicht in Funktionsgruppen aufgeteilt ist, obgleich diese mit 20a und 20b als solche bezeichnet sind, ist in Fig. 1 schematisch dargestellt, was damit gemeint ist, wenn gemäß einem beschriebenen Erfindungsgedanken die Regeleinrichtung 20 in eine in der Nähe des Wärmeerzeugers 2 angeordnete Funktionsgruppe 20a und eine in bequemer Zugriffsnähe des Benutzers angeordnete Funktionsgruppe 20b gegliedert ist. Dabei umfaßt die Funktionsgruppe 20a die Einrichtungen für diejenigen Funktionen, die während der Heizperiode in der Regel nicht oder nur selten verändert werden, während die in bequemer Nähe des Benutzers angeordnete Funktionsgruppe 20b die Einrichtungen für die vom Benutzer einstellbaren Funktionen umfaßt und vorzugsweise als Raumschaltstation ausgebildet ist.

In Fig. 1 und Fig. 2 ist im übrigen auch noch eine mit der Regeleinrichtung 20 über eine Messwertleitung 80 verbundene Einrichtung 70 zur Messung der Temperatur des Wärmeträgermediums am Eintritt in den Heizungsvorlauf 14 bzw. im Heizungsvorlauf 14 selbst vorgesehen. Dies hat den Zweck, die über den Temperaturfühler 70 gemessene Vorlauftemperatur mittels entsprechender datenlogischer Be- bzw. Verarbeitung in der Regeleinrichtung 20 beispielsweise als Temperaturbegrenzung für die Vorlauftemperatur der Anlage benutzen zu können, indem über eine Steuerleitung 19 von der Regeleinrichtung 20 ein entsprechender Informationsimpuls auf die Einrichtung 11 zur Beeinflussung der Zufuhr von Betriebsenergie zum Wärmeerzeuger 2 gegeben wird, so daß unabhängig von dem eingestellten Sollwert für die Wärmeträgermediumstemperatur (z. B. Kesselwassertemperatur) im Wärmeerzeuger 2 für die Regelung derselben der in Fig. 2 dargestellte Brenner 9 bzw. eine beliebige andere Einrichtung zur Zuführung von Betriebsenergie zum Wärmeerzeuger 2 so gefahren wird, daß ein vorgegebener Grenzwert für die Vorlauftemperatur nicht überschritten werden kann. Dabei ist diese in Fig. 2 dargestellte Ausführung weder von der Art der Ausgestaltung bzw. der Funktionsweise des Wärmeerzeugers 2 noch der Beeinflussung der Zufuhr von Wärmeleistung zum Heizungsvorlauf 14 noch der Ausführung der Heizungsvorrichtung als Einstrang- oder Zweistrang-System noch der Regeleinrichtung bezüglich deren mehr oder weniger weitgehender Vervollkommung im Hinblick auf Selbstlernvermögen abhängig.

In Fig. 1 und 2 ist ferner dargestellt, daß nicht nur die Vorlauftemperatur über die entsprechende Messeinrichtung 70, sondern auch die Rücklauftemperatur über eine am Wärmeträgermediumsrücklauf 16 angeordnete Messeinrichtung 71 kontinuierlich oder in vorbestimmten Zeitabständen ermittelt und der bzw. die entsprechende(n) Messwert(e) über eine Messwertleitung 80 bzw. 81 der Regeleinrichtung 20 zugeführt und über diese vorteilhaft weiterverarbeitet werden kann bzw. können. Diese beiden Messwerte von Vorlauf- und Rücklauftemperatur bieten nämlich dann, wenn - wie in der Regeleinrichtung 20 gemäß Fig. 2 bzw. deren Funktionsgruppe 20a gemäß Fig. 1 dargestellt - eine Zeitsteuereinrichtung zur Koordinierung der Messwerte der Rauch- bzw. Abgastemperatur und der Vorlauftemperatur und/oder der Rücklauftemperatur des Wärmeträgermediums im Leitungssystem der Heizungsanlage, das heißt zur zeitgleichen Einleitung zumindest jeweils einer Messung, vorzugsweise jeweils einer Mehrzahl von Messungen der Rauch- bzw. Abgastemperatur und der Vorlauftemperatur und/oder der Rücklauftemperatur und/oder zur Abgabe jeweils zeitgleicher Messwerte dieser Temperaturen und im Falle der Messung von sowohl Vorlauf- als auch Rücklauftemperatur des Wärmeträgermediums zur zeitgleichen Einleitung zumindest jeweils einer Messung, vorzugsweise jeweils einer Mehrzahl von Messungen der Rauch- bzw. Abgastemperatur und der Ermittlung der Differenz von Vorlauf- und Rücklauftemperatur des Wärmeträgermediums durch eine eigens hierfür vorgesehene Einrichtung 49, wobei für diese Koordinierungsfunktion bei entsprechender Ausbildung mit Vorzug die Zeitsteuereinrichtung 51 herangezogen werden kann, und eine von den Messeinrichtungen 70 und/oder 71 für Vorlauf- bzw. Rücklauftemperatur des Wärmeträgermediums und/oder der Einrichtung 49 zur Ermittlung der Differenz dieser beiden Temperaturen angesteuerte bzw. mit deren Messwerten gespeiste Messwertspeichereinrichtung 128 sowie eine Einrichtung 129, mittels derer die Abweichung in vorbestimmter zeitlicher Folge nacheinander gewonnener Messwerte der Vorlauf- bzw. der Rücklauftemperatur bzw. der Differenz dieser beiden Temperaturen voneinander ermittelbar ist, und schließlich eine mit dieser Einrichtung 129 in Impulsauslöseverbindung stehende Einrichtung 45 zur automatischen Verstellung, insbesondere zur automatischen Nachführverstellung, eines oder beider Sollwertgeber(s) 41 bzw. 42 für die obere bzw. die untere Grenze des Sollwert-Bandes der Rauch- bzw. Abgastemperatur vorgesehen ist, die Möglichkeit für eine weitere Vervollkommnung der Betriebsweise der Erfindung. Durch die automatisch arbeitende Einrichtung 45 wird nämlich der eine oder werden beide Sollwertgeber 41 bzw. 42 in Abhängigkeit von der mittels der Einrichtung 129 ermittelten Veränderung der Vorlauftemperatur oder der Rücklauftemperatur des Wärmeträgermediums und/oder der Differenz dieser beiden Temperaturen automatisch immer dann verstellt, wenn sich von den äußeren Umweltbedingungen her eine wesentliche Änderung ergibt. Dies kann z. B. bei einem plötzlichen Kälteeinbruch oder bei notwendiger Umschaltung von Sommerbetrieb auf Winterbetrieb oder auch umgekehrt der Fall sein. Hier kann die Regelung aufgrund ihrer Reaktion auf entsprechende Änderungen von physikalischen Größen im wärmeträgerseitigen Teil der Heizungsanlage, wie beispielsweise der Vorlauf- und/oder der Rücklauftemperatur des Wärmeträgermediums derselben und/oder der Differenz dieser beiden Temperaturen, die als Folge entsprechender Änderungen der Umweltbedingungen eintreten, sich selbst die verfahrensmäßig günstigsten Sollwerte für die Rauch- bzw. Abgastemperatur als Grenzwerte von deren Sollwert-Band vorgeben, wobei allerdings nicht zu übersehen ist, daß eine solche Sollwertänderung nichts zu tun hat mit der vom Benutzer der Heizungsanlage aufgeprägten betriebsartenabhängigen Sollwertpaarung entsprechend jeweils gewünschtem Komfort- , Normal- , Spar- oder Frostschutzbetrieb. Diese Betriebsartenvorgabe durch den Benutzer bzw. Betreiber der Heizungsanlage bleibt nämlich in jedem Falle vorrangig bestimmend und wird durch eine vorstehend beschriebene, auch als "Sommer-Winter-Nachführung" zu bezeichnende Sollwertverstellung nicht aufgehoben, sondern nur modifiziert. Die Bedeutung dieser erfindungsgemäßen Maßnahme und vorrichtungsmäßigen Ausgestaltung wird besonders deutlich, wenn man lediglich beispielsweise in Betracht zieht, daß die Anlage in der Übergangszeit, etwa im Herbst,

vorsorglich auf Frostschutzbetrieb eingestellt sein mag, beispielsweise weil das durch diese Anlage zu beheizende Gebäude zeitweise nicht benutzt wird, und daß dann ein winterlicher Frosteinbruch auftreten mag, dem jetzt die Regelung durch die vorstehend beschriebene Nachführverstellung des bzw. der Sollwertgeber(s) und damit auch der einen oder beider Grenze(n) des Sollwert-Bandes der Rauch- bzw Abgastemperatur gerecht wird. Gleiche, wenn auch nicht so gravierende Verhältnisse pflegen bei den anderen Betriebsarten, wie Komfort- , Normal- und Spar- bzw. Nachtabsenkungsbetrieb aufzutreten. Ein vergleichbarer Betriebsfall ist im übrigen die automatische Sollwert-Nachführumschaltung bei etwa im Frühjahr auf die Betriebsart Komfortbetrieb eingestellter Heizungsanlage und plötzlichem witterungsseitigem Wärmeeinbruch auf der Umweltseite der Heizungsanlage.

In Fig. 3 ist dargestellt, daß als Rücklauftemperatur des Wärmeträgermediums nicht nur die Temperatur im vor der Mehrwege-Mischeinrichtung 7 gelegenen Zweig der Rücklaufleitung 16, wie in Fig. 2 gezeigt, benutzt werden muß, sondern auch die Temperatur im an den Wärmeträgermediumseingang 77 des Wärmeerzeugers 2 angeschlossenen Zweig der Rücklaufleitung 16 unmittelbar. Um dies zu verdeutlichen, ist hier eigens eine mit 72 bezeichnete und über eine Messwertleitung 82 mit der Regeleinrichtung 20 bzw. 20a, 20b verbundene Messeinrichtung für die Temperatur des Wärmeträgermediums - hier Rücklauftemperatur desselben - dargestellt. Diese Anordnung könnte auch in Fig. 2 statt der dort gezeigten Anordnung der Messeinrichtung 71 zum Einsatz kommen.

Zu der vorstehend erläuterten Sollwert-Nachführumschaltung ist nachzutragen, daß statt einer gemeinsam beiden Messeinrichtungen 70 und 71 für die Vorlauf- bzw. die Rücklauftemperatur des Wärmeträgermediums zugeordneten und mit diesen in Messwertzuführungsverbindung stehenden Messwertspeichereinrichtung 128 zur Speicherung in vorbestimmter zeitlicher Folge nacheinander gewonnener Messwerte dieser beiden Temperaturnen jeder dieser Temperaturmesseinrichtungen 70 und

- 100 -

0192227

71 zugeordnet eine eigene Messwertspeichereinrichtung dieser Art vorgesehen sein kann; in gleicher Weise kann auch eine Messwertspeichereinrichtung 128 vorgesehen sein, welche die als "Messwerte der Differenz von Vorlauf- und Rücklauftemperatur" zu bezeichnenden Ergebnisse der von der Differenzbildungseinrichtung 49 durchgeführten Ermittlung der Differenz von mit Messwerten der Rauch- bzw. Abgastemperatur zeitgleich gewonnenen Messwerten der Vorlauf- und Rücklauftemperatur des Wärmeträgermediums speichert und zu diesem Zweck mit der Differenzbildungseinrichtung 49 in Messwert- bzw. Impulszuführungsverbindung steht. Für die mit der Messwertnahme der Rauch- bzw. Abgastemperatur zeitgleiche Gewinnung von Messwerten der Vorlauf- und/oder der Rücklauftemperatur des Wärmeträgermediums und/oder der Differenz dieser beiden Temperaturen sorgt auch hier eine Zeitsteuereinrichtung, beispielsweise die Zeitsteuereinrichtung 51. Die Einrichtung 129 zur Ermittlung der Abweichung der einzelnen Werte einer Folge betreffender Messwerte voneinander ist entweder nur einfach vorgesehen und dann so ausgebildet, daß sie jeweils gleichzeitig die Differenz aufeinander folgender Messwerte der Vorlauftemperatur und/oder der Rücklauftemperatur und/oder der Differenz dieser beiden Temperaturen ermittelt und für Abruf zwecks Weiterverarbeitung bereit hält, oder aber in mehrfacher Ausführung, und zwar jeweils der Vorlauftemperatur bzw. der Rücklauftemperatur bzw. der Differenz dieser beiden Temperaturen zugeordnet, vorhanden, wobei jede dieser Einrichtungen 129 nur für die Ermittlung und Vorhaltung eines dieser Temperaturwerte zwecks Weiterverarbeitung ausgebildet ist. Auch die Einrichtung 45 für die automatische Nachführverstellung kann für beide Sollwertgeber 41 und 42 gemeinsam nur einmal vorgesehen sein, oder es kann einen oder einen jeden der beiden Sollwertgeber zugeordnet jeweils eine solche Einrichtung 45 vorhanden sein. Jede dieser Einrichtungen 45 wird jedoch von der bzw. den Einrichtung(en) 129 zur Ermittlung von Messwertabweichungen so angesteuert, daß der bzw. die zugeordnete(n) Sollwertgeber für die obere und/oder die untere Grenze des Sollwert-Bandes der Rauch- bzw. Abgastemperatur in Abhängigkeit von der durch die ermittelten Abweichungen von Vorlauftemperatur bzw. Rücklauftemperatur bzw. Differenz dieser beiden Temperaturen gebildeten Veränderung dieser Temperaturen bzw. Differenz derselben nachgeführt wird.

Außerdem kann - wie in Fig. 1 und 2 dargestellt - im Heizungsvorlauf 14 stromabwärts von der Umwälzpumpe 6 eine Einrichtung 5 zur Messung des im Leitungssystem der Heizungsvorrichtung 1 zirkulierenden Gesamtmassenstroms angeordnet sein, die über eine Messwertleitung 15 mit der Regeleinrichtung 20 bzw. 20a, 20b in Messwertübermittlungsverbindung steht und deren kontinuierlich oder in vorzugsweise vorbestimmter zeitlicher Folge genommenen Messwerte insbesondere dann, wenn die Heizungsvorrichtung 1 beispielsweise als wissenschaftlichen Versuchen dienende Forschungsanlage gefahren wird, mit Vorzug zur Ermittlung von Zusammenhängen zwischen einzelnen Umwelteinfluß- und Betriebsgrößenparametern dienen kann.

Im übrigen ist im Verband der Regeleinrichtung 20 sowohl in Fig. 1 als auch in Fig. 2 jeweils eine Einschalteinrichtung 130 dargestellt, mittels derer entweder die gesamte Heizungsvorrichtung 1 oder aber nur deren Regeleinrichtung 20 vom Benutzer derselben funktionsmäßig in Betrieb genommen werden bzw. als ganze wieder ausgeschaltet werden kann.

Im Vorstehenden ist die Erfindung zwar an dem Beispiel einer Heizungsvorrichtung beschrieben worden, jedoch gelten die Erläuterungen zu dieser auch für eine Kühlvorrichtung entsprechend. Es kann hierzu auf die detaillierten Darlegungen in Verbindung mit den jeweiligen Ansprüchen verwiesen werden. Die in den Zeichnungen dargestellten Ausführungsbeispiele gelten unverändert auch für eine solche Kühlvorrichtung 1, nur ist dann mit der Bezugsziffer 2 ein Kälteerzeuger gemeint, der in im Zusammenhang mit der beschriebenen Heizungsvorrichtung erläuterter Weise über den Kühlmittelvorlauf 14 an die Kühleinrichtungen 3a, 3b angeschlossen ist, von denen das Wärmeträgermedium über den Kühlmittelrücklauf 16 zurück zum Kälteerzeuger 2 gelangt. Dieser kann beispielsweise als gas- oder dieselmotorisch betriebene Kompressionskältemaschine oder aber als gas- oder ölbefeuerte Sorptionskältemaschine oder aber auch als Übergabewärmetauscher ausgebildet sein, dessen Sekundärseite vom Wärmeträgermedium durchströmt wird, während seine Primärseite mit Kältemittel eines an diese angeschlossenen Kältemittelkreislaufes gespeist wird. Alle übrigen Einzelheiten der in den Zeichnungen dargestellten Ausführungsbeispiele bedürfen keiner zusätzlichen Erläuterungen, sofern man berücksichtigt, daß sich Unterschiede in der Betriebsweise im Vergleich zu Heizbetrieb ergeben können. Die Entsprechungen der einzelnen Verfahrensschritte ebenso wie der diese betreffenden vorrichtungsseitigen Ausgestaltungen zwischen Heizbetrieb und Kühlbetrieb sind den Ansprüchen bzw. deren Erläuterung im Vorstehenden zu entnehmen, insbesondere sind dort auch die überragenden Vorteile der Erfindung im Zusammenhang mit dem Kühlen im Vergleich zum Heizen ausführlich dargelegt.

Obgleich die Erfindung vorstehend lediglich anhand einiger bevorzugter Ausführungsbeispiele nur beispielhaft erläutert worden ist, ist sie nicht auf diese beschränkt, vielmehr stehen dem Fachmann vielfältige Möglichkeiten offen, sie an die konstruktiven, fertigungstechnischen oder materialmäßigen Gegebenheiten im Herstellerwerk und/oder an die jeweiligen Forderungen des einzelnen Einsatzfalls sowohl planungsmäßiger als auch montagetechnischer Art durch andere Kombination ihrer Merkmale oder deren Austausch gegen gleichwirkende Mittel anzupassen, ohne dadurch den Rahmen der Erfindung zu verlassen.

Zusammenfassend ist festzustellen, daß die Erfindung nicht nur erstmalig die Möglichkeit schafft, je nach Wahl Heizungs- oder Kühlanlagen mit kontinuierlich oder im Ein-Aus-Betrieb erfolgender Zufuhr der Wärme- bzw. Kälteleistung ungeachtet der Art und Ausgestaltung des mit fossilem Brennstoff betriebenen Wärme- bzw. Kälteerzeugers mit gerätemäßig gleichen Mitteln mit den entsprechenden Vorteilen bezüglich Lagerhaltung, Gestehungspreis, Montageaufwand etc. zu betreiben, sondern in allen Fällen auch noch in bisher nicht erreichbarer Weise energieverbrauchsmäßig optimiert fahren zu können, wobei im übrigen die Regelung nach der Erfindung in vielfältiger Weise sich selbst auch noch Selbstlernvorgängen im Sinne einer von einer Einflußnahme durch den Anlagenbetreiber unabhängigen automatischen Optimierung unterziehen kann. Die günstige Folge hiervon ist insbesondere auch eine besonders weitgehende Vermeidung von Stillstandsverlusten des Wärme- bzw. Kälteerzeugers und der sonstigen Teile der Anlage und insbesondere bei diskontinuierlich arbeitenden Systemen die Vermeidung eines häufigen Taktens, wobei die Regelung nach der Erfindung es überflüssig macht, Simulationen einzelner oder aller Räume des durch die betreffende Heizungs- bzw. Kühlanlage erfindungsgemäß zu beheizenden bzw. zu kühlenden Verbrauchers vorzunehmen oder spezielle dynamische Lastberechnungen mit im Einzelfall ohnehin nicht bekannten und allenfalls nur mühselig und aufwendig zu bestimmenden Wärmeleitungs bzw. -durchgangswerten durchzuführen, Himmelsrichtungsbetrachtungen anzustellen, Klimazonen zu berücksichtigen und dergleichen. Im übrigen ist darauf zu verweisen, daß, wenn vorstehend oder nachfolgend von Kesseln als Wärmeerzeugern gesprochen wird, dieser Begriff auch als gas- oder ölbefeuerte Durchlauferhitzer arbeitende Geräte, sogenannte Thermen oder Geyser, mitumfaßt, indem diese sich von den gemeinhin als Kessel bezeichneten Geräten grundsätzlich nur dadurch unterscheiden, daß sie mit praktisch keiner oder allenfalls äußerst geringer Vorlage an Wärmeträgermedium arbeiten und entsprechend praktisch keine bzw. keine nennenswerte Wärmespeicherkapazität aufweisen.

# COHAUSZ & FLORACK  0192227

PATENTANWALTSBÜRO

SCHUMANNSTR. 97  D-4000 DÜSSELDORF 1

Telefon (02 11) 68 33 46                    Telex: 0858 6513 cop d

PATENTANWALTE:

Dipl.-Ing. W. COHAUSZ · Dipl.-Ing. R. KNAUF · Dipl.-Ing. H. B. COHAUSZ · Dipl.-Ing. D. H. WERNER

- 104 -                          25258EP
17.02.86

Ansprüche
=================

1. Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden, dadurch gekennzeichnet, daß die Rauch- oder Abgastemperatur der Wärme- oder Kältequelle gemessen und hierfür ein Sollwert-Band angelegt ist, innerhalb dessen die zulässigen Werte der Rauch- oder Abgastemperatur liegen, daß das gesamte Sollwert-Band mit Ober- und Untergrenze entsprechend den Anforderungen verschieblich ist und daß in den Bereichen außerhalb des Sollwert-Bandes der jeweilige Ist-Wert zum Soll-Wert hin regelbar ist.

2. Verfahren nach Anspruch 1, <u>dadurch gekennzeichnet, daß</u> eine Abweichung der Rauch- bzw. Abgastemperatur über die obere Grenze des vorgegebenen Sollwert-Bandes hinaus durch Verringerung und eine Abweichung der Rauch- bzw. Abgastemperatur unter die untere Grenze des vorgegebenen Sollwert-Bandes durch Vergrößerung der in den Heizungs- bzw. Kühlmittelvorlauf eingespeisten Wärme- bzw. Kälteleistung eliminiert wird.

3. Verfahren nach Anspruch 1 oder 2, <u>dadurch gekennzeichnet, daß</u> eine Abweichung der Rauch- bzw. Abgastemperatur über die obere Grenze des vorgegebenen Sollwert-Bandes hinaus durch Verringerung der in den Heizungs- bzw. Kühlmittelvorlauf eingespeisten Wärme- bzw. Kälteleistung entsprechend dem Maß dieser Abweichung und eine Abweichung der Rauch- bzw. Abgastemperatur unter die untere Grenze des vorgegebenen Sollwert-Bandes durch Vergrößerung der in den Heizungs- bzw. Kühlmittelvorlauf eingespeisten Wärme- bzw. Kälteleistung entsprechend dem Maß dieser Abweichung eliminiert wird.

4. Verfahren nach Anspruch 3, <u>dadurch gekennzeichnet, daß</u> das Gesamtmaß der Abweichung der Rauch- bzw. Abgastemperatur über die obere Grenze des vorgegebenen Sollwert-Bandes hinaus im Verlauf der Zeit ermittelt und eine Abweichung der Rauch- bzw. Abgastemperatur über die obere Grenze dieses Sollwert-Bandes hinaus durch Verringerung der in den Heizungs- bzw. Kühlmittelvorlauf eingespeisten Wärme- bzw. Kälteleistung entsprechend diesem Gesamtmaß der Abweichung der Rauch- bzw. Abgastemperatur eliminiert und/oder das Gesamtmaß der Abweichung der Rauch- bzw. Abgastemperatur unter die untere Grenze des vorgegebenen Sollwert-Bandes im Verlauf der Zeit ermittelt und eine Abweichung der Rauch- bzw. Abgastemperatur unter die untere Grenze dieses Sollwert-Bandes durch Vergrößerung der in den Heizungs- bzw. Kühlmittelvorlauf eingespeisten Wärme- bzw. Kälteleistung entsprechend diesem Gesamtmaß der Abweichung der Rauch- bzw. Abgastemperatur eliminiert wird.

5. Verfahren nach Anspruch 3 oder 4, dadurch gekennzeichnet, daß das Maß der zeitlichen Änderung einer Abweichung der Rauch- bzw. Abgastemperatur über die obere Grenze des vorgegebenen Sollwert-Bandes hinaus und/oder der zeitlichen Änderung dieses Maßes zeitlicher Änderung der Abweichung der Rauch- bzw. Abgastemperatur ermittelt und diese Abweichung der Rauch- bzw. Abgastemperatur durch Verringerung der in den Heizungs- bzw. Kühlmittelvorlauf eingespeisten Wärme- bzw. Kälteleistung entsprechend diesem Maß der zeitlichen Änderung der Abweichung der Rauch- bzw. Abgastemperatur bzw. diesem Maß der zeitlichen Änderung dieses Maßes zeitlicher Änderung der Abweichung der Rauch- bzw. Abgastemperatur eliminiert und/oder das Maß der zeitlichen Änderung einer Abweichung der Rauch- bzw. Abgastemperatur unter die untere Grenze des vorgegebenen Sollwert-Bandes und/oder der zeitlichen Änderung dieses Maßes zeitlicher Änderung der Abweichung der Rauch- bzw. Abgastemperatur ermittelt und diese Abweichung der Rauch- bzw. Abgastemperatur durch Vergrößerung der in den Heizungs- bzw. Kühlmittelvorlauf eingespeisten Wärme- bzw. Kälteleistung entsprechend diesem Maß der zeitlichen Änderung der Abweichung der Rauch- bzw. Abgastemperatur bzw. diesem Maß der zeitlichen Änderung dieses Maßes zeitlicher Änderung der Abweichung der Rauch- bzw. Abgastemperatur eliminiert wird.

6. Verfahren nach einem der vorhergehenden Ansprüche, dadurch gekennzeichnet, daß die obere und/oder die untere Grenze des Sollwert-Bandes der Rauch- bzw. Abgastemperatur herstellerseitig leistungsfähigkeitsbedingt und/oder nutzerbedürfnisbezogen gewählt wird.

7. Verfahren nach einem der vorhergehenden Ansprüche, dadurch gekennzeichnet, daß bei Inbetriebnahme des Verfahrens für Heizbetrieb oder für Kühlbetrieb bei Vollast und voller Öffnung aller Drosseleinrichtungen die Rauch- bzw. Abgastemperatur als minimal mögliche Rauch- bzw. Abgastemperatur (Inbetriebnahmerauch- bzw. -abgastemperatur) zu dem Zeitpunkt, zu dem nach einer Zeitspanne mit praktisch konstantem oder allenfalls geringfügig steigendem Wert der Rauch- bzw. Abgastemperatur erstmalig eine signifikante Vergrößerung derselben auftritt, oder nach einer vorgegebenen Zeitspanne nach Beginn des Anfahrvorganges, ermittelt und der größere Sollwert der Rauch- bzw. Abgastemperatur entsprechend einem Vielfachen dieser minimal möglichen Rauch- bzw. Abgastemperatur (Inbetriebnahmerauch- bzw. -abgastemperatur) und der kleinere Sollwert der Rauch- bzw. Abgastemperatur entsprechend einem im Vergleich zu diesem Vielfachen kleineren Vielfachen oder einem Bruchteil dieser minimal möglichen Rauch- bzw. Abgastemperatur (Inbetriebnahmerauch- bzw. -abgastemperatur) gewählt wird.

8. Verfahren nach einem der vorhergehenden Ansprüche, dadurch gekennzeichnet, daß bei Heizbetrieb für Aufheizen nach einer Abkühlung bzw. bei Kühlbetrieb für Abkühlen nach einer Erwärmung und/oder bei jeder Wiederaufnahme der Zufuhr von Betriebsenergie zum Wärme- bzw. Kälteerzeuger nach einer Beendigung derselben bei Vollast und voller Öffnung aller Drosseleinrichtungen die Rauch- bzw. Abgastemperatur als minimale Rauch- bzw. Abgastemperatur (Anfahrrauch- bzw. -abgastemperatur) zu dem Zeitpunkt, zu dem nach einer Zeitspanne mit praktisch konstantem oder allenfalls geringfügig steigendem Wert der Rauch- bzw. Abgastemperatur erstmalig eine signifikante Vergrößerung derselben auftritt, oder nach einer vorgegebenen Zeitspanne nach Beginn des Anfahrvorganges, ermittelt und der größere Sollwert der Rauch- bzw. Abgastemperatur entsprechend einem Vielfachen dieser minimalen Rauch- bzw. Abgastemperatur (Anfahrrauch- bzw. -abgastemperatur) und der kleinere Sollwert der Rauch- bzw. Abgastemperatur entsprechend einem im Vergleich zu diesem Vielfachen kleineren Vielfachen oder einem Bruchteil dieser minimalen Rauch- bzw. Abgastemperatur (Anfahrrauch- bzw. -abgastemperatur) gewählt wird.

9. Verfahren nach einem der vorhergehenden Ansprüche, dadurch gekennzeichnet, daß mit abnehmendem Wert der oberen oder der unteren Grenze des Sollwert-Bandes die Differenz zwischen diesen beiden Grenzwerten und/oder das Verhältnis derselben zunehmend kleiner gewählt wird.

10. Verfahren nach einem der vorhergehenden Ansprüche, dadurch gekennzeichnet, daß bei Inbetriebnahme des Verfahrens für Heizbetrieb oder für Kühlbetrieb oder bei Heizbetrieb für Aufheizen nach einer Abkühlung bzw. bei Kühlbetrieb für Abkühlen nach einer Erwärmung jeweils bei Vollast und voller Öffnung aller Drosseleinrichtungen die Länge der Zeitspanne, während derer erstmalig die Rauch- bzw. Abgastemperatur als minimal mögliche Rauch- bzw. Abgastemperatur (Inbetriebnahmerauch- bzw. -abgastemperatur) bzw. als minimale Rauch- bzw. Abgastemperatur (Anfahrrauch- bzw. -abgastemperatur) mit praktisch konstantem oder allenfalls geringfügig steigendem Wert auftritt, und/oder die zeitliche Änderung der Rauch- bzw. Abgastemperatur nach dem Zeitpunkt, zu dem nach dieser Zeitspanne mit praktisch konstantem oder allenfalls geringfügig steigendem Wert der Rauch- bzw. Abgastemperatur erstmalig eine signifikante Vergrößerung derselben auftritt, ermittelt und entsprechend dem Maß der Länge dieser Zeitspanne und/oder dem Maß der zeitlichen Änderung dieser Rauch- bzw. Abgastemperatur der größere und der kleinere vorgegebene Sollwert der Rauch- bzw. Abgastemperatur verändert wird, indem bei größerer Länge dieser Zeitspanne und/oder kleinerem Maß der zeitlichen Änderung dieser Rauch- bzw. Abgastemperatur beide vorgegebenen Sollwerte der Rauch- bzw. Abgastemperatur um einen größeren Betrag und bei kleinerer Länge dieser Zeitspanne und/oder größerem Maß der zeitlichen Änderung der Rauch- bzw. Abgastemperatur beide vorgegebenen Sollwerte der Rauch- bzw. Abgastemperatur um einen kleineren Betrag vergrößert werden.

11. Verfahren nach einem der vorhergehenden Ansprüche, dadurch gekennzeichnet, daß bei Inbetriebnahme des Verfahrens für Heizbetrieb oder für Kühlbetrieb bei Vollast und voller Öffnung aller Drosseleinrichtungen die Rauch- bzw. Abgastemperatur als minimal mögliche Rauch- bzw. Abgastemperatur (Inbetriebnahmerauch- bzw. -abgastemperatur) und bei Heizbetrieb für Aufheizen nach einer Abkühlung bzw. bei Kühlbetrieb für Abkühlen nach einer Erwärmung bei Vollast und voller Öffnung aller Drosseleinrichtungen die Rauch- bzw. Abgastemperatur als minimal mögliche oder minimale Rauch- bzw. Abgastemperatur (Anfahrrauch- bzw. -abgastemperatur) ermittelt und bei Auftreten einer Abweichung der minimalen Rauch- bzw. Abgastemperatur (Anfahrrauch- bzw. -abgastemperatur) von der minimal möglichen Rauch- bzw Abgastemperatur (Inbetriebnahmerauch- bzw. -abgastemperatur) das vorgegebene Sollwert-Band der Rauch- bzw. Abgastemperatur in Abhängigkeit vom Verhältnis von minimaler zu minimal möglicher Rauch- bzw. Abgastemperatur verändert wird.

12. Verfahren nach einem der vorhergehenden Ansprüche, dadurch gekennzeichnet, daß bei Inbetriebnahme des Verfahrens für Heizbetrieb oder für Kühlbetrieb bei Vollast und voller Öffnung aller Drosseleinrichtungen die Rauch- bzw. Abgastemperatur als minimal mögliche Rauch- bzw. Abgastemperatur (Inbetriebnahmerauch- bzw. -abgastemperatur) und bei Heizbetrieb für Aufheizen nach einer Abkühlung bzw. bei Kühlbetrieb für Abkühlen nach einer Erwärmung bei Vollast und voller Öffnung aller Drosseleinrichtungen die Rauch- bzw. Abgastemperatur als minimale Rauch- bzw. Abgastemperatur (Anfahrrauch- bzw. -abgastemperatur) ermittelt und bei Auftreten einer vorbestimmten Abweichung der minimalen Rauch- bzw. Abgastemperatur (Anfahrrauch- bzw. -abgastemperatur) von der minimal möglichen Rauch- bzw. Abgastemperatur (Inbetriebnahmerauch- bzw. -abgastemperatur) diese Unregemäßigkeit optisch und/oder akustisch wahrnehmbar gemacht wird.

13. Verfahren nach einem der vorhergehenden Ansprüche, dadurch gekennzeichnet, daß bei Fehlen einer Abweichung der Rauch- bzw. Abgastemperatur über die obere Grenze ihres Sollwert-Bandes und/oder bei Fehlen einer Abweichung der Rauch- bzw. Abgastemperatur über die obere Grenze ihres Sollwert-Bandes innerhalb einer vorgegebenen Zeitspanne diese Unregelmäßgkeit optisch und/oder akustisch wahrnehmbar gemacht wird.

14. Verfahren nach einem der Ansprüche 7 bis 13, dadurch gekennzeichnet, daß bei Auftreten einer Abweichung der Rauch- bzw. Abgastemperatur unter die minimale Rauch- bzw. Abgastemperatur (Anfahrrauch- bzw. -abgastemperatur) und/oder die minimal mögliche Rauch- bzw. Abgastemperatur (Inbetriebnahmerauch- bzw. -abgastemperatur) bei Vollast und voller Öffnung aller Drosseleinrichtungen und/oder bei Auftreten einer Abweichung der Rauch- bzw. Abgastemperatur unter die minimale Rauch- bzw. Abgastemperatur (Anfahrrauch- bzw. -abgastemperatur) und/oder die minimal mögliche Rauch- bzw. Abgastemperatur (Inbetriebnahmerauch- bzw. -abgastemperatur) bei Vollast und voller Öffnung aller Drosseleinrichtungen innerhalb einer vorgegebenen Zeitspanne diese Unregelmäßigkeit optisch und/oder akustisch wahrnehmbar gemacht wird.

15. Verfahren nach einem der vorhergehenden Ansprüche, bei dem die Veränderung der dem im Heizungs- bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger erfolgt, dadurch gekennzeichnet, daß bei Auftreten einer Abweichung der Rauch- bzw. Abgastemperatur über die obere Grenze ihres vorgegebenen Sollwert-Bandes hinaus die Zufuhr von Betriebsenergie zum Wärme- bzw. Kälteerzeuger beendet und bei Auftreten einer Abweichung der Rauch- bzw. Abgastemperatur unter die untere Grenze ihres Sollwert-Bandes die Zufuhr von Betriebsenergie zum Wärme- bzw. Kälteerzeuger aufgenommen wird.

16. Verfahren nach einem der Ansprüche 1 bis 15, bei dem die Veränderung der dem im Heizungs- bzw. Kühlmittelvorlauf befindlichen Wärmeträgermedium durch Ein- und Ausschaltung der Zufuhr der Betriebsenergie zum Wärme- bzw. Kälteerzeuger erfolgt, dadurch gekennzeichnet, daß bei Auftreten einer Abweichung der Rauch- bzw. Abgastemperatur über die obere Grenze ihres vorgegebenen Sollwert-Bandes hinaus das Zeitverhältnis der Ein- zur Ausschaltung der Zufuhr von Betriebsenergie zum Wärme- bzw. Kälteerzeuger entsprechend dem Maß der Abweichung der Rauch- bzw. Abgastemperatur verringert wird und bei Auftreten einer Abweichung der Rauch- bzw. Abgastemperatur unter die untere Grenze ihres vorgegebenen Sollwert-Bandes das Zeitverhältnis der Ein- zur Ausschaltung der Zufuhr von Betriebsenergie zum Wärme- bzw. Kälteerzeuger entsprechend dem Maß der Abweichung der Rauch- bzw. Abgastemperatur erhöht wird.

17. Verfahren nach Anspruch 15 oder 16, dadurch gekennzeichnet, daß für Komfortbetrieb, bei dem für mindestens einen zu temperierenden Raum eine im Vergleich zu dem bzw. den anderen zu temperierenden Raum bzw. Räumen vergleichsweise hohe bzw. niedrige Raumtemperatur aufrechtzuerhalten ist, eine geringe Bandbreite des Sollwert-Bandes der Rauch- bzw. Abgastemperatur mit größerem oberhalb einer willkürlich, vorzugsweise mit dem Wert der minimalen Rauch- bzw. Abgastemperatur (Anfahrrauch- bzw. -abgastemperatur) oder der minimal möglichen Rauch- bzw. Abgastemperatur (Inbetriebnahmerauch- bzw. -abgastemperatur) gewählten Referenztemperatur und geringerem unterhalb dieser Referenztemperatur liegendem Anteil dieser Bandbreite bei hoher oberer und/oder unterer Grenze des Sollwert-Bandes der Rauch- bzw. Abgastemperatur vorgegeben wird.

18. Verfahren nach Anspruch 15 bis 17, <u>dadurch gekennzeichnet, daß</u> für Normalbetrieb, bei dem für alle zu temperierenden Räume eine etwa gleiche Raumtemperatur von für gutes Behaglichkeitsgefühl ausreichender Höhe aufrechtzuerhalten ist, eine mittlere Bandbreite des Sollwert-Bandes der Rauch- bzw. Abgastemperatur mit mittlerem oberhalb einer willkürlich, vorzugsweise mit dem Wert der minimalen Rauch- bzw. Abgastemperatur (Anfahrrauch- bzw. -abgastemperatur) oder der minimal möglichen Rauch- bzw. Abgastemperatur (Inbetriebnahmerauch- bzw. -abgastemperatur) gewählten Referenztemperatur und mittlerem unterhalb dieser Referenztemperatur liegendem Anteil dieser Bandbreite bei mittlerer oberer und/oder unterer Grenze des Sollwert-Bandes der Rauch- bzw. Abgastemperatur vorgegeben wird.

19. Verfahren nach einem der Ansprüche 15 bis 18, <u>dadurch gekennzeichnet, daß</u> für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, eine vergleichsweise große Bandbreite des Sollwert-Bandes der Rauch- bzw. Abgastemperatur mit geringerem oberhalb einer willkürlich, vorzugsweise mit dem Wert der minimalen Rauch- bzw. Abgastemperatur (Anfahrrauch- bzw. -abgastemperatur oder der minimal möglichen Rauch- bzw. Abgastemperatur (Inbetriebnahmerauch- bzw. -abgastemperatur) gewählten Referenztemperatur und größerem unterhalb dieser Referenztemperatur liegendem Anteil dieser Bandbreite bei vergleichsweise niedriger oberer und/oder unterer Grenze des Sollwert-Bandes der Rauch- bzw. Abgastemperatur vorgegeben wird.

20. Verfahren nach einem der Ansprüche 15 bis 19 für Beheizung von Räumen, <u>dadurch gekennzeichnet, daß</u> für Frostschutzbetrieb , bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, eine besonders große Bandbreite des Soll- wert-Bandes der Rauch- bzw. Abgastemperatur mit praktisch vollständig unterhalb einer willkürlich, vorzugsweise mit dem Wert der minimalen Rauch- bzw. Abgastemperatur (Anfahrrauch- bzw.-abgastemperatur) oder der minimal möglichen Rauch- bzw. Abgastemperatur (Inbetriebnahmerauch- bzw. -abgastemperatur) gewählten Referenztemperatur und/oder mit allenfalls geringfügig oberhalb dieser Referenztemperatur liegender, vorzugsweise dieser entsprechender oberer Grenze des Sollwert-Bandes der Rauch- bzw. Abgastemperatur und/oder mit auf einem besonders niedrigen Wert, vorzugsweise nur geringfügig über der zulässigen Rauch- bzw. Abgasmindesttemperatur liegenden, beispielsweise dem der Umgebungstemperatur des Wärme- bzw. Kälteerzeugers entsprechenden Wert, willkürlich gewählter unterer Grenze des Sollwert-Bandes der Rauch- bzw. Abgastemperatur vorgegeben wird.

21. Verfahren nach einem der Ansprüche 1 bis 14, bei dem die Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger erfolgt, dadurch gekennzeichnet, daß bei Auftreten einer Abweichung der Rauch- bzw. Abgastemperatur über die obere Grenze ihres vorgegebenen Sollwert-Bandes hinaus die Zufuhr von Betriebsenergie zum Wärme- bzw. Kälteerzeuger in Abhängigkeit von dieser Abweichung verringert und bei Auftreten einer Abweichung der Rauch- bzw. Abgastemperatur unter die untere Grenze ihres vorgegebenen Sollwert-Bandes die Zufuhr von Betriebsenergie zum Wärme- bzw. Kälteerzeuger in Abhängigkeit von dieser Abweichung vergrößert wird.

22. Verfahren nach einem der vorhergehenden Ansprüche, bei dem die Veränderung der dem im Heizungs- bzw. Kühlmittelvorlauf befindlichen Wärmeträgermedium zugeführten Wärme- bzw Kälteleistung mittels einer Mehrwege-Mischeinrichtung, wie beispielsweise eines Drei- oder Vier-Wege-Mischers, erfolgt, dadurch gekennzeichnet, daß bei Auftreten einer Abweichung der Rauch- bzw. Abgastemperatur über die obere oder unter die untere Grenze ihres vorgegebenen Sollwert-Bandes die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung verändert wird.

23. Verfahren nach Anspruch 22, dadurch gekennzeichnet, daß der Anteil des vom Wärme- bzw. Kälteerzeuger her in den Heizungs- bzw. Kühlmittelvorlauf eingespeisten Massenstroms am Gesamtmassenstrom bei Auftreten einer Abweichung der Rauch- bzw. Abgastemperatur über die obere Grenze ihres vorgegebenen Sollwert-Bandes hinaus verringert und bei Auftreten einer Abweichung der Rauch- bzw. Abgastemperatur unter die untere Grenze ihres vorgegebenen Sollwert-Bandes vergrößert wird.

24. Verfahren nach einem der Ansprüche 21 bis 23, dadurch gekennzeichnet, daß für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, eine große Bandbreite des Sollwert-Bandes der Rauch- bzw. Abgastemperatur bei hoher oberer und/oder unterer Grenze desselben vorgegeben wird.

25. Verfahren nach einem der Ansprüche 21 bis 24, dadurch gekennzeichnet, daß für Normalbetrieb, bei dem für alle zu temperierenden Räume eine etwa gleiche Raumtemperatur von für gutes Behaglichkeitsgefühl ausreichender Höhe aufrechtzuerhalten ist, eine mittlere Bandbreite des Sollwert-Bandes der Rauch- bzw. Abgastemperatur bei mittlerer oberer und/oder unterer Grenze desselben vorgegeben wird.

26. Verfahren nach einem der Ansprüche 21 bis 25, dadurch gekennzeichnet, daß für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, eine vergleichsweise geringe Bandbreite des Sollwert-Bandes der Rauch- bzw. Abgastemperatur bei vergleichsweise niedriger oberer und/oder unterer Grenze desselben vorgegeben wird.

27. Verfahren nach einem der Ansprüche 21 bis 26 für Beheizung von Räumen, dadurch gekennzeichnet, daß für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, eine nur geringfügig über dem Verschwindwert liegende Bandbreite des Sollwert-Bandes der Rauch- bzw. Abgastemperatur bei auf einem extrem niedrigen, allenfalls geringfügig oberhalb einer willkürlich, beispielsweise mit dem Wert der minimalen Rauch- bzw. Abgastemperatur (Anfahrrauch- bzw. -abgastemperatur) oder der minimal möglichen Rauch- bzw. Abgastemperatur (Inbetriebnahmerauch- bzw. -abgastemperatur) gewählten Referenztemperatur, vorzugsweise auf einem dieser Referenztemperatur entsprechenden Wert liegender oberer und/oder unterer Grenze des Sollwert-Bandes der Rauch- bzw. Abgastemperatur vorgegeben wird.

28. Verfahren nach einem der Ansprüche 24 bis 27, dadurch gekennzeichnet, daß die Bandbreite des Sollwert-Bandes der Rauch- bzw. Abgastemperatur mit ihrem Verschwindwert vorgegeben wird.

29. Verfahren nach einem der vorhergehenden Ansprüche, dadurch gekennzeichnet, daß über eine vorbestimmte Zeitspanne die Anzahl der im Betrieb auftretenden Abweichungen der Rauch- bzw. Abgastemperatur über die obere und/oder unter die untere Grenze ihres Sollwert-Bandes und/oder die Anzahl der im Betrieb auftretenden Veränderungen in Form von Aufnahmen und/oder Beendigungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung gemessen und entsprechend der Abweichung dieser Anzahl von einer vorgegebenen Zahl solcher Abweichungen des Gesamtmassenstroms bzw. Veränderungen dieser Wärme- bzw. Kälteleistungszufuhr bzw. Änderungen der Stellung dieses Organs der Mehrwege-Mischeinrichtung das Sollwert-Band der Rauch- bzw. Abgastemperatur verändert wird.

30. Verfahren nach Anspruch 29, dadurch gekennzeichnet, daß bei Messung einer gegenüber einer vorgegebenen Zahl von Abweichungen der Rauch- bzw. Abgastemperatur über die obere und/oder unter die untere Grenze ihres Sollwert-Bandes und/oder einer gegenüber einer vorgegebenen Zahl von Veränderungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung größeren Anzahl solcher Abweichungen der Rauch- bzw. Abgastemperatur bzw. Veränderungen dieser Wärme- bzw. Kälteleistungszufuhr bzw. Änderungen der Stellung dieses Organs der Mehrwege-Mischeinrichtung die obere und/oder die untere Grenze des Sollwert-Bandes der Rauch- bzw. Abgastemperatur in Richtung einer Vergrößerung der Differenz dieser beiden Grenzen verändert und bei Messung einer gegenüber der vorgegebenen Zahl von Abweichungen der Rauch- bzw. Abgastemperatur von der oberen und/oder der unteren Grenze ihres Sollwert-Bandes und/oder einer gegenüber der vorgegebenen Zahl von Veränderungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs der Mehrwege-Mischeinrichtung geringeren Anzahl solcher Abweichungen der Rauch- bzw. Abgastemperatur bzw. Veränderungen dieser Wärme- bzw. Kälteleistungszufuhr bzw. Änderungen der Stellung dieses Organs der Mehrwege-Mischeinrichtung die obere und/oder die untere Grenze des Sollwert-Bandes der Rauch- bzw. Abgastemperatur in Richtung einer Verringerung der Differenz dieser beiden Grenzen verändert wird.

31. Verfahren nach einem der vorhergehenden Ansprüche, dadurch gekennzeichnet, daß zusätzlich zur Rauch- bzw. Abgastemperatur zu zwei unterschiedlichen Zeitpunkten, beispielsweise einerseits bei Inbetriebnahme des Verfahrens für Heizbetrieb oder für Kühlbetrieb und andererseits bei Heizbetrieb für Aufheizen nach einer Abkühlung bzw. bei Kühlbetrieb für Abkühlen nach einer Erwärmung an einem anderen Tag oder bei Heizbetrieb für Aufheizen nach einer Abkühlung bzw. bei Kühlbetrieb für Abkühlen nach einer Erwärmung an unterschiedlichen Tagen, die Temperatur des Wärmeträgermediums am Eintritt in den Heizungs- bzw. Kühlmittelvorlauf (Vorlauftemperatur) und/oder in der die die einzelnen Heizkörper bzw. Kühleinrichtungen durchströmenden Einzelmassenströme des Wärmeträgermediums zusammenfassenden Rücklaufleitung (Rücklauftemperatur) gemessen und die obere und/oder die untere Grenze des Sollwert-Bandes der Rauch- bzw. Abgastemperatur in Abhängigkeit vom jeweiligen Messwert der Temperatur des Wärmeträgermediums am Eintritt in den Heizungs- bzw. Kühlmittelvorlauf (Vorlauftemperatur) oder der Temperatur des Wärmeträgermediums in der die die einzelnen Heizkörper bzw. Kühleinrichtungen durchströmenden Einzelmassenströme desselben zusammenfassenden Rücklaufleitung (Rücklauftemperatur) oder des Unterschiedes dieser beiden Temperaturen (Vorlauf-Rücklauftemperaturdifferenz) verändert wird.

FIG. 1

FIG.2

FIG.3